# EUROPEAN PATENT APPLICATION

(11) **EP 4 283 888 A1**
(43) Date of publication of application: **29.11.2023**
(21) Application number: 21925477.8
(22) Date of filing: 06.12.2021
(51) Int. Cl.: H04J 3/16

(54) **COMMUNICATION METHOD, DEVICE, AND CHIP SYSTEM**

(30) Priority: 10.02.2021 CN 202110185075
(71) Applicant: Huawei Technologies Co., Ltd., Shenzhen, Guangdong 518129 (CN)
(72) Inventor: XU, Li, Shenzhen, Guangdong 518129 (CN); ZHONG, Qiwen, Shenzhen, Guangdong 518129 (CN); CHEN, Jingfeng, Shenzhen, Guangdong 518129 (CN); QI, Yunlei, Shenzhen, Guangdong 518129 (CN)
(74) Representative: Maiwald GmbH
(86) International application number: PCT/CN2021/135835
(87) International publication number: WO 2022/170830

(57) **Abstract**

A communication method and device, and a chip system are provided, to adjust, by adjusting a quantity of slot resources included in a multiframe, a bandwidth resource corresponding to one multiframe. A first communication device in this application sends a first request message. The first request message is used to request to adjust a quantity of basic frames in a multiframe included in a second block sequence. The first communication device multiplexes, based on S 1 slot resources corresponding to the adjusted multiframe in the second block sequence, Q1 first block sequences corresponding to a slot resource in the S 1 slot resources, to obtain and send the second block sequence. The quantity of basic frames in the multiframe may be adjusted. In other words, a quantity of slot resources corresponding to data carried in one multiframe may be adjusted. In other words, the bandwidth corresponding to one multiframe may be adjusted. Therefore, a bandwidth of a service corresponding to the multiframe may be further adjusted based on the adjusted bandwidth corresponding to the multiframe.

## Description

### CROSS-REFERENCE TO RELATED APPLICATIONS

This application claims priority to Chinese Patent Application No. 202110185075.1, filed with the China National Intellectual Property Administration on February 10, 2021 and entitled "COMMUNICATION METHOD AND DEVICE, AND CHIP SYSTEM", which is incorporated herein by reference in its entirety.

### TECHNICAL FIELD

This application relates to the field of communication technologies, and in particular, to a communication method and device, and a chip system.

### BACKGROUND

With advent of a 5G era, various new services (such as a cloud service and internet of vehicles) constantly emerge, posing a new requirement on Ethernet technologies. A plurality of technologies are generated, including a flex Ethernet (Flex Ethernet, FlexE) technology, a metro transport network (Metro Transport Network, MTN) technology, an optical transport network (Optical Transport Network, OTN) technology, and a fine granularity optical service unit channel layer network (Optical Switching Unit, OSU) of the optical transport network technology.

The FlexE is a lightweight enhanced Ethernet technology. The FlexE supports interface bonding and channelization, and can be used to construct end-to-end links. The flex Ethernet supports a larger bandwidth by bonding interfaces. For example, eight 100 Gbps (bps is an abbreviation for bit/s) interfaces are bonded to achieve an 800 Gbps bandwidth. The channelization implements flexible bandwidth allocation, supports access of various service rates, and is not subject to the stepped rate system defined in the IEEE 802.3 standard. In addition, the FlexE divides a 100 Gbps interface into 20 slots, and each slot is 5 Gbps. Therefore, the FlexE may support an N×5 Gbps service in a slot allocation manner. Because a bandwidth allocated by the FlexE needs to use 5 Gbps as a basic unit, the FlexE has a bearing efficiency problem for a service with a non-5 Gbps granularity, including a service less than 5 Gbps.

Based on the FlexE technology, the MTN provides a function such as channel forwarding, and operations, administration, and maintenance (Operations, Administration, and Maintenance, OAM). Same as FlexE, slot allocation corresponding to the FlexE is also at a granularity of 5 Gbps. Therefore, there is also a bearing efficiency problem, especially for a fine granularity service, for example, a service requiring a bandwidth of 10 Mbps or 100 Mbps.

An Ethernet high quality leased line technology provides a pipe bandwidth with a finer granularity based on the MTN/FlexE technology. Usually, an MTN/FlexE channel with a slot granularity of 5 Gbps is referred to as a coarse granularity pipe. A fine granularity service is carried in the coarse granularity pipe. That is, the fine granularity service occupies one 5 Gbps. A minimum bandwidth of the fine granularity service is 10 Mbps. The 5 Gbps coarse granularity pipe provides 480 fine granularity slots to carry the fine granularity service.

In actual application, a bandwidth requirement of a coarse granularity service or a fine granularity service may change. Currently, a solution for bandwidth adjustment is urgently required.

### SUMMARY

Embodiments of this application provide a communication method and device, and a chip system, to adjust, by adjusting a quantity of slot resources included in a multiframe, a bandwidth resource corresponding to one multiframe.

According to a first aspect, this application provides a communication method. In the method, a first communication device sends a first request message. The first request message is used to request to adjust a quantity of basic frames in a multiframe included in a second block sequence. The first communication device multiplexes Q1 first block sequences based on S1 slot resources corresponding to the adjusted multiframe in the second block sequence and a correspondence between a slot resource in the S1 slot resources and Q1 first block sequences, to obtain the second block sequence. Q1 is a positive integer. The first communication device sends the second block sequence. Therefore, the quantity of basic frames in the multiframe may be adjusted. In other words, a quantity of slot resources corresponding to data carried in one multiframe may be adjusted. In other words, the bandwidth corresponding to one multiframe may be adjusted. Therefore, a bandwidth of a service corresponding to the multiframe may be further adjusted based on the adjusted bandwidth corresponding to the multiframe.

In a possible implementation, one first block sequence in the Q1 first block sequences may be from a service of one client, or may be from services of a plurality of clients.

In this embodiment of this application, a bandwidth corresponding to one slot resource may be a preset value, for example, may be 5 Gbps or 10 Mbps. This is not limited in this embodiment of this application.

In a possible implementation, one multiframe means one data segment in one data stream. One multiframe includes at least one basic frame. One basic frame means one data segment in data segments corresponding to one multiframe.

In this embodiment of this application, the second block sequence is obtained by multiplexing the first block sequence based on a correspondence between each slot resource and the first block sequence. Data in one multiframe in the second block sequence is from data corresponding to all slot resources corresponding to the second block sequence. One multiframe includes at least one basic frame. One basic frame is used to carry data of a client corresponding to at least one slot resource.

In a possible implementation, one multiframe includes at least one basic frame. A slot resource corresponding to data in one basic frame is some slot resources in all slot resources corresponding to one multiframe.

In a possible implementation, one multiframe includes at least one basic frame. One basic frame includes data of a client corresponding to a preset fixed quantity of slot resources. For two basic frames in one multiframe, for example, referred to as a first basic frame and a second basic frame, any slot resource of all slot resources corresponding to the first basic frame is different from any slot resource of all slot resources corresponding to the second basic frame.

One basic frame is used to carry data corresponding to K0 slot resources. The quantity of basic frames included in one multiframe is equal to a quotient of a total quantity S1 of slot resources and K0.

In this embodiment of this application, the total quantity of slot resources corresponding to one multiframe after bandwidth adjustment is adjusted from S2 to S1. Therefore, the quantity of basic frames included in one multiframe after bandwidth adjustment is adjusted from a quotient of S2 and K0 to the quotient of S 1 and K0.

In a possible implementation, one basic frame sequentially includes one header block, K1 data blocks, and one tail block. A 1^{st} data block following the header block carries overhead information. K1 is a positive integer.

In a possible implementation, before the first communication device sends the first request message, the method further includes: The first communication device receives a bandwidth adjustment message. The bandwidth adjustment message may be sent by another device, for example, a network management apparatus configured to centrally manage devices. The bandwidth adjustment message indicates to adjust a bandwidth corresponding to clients (one or more) in Q1 clients, for example, increase or decrease the bandwidth. The bandwidth adjustment message further indicates the adjusted bandwidth corresponding to the Q1 clients. The first communication device determines, based on the bandwidth adjustment message, that bandwidths corresponding to the Q1 clients need to be adjusted, and sends the first request message. The first request message is used to request to adjust a quantity of basic frames in one multiframe, or is used to request to adjust a quantity of slot resources in one multiframe.

For example, when the bandwidth is increased, it means that more slot resources may be available for the client to use. In this case, because slot resources are increased, the quantity of slot resources included in the multiframe may also increase. Further, to carry data corresponding to an increased slot resource, the quantity of basic frames included in the multiframe may be increased.

For another example, when the bandwidth is decreased, it means that fewer slot resources are available for the client to use. In this case, because slot resources are decreased, the quantity of slot resources included in the multiframe may also decrease. Then, the quantity of basic frames included in the multiframe may be decreased, to decrease the slot resources included in one multiframe.

In a possible implementation, if the first request message is used to request to increase the quantity of basic frames in the multiframe included in the second block sequence, the multiframe in the second block sequence includes a first quantity of basic frames. The first quantity is greater than a quantity threshold. The quantity threshold is related to a quantity of slot resources obtained by dividing one slot and a quantity of slot resources corresponding to data included in one basic frame. Because the quantity of basic frames included in one multiframe is greater than a quantity threshold, more bandwidths may be allocated to the client.

In a possible implementation, before the multiplexing Q1 first block sequences corresponding to the Q1 clients based on the Q1 clients corresponding to the S1 slot resources, to obtain the second block sequence, the method further includes: adjusting a correspondence between the Q1 clients and S2 slot resources to a correspondence between the Q1 clients and S1 slot resources. The S2 slot resources are a slot resource corresponding to the basic frame in the unadjusted multiframe in the second block sequence, and S2 is a positive integer. A first slot resource in S2 is the same as or different from a second slot resource in S1. In this way, when the quantity of slot resources increases, the correspondence between the client and the slot resource is adjusted, so that the client can be more evenly distributed on the adjusted slot resource. When the quantity of slot resources decreases, the correspondence between the client and the slot resource is adjusted, so that a client on a deleted slot resource can be migrated to a reserved slot resource, to prevent a service loss.

To improve flexibility of the solution, the first request message may indicate to adjust the correspondence between the Q1 clients and the slot resource. In addition, a piece of new signaling, namely, a second request message, may be further defined. The second request message is sent. The second request message indicates to adjust the correspondence between the Q1 clients and the slot resource.

In a possible implementation, if the first request message is used to request to increase the quantity of basic frames in the multiframe included in the second block sequence, the second request message is sent following the first request message. In this case, the quantity of basic frames in the multiframe may be first increased, and then the correspondence that is between the client and the slot resource and that corresponds to the adjusted multiframe is adjusted.

In a possible implementation, if the first request message is used to request to decrease the quantity of basic frames in the multiframe included in the second block sequence, the second request message is sent before the first request message. In this case, a service corresponding to a to-be-deleted slot resource in the multiframe may be first migrated to a reserved slot resource, and then the quantity of basic frames in the multiframe is decreased, to prevent a service loss.

In a possible implementation, the second request message further includes: indication information indicating an adjustment policy for adjusting the correspondence between the Q1 clients and the slot resource. In this case, the first communication device and the second communication device may separately adjust the correspondence between the slot resource and the client based on the adjustment policy. In this way, signaling load caused by transmission of a slot resource configuration table between the first communication device and the second communication device can be reduced.

In a possible implementation, the adjustment policy includes: establishing a correspondence between a client in the Q1 clients and the slot resource in the S1 slot resources according to a first preset rule. In this way, all clients and all slot resources corresponding to one adjusted multiframe may be rearranged, so that the clients can be evenly distributed on the slot resources.

In a possible implementation, the adjustment policy includes: if the first request message is used to request to decrease the quantity of basic frames in the multiframe included in the second block sequence, establishing, according to a second preset rule, a correspondence between a client corresponding to an occupied slot resource in a to-be-deleted slot resource and an idle slot resource in a to-be-reserved slot resource. A slot resource in the to-be-deleted slot resource meets a condition: The slot resource is a slot resource corresponding to the unadjusted multiframe, and is not a slot resource corresponding to the adjusted multiframe. A slot resource in the to-be-reserved slot resource meets a condition: The slot resource is the slot resource corresponding to the unadjusted multiframe, and is the slot resource corresponding to the adjusted multiframe. Because only a client in the to-be-deleted slot resource is adjusted, a quantity of slot resources whose correspondence with the client needs to be adjusted can be decreased.

In a possible implementation, the establishing, according to a second preset rule, a correspondence between a client corresponding to an occupied slot resource in a to-be-deleted slot resource and an idle slot resource in a to-be-reserved slot resource includes: setting a first pointer and a second pointer, where the first pointer is used to search the to-be-reserved slot resource for the idle slot resource based on a sequence of the slot resources, and the second pointer is used to search the to-be-deleted slot resource for the occupied slot resource based on a sequence of the slot resources; and associating, based on a sequence of the idle slot resource found by using the first pointer, a client corresponding to the occupied slot resource that is sequentially searched for by using the second pointer with the idle slot resource searched for by using the first pointer. In this way, service migration on the slot resource can be completed relatively quickly, and a service is not missing.

In a possible implementation, the first request message further includes: indication information indicating a maximum index number of a slot resource corresponding to the data carried in the adjusted multiframe in the second block sequence. In this way, the second communication device does not need to determine a maximum index number of the slot resource based on information delivered by a network management apparatus. In addition, the second communication device may compare the maximum index number of the slot resource with the maximum index number of the slot resource determined based on the information delivered by the network management apparatus, achieving check effect.

To improve flexibility of the solution, in a possible implementation, the indication information indicating a maximum index number of a slot resource corresponding to the data carried in the adjusted multiframe in the second block sequence is one of the following content: a maximum index number of a slot resource corresponding to the data carried in the adjusted multiframe in the second block sequence; a total quantity of slot resources corresponding to the data carried in the adjusted multiframe in the second block sequence; and a calculation result of a total quantity of slot resources corresponding to the data carried in the adjusted multiframe in the second block sequence and a correction value.

In a possible implementation, the sending a first request message includes: sending R1 first request sub-messages. One of the R1 first request sub-messages indicates a correspondence between the slot resource in the S 1 slot resources corresponding to the adjusted multiframe and a client in Q1 clients. R1 is a positive integer. One client may correspond to one or more slot resources, and one slot resource corresponds to one client. There may be one or more slot resources in the S 1 slot resources, and the slot resource is not allocated to a client. In this case, the slot resources may be referred to as an idle slot resource or an unoccupied slot resource. The R1 first request sub-messages further indicate to adjust, based on a quantity of S 1 slot resources indicated by the R1 first request sub-messages, the quantity of basic frames in the multiframe included in the second block sequence. In this case, the correspondence between the slot resource and the client is fully delivered. This can reduce a workload of the second communication device, and reduce signaling interaction between the first communication device and the second communication device that is caused by inconsistency in the correspondence between the slot resource and the client.

In a possible implementation, one of the R1 first request sub-messages further includes: indication information indicating whether the first request sub-message is last one of the R1 first request sub-messages. In this case, the second communication device may determine whether all first request sub-messages are received.

To be more compatible with the conventional technology, in a possible implementation, the first request message is carried in a block that is used to carry overhead information and that is in the multiframe in the second block sequence.

In a possible implementation, after the sending a first request message, the method further includes: receiving a first response message, where the first response message indicates content allowed to be requested by the first request message; and sending a first acknowledgment message, where the first acknowledgment message indicates to enable the content requested by the first request message starting from a first preset block. In this way, this handshake negotiation-based solution, the first communication device and the second communication device can determine the start position of enabling the content requested by the first request message. In addition, this handshake manner is also relatively compatible with the conventional technology.

In a possible implementation, if the sending a first request message includes sending R1 first request sub-messages, the receiving a first response message includes: receiving R1 first response sub-messages. The R1 first request sub-messages are in a one-to-one correspondence with the R1 first response sub-messages. One first response sub-message indicates the content allowed to be requested by the first request sub-message that corresponds to the first response sub-message. In this way, a transmit side can determine whether a receive side misses a specific first request sub-message.

It should be noted that the S 1 slot resources in this application may be understood as S 1 sub-slots, or may be understood as S 1 slots. In other words, the slot resource may be the sub-slot, or may be the slot.

According to a second aspect, an embodiment of this application provides a communication method. The method includes: A second communication device receives a first request message. The first request message is used to request to adjust a quantity of basic frames in a multiframe included in a second block sequence. The second communication device obtains the second block sequence. The second communication device demultiplexes the second block sequence based on S 1 slot resources corresponding to the adjusted multiframe in the second block sequence and a correspondence between a slot resource in the S 1 slot resources and Q1 first block sequences, to obtain the Q1 first block sequences. Both S1 and Q 1 are positive integers. Therefore, the quantity of basic frames in the multiframe may be adjusted. In other words, a quantity of slot resources corresponding to data carried in one multiframe may be adjusted. In other words, the bandwidth corresponding to one multiframe may be adjusted. Therefore, a bandwidth of a service corresponding to the multiframe may be further adjusted based on the adjusted bandwidth corresponding to the multiframe.

In a possible implementation, one first block sequence in the Q1 first block sequences may be from a service of one client, or may be from services of a plurality of clients.

In this embodiment of this application, a bandwidth corresponding to one slot resource may be a preset value, for example, may be 5 Gbps or 10 Mbps. This is not limited in this embodiment of this application.

In a possible implementation, one multiframe means one data segment in one data stream. One multiframe includes at least one basic frame. One basic frame means one data segment in data segments corresponding to one multiframe.

In this embodiment of this application, the second block sequence is obtained by multiplexing the first block sequence based on a correspondence between each slot resource and the first block sequence. Data in one multiframe in the second block sequence is from data corresponding to all slot resources corresponding to the second block sequence. One multiframe includes at least one basic frame. One basic frame is used to carry data of a client corresponding to at least one slot resource.

In a possible implementation, one multiframe includes at least one basic frame. A slot resource corresponding to data in one basic frame is some slot resources in all slot resources corresponding to one multiframe.

In a possible implementation, one multiframe includes at least one basic frame. One basic frame includes data of a client corresponding to a preset fixed quantity of slot resources. For two basic frames in one multiframe, for example, referred to as a first basic frame and a second basic frame, any slot resource of all slot resources corresponding to the first basic frame is different from any slot resource of all slot resources corresponding to the second basic frame.

In a possible implementation, the second communication device further receives a bandwidth adjustment message. The bandwidth adjustment message may be sent by another device, for example, a network management apparatus configured to centrally manage devices. The bandwidth adjustment message indicates to adjust a bandwidth corresponding to clients (one or more) in Q1 clients, for example, increase or decrease the bandwidth. The bandwidth adjustment message further indicates the adjusted bandwidth corresponding to the Q1 clients. The second communication device may determine, based on the bandwidth adjustment message, a quantity of slot resources included in one adjusted multiframe, and then determine a quantity of basic frames included in one adjusted multiframe.

For example, when the bandwidth is increased, it means that more slot resources may be available for the client to use. In this case, because slot resources are increased, the quantity of slot resources included in the multiframe may also increase. Further, to carry data corresponding to an increased slot resource, the quantity of basic frames included in the multiframe may be increased.

For another example, when the bandwidth is decreased, it means that fewer slot resources are available for the client to use. In this case, because slot resources are decreased, the quantity of slot resources included in the multiframe may also decrease. Then, the quantity of basic frames included in the multiframe may be decreased, to decrease the slot resources included in one multiframe.

In a possible implementation, if the first request message is used to request to increase the quantity of basic frames in the multiframe included in the second block sequence, the multiframe in the second block sequence includes a first quantity of basic frames. The first quantity is greater than a quantity threshold. The quantity threshold is related to a quantity of slot resources obtained by dividing one slot and a quantity of slot resources corresponding to data included in one basic frame. Because the quantity of basic frames included in one multiframe is greater than a quantity threshold, that is, the quantity of slot resources included in one multiframe may be greater than a basic value of the slot resources, more bandwidths may be allocated to the client.

In a possible implementation, the second communication device adjusts a correspondence between the Q1 clients and S2 slot resources to a correspondence between the Q1 clients and S1 slot resources. The S2 slot resources are a slot resource corresponding to the basic frame in the unadjusted multiframe in the second block sequence, and S2 is a positive integer. One of the S1 slot resources is one of at least two slot resources obtained by dividing one slot. A first slot resource in S2 is the same as or different from a second slot resource in S1. In this way, when the quantity of slot resources increases, the correspondence between the client and the slot resource is adjusted, so that the client can be more evenly distributed on the adjusted slot resource. When the quantity of slot resources decreases, the correspondence between the client and the slot resource is adjusted, so that a client on a deleted slot resource can be migrated to a reserved slot resource, to prevent a service loss.

To improve flexibility of the solution, the first request message may indicate to adjust the correspondence between the Q1 clients and the slot resource. In addition, a piece of new signaling, namely, a second request message, may be further defined.

In a possible implementation, the second communication device further receives a second request message. The second request message indicates to adjust the correspondence between the Q1 clients and the slot resource.

In a possible implementation, if the first request message is used to request to increase the quantity of basic frames in the multiframe included in the second block sequence, the second request message is received following the first request message. In this case, the quantity of basic frames in the multiframe may be first increased, and then the correspondence that is between the client and the slot resource and that corresponds to the adjusted multiframe is adjusted.

In a possible implementation, if the first request message is used to request to decrease the quantity of basic frames in the multiframe included in the second block sequence, the second request message is received before the first request message. In this case, a service corresponding to a to-be-deleted slot resource in the multiframe may be first migrated to a reserved slot resource, and then the quantity of basic frames in the multiframe is decreased, to prevent a service loss.

In a possible implementation, the second request message further includes: indication information indicating an adjustment policy for adjusting the correspondence between the Q1 clients and the slot resource. In this case, the first communication device and the second communication device may separately adjust the correspondence between the slot resource and the client based on the adjustment policy. In this way, signaling load caused by transmission of a slot resource configuration table between the first communication device and the second communication device can be reduced.

In a possible implementation, the adjustment policy includes: establishing a correspondence between a client in the Q1 clients and the slot resource in the S1 slot resources according to a first preset rule. In this way, all clients and all slot resources corresponding to one adjusted multiframe may be rearranged, so that the clients can be evenly distributed on the slot resources.

In a possible implementation, the adjustment policy includes: if the first request message is used to request to decrease the quantity of basic frames in the multiframe included in the second block sequence, establishing, according to a second preset rule, a correspondence between a client corresponding to an occupied slot resource in a to-be-deleted slot resource and an idle slot resource in a to-be-reserved slot resource. A slot resource in the to-be-deleted slot resource meets a condition: The slot resource is a slot resource corresponding to the unadjusted multiframe, and is not a slot resource corresponding to the adjusted multiframe. A slot resource in the to-be-reserved slot resource meets a condition: The slot resource is the slot resource corresponding to the unadjusted multiframe, and is the slot resource corresponding to the adjusted multiframe. Because only a client in the to-be-deleted slot resource is adjusted, a quantity of slot resources whose correspondence with the client needs to be adjusted can be decreased.

In a possible implementation, the establishing, according to a second preset rule, a correspondence between a client corresponding to an occupied slot resource in a to-be-deleted slot resource and an idle slot resource in a to-be-reserved slot resource includes: setting a first pointer and a second pointer, where the first pointer is used to search the to-be-reserved slot resource for the idle slot resource based on a sequence of the slot resources, and the second pointer is used to search the to-be-deleted slot resource for the occupied slot resource based on a sequence of the slot resources; and associating, based on a sequence of the idle slot resource found by using the first pointer, a client corresponding to the occupied slot resource that is sequentially searched for by using the second pointer with the idle slot resource searched for by using the first pointer. In this way, service migration on the slot resource can be completed relatively quickly, and a service is not missing.

In a possible implementation, the first request message further includes: indication information indicating a maximum index number of a slot resource corresponding to the data carried in the adjusted multiframe in the second block sequence. In this way, the second communication device does not need to determine a maximum index number of the slot resource based on information delivered by a network management apparatus. In addition, the second communication device may compare the maximum index number of the slot resource with the maximum index number of the slot resource determined based on the information delivered by the network management apparatus, achieving check effect.

To improve flexibility of the solution, in a possible implementation, the indication information indicating a maximum index number of a slot resource corresponding to the data carried in the adjusted multiframe in the second block sequence is one of the following content: a maximum index number of a slot resource corresponding to the data carried in the adjusted multiframe in the second block sequence; a total quantity of slot resources corresponding to the data carried in the adjusted multiframe in the second block sequence; and a calculation result of a total quantity of slot resources corresponding to the data carried in the adjusted multiframe in the second block sequence and a correction value.

In a possible implementation, if the first request message further indicates to update the correspondence between the client and the slot resource, the receiving a first request message includes: receiving R1 first request sub-messages. One of the R1 first request sub-messages indicates a correspondence between the slot resource in the S 1 slot resources corresponding to the adjusted multiframe and a client in Q1 clients. R1 is a positive integer. The R1 first request sub-messages further indicate to adjust, based on a quantity of S1 slot resources indicated by the R1 first request sub-messages, the quantity of basic frames in the multiframe included in the second block sequence. In this case, the correspondence between the slot resource and the client is fully delivered. This can reduce a workload of the second communication device, and reduce signaling interaction between the first communication device and the second communication device that is caused by inconsistency in the correspondence between the slot resource and the client.

In a possible implementation, one of the R1 first request sub-messages further includes: indication information indicating whether the first request sub-message is last one of the R1 first request sub-messages. In this case, the second communication device may determine whether all first request sub-messages are received.

To be more compatible with the conventional technology, in a possible implementation, the first request message is carried in a block that is used to carry overhead information and that is in the multiframe in the second block sequence.

In a possible implementation, after the receiving a first request message, the method further includes: sending a first response message, where the first response message indicates content allowed to be requested by the first request message; and receiving a first acknowledgment message, where the first acknowledgment message indicates to enable the content requested by the first request message starting from a first preset block. In this way, this handshake negotiation-based solution, the first communication device and the second communication device can determine the start position of enabling the content requested by the first request message. In addition, this handshake manner is also relatively compatible with the conventional technology.

In a possible implementation, if the receiving a first request message includes sending R1 first request sub-messages, the sending a first response message includes: sending R1 first response sub-messages. The R1 first request sub-messages are in a one-to-one correspondence with the R1 first response sub-messages. One first response sub-message indicates the content allowed to be requested by the first request sub-message that corresponds to the first response sub-message. In this way, a transmit side can determine whether a receive side misses a specific first request sub-message.

One basic frame is used to carry data corresponding to K0 slot resources. The quantity of basic frames included in one multiframe is equal to a quotient of a total quantity of slot resources and K0. In this embodiment of this application, the total quantity of slot resources corresponding to one multiframe after bandwidth adjustment is adjusted from S2 to S 1. Therefore, the quantity of basic frames included in one multiframe after bandwidth adjustment is adjusted from a quotient of S2 and K0 to the quotient of S 1 and K0.

In a possible implementation, one basic frame sequentially includes one header block, K1 data blocks, and one tail block. A 1^{st} data block following the header block carries overhead information. K1 is a positive integer.

It should be noted that the S 1 slot resources in this application may be understood as S 1 sub-slots, or may be understood as S 1 slots. In other words, the slot resource may be the sub-slot, or may be the slot.

According to a third aspect, this application provides a communication method. In the method, a first communication device sends a first request message. The first request message is used to request to adjust a quantity of basic frames in a multiframe included in a second block sequence. The first communication device multiplexes Q1 first block sequences based on S1 sub-slots corresponding to the adjusted multiframe in the second block sequence and a correspondence between a sub-slot in the S 1 sub-slots and Q1 first block sequences, to obtain the second block sequence. Q1 is a positive integer. The first communication device sends the second block sequence. In this application, one of the Q1 clients may correspond to one or more of the S 1 sub-slots, and one of the S 1 sub-slots corresponds to only one of the Q1 clients. In the S 1 sub-slots, there may also be one or more sub-slots that are not allocated to a client. The quantity of basic frames in the multiframe may be adjusted. In other words, a quantity of slot resources corresponding to data carried in one multiframe may be adjusted. In other words, the bandwidth corresponding to one multiframe may be adjusted. Therefore, a bandwidth of a service corresponding to the multiframe may be further adjusted based on the adjusted bandwidth corresponding to the multiframe. It should be noted that the S 1 sub-slots are an example of the S 1 slot resources in the first aspect and the second aspect.

In a possible implementation, one first block sequence in the Q1 first block sequences may be from a service of one client, or may be from services of a plurality of clients. When the S 1 slot resources are sub-slots, in a possible implementation, the Q1 first block sequences are in a one-to-one correspondence with the Q1 clients.

In this embodiment of this application, a bandwidth corresponding to one sub-slot may be a preset value, for example, may be 5 Gbps or 10 Mbps. This is not limited in this embodiment of this application.

In a possible implementation, one multiframe means one data segment in one data stream. One multiframe includes at least one basic frame. One basic frame means one data segment in data segments corresponding to one multiframe.

In this embodiment of this application, the second block sequence is obtained by multiplexing the first block sequence based on a correspondence between each sub-slot and the first block sequence. Data in one multiframe in the second block sequence is from data corresponding to all sub-slots corresponding to the second block sequence. One multiframe includes at least one basic frame. One basic frame is used to carry data of a client corresponding to at least one sub-slot.

In a possible implementation, one multiframe includes at least one basic frame. A sub-slot corresponding to data in one basic frame is some sub-slots in all sub-slots corresponding to one multiframe.

In a possible implementation, one multiframe includes at least one basic frame. One basic frame includes data of a client corresponding to a preset fixed quantity of sub-slots. For two basic frames in one multiframe, for example, referred to as a first basic frame and a second basic frame, any sub-slot of all sub-slots corresponding to the first basic frame is different from any sub-slot of all sub-slots corresponding to the second basic frame.

In a possible implementation, before the first communication device sends the first request message, the method further includes: The first communication device receives a bandwidth adjustment message. The bandwidth adjustment message may be sent by another device, for example, a network management apparatus configured to centrally manage devices. The bandwidth adjustment message indicates to adjust a bandwidth corresponding to clients (one or more) in Q1 clients, for example, increase or decrease the bandwidth. The bandwidth adjustment message further indicates the adjusted bandwidth corresponding to the Q1 clients. The first communication device determines, based on the bandwidth adjustment message, that bandwidths corresponding to the Q1 clients need to be adjusted, and sends the first request message. The first request message is used to request to adjust a quantity of basic frames in one multiframe, or is used to request to adjust a quantity of sub-slots in one multiframe.

For example, when the bandwidth is increased, it means that more sub-slots may be available for the client to use. In this case, because sub-slots are increased, the quantity of sub-slots included in the multiframe may also increase. Further, to carry data corresponding to an increased sub-slot, the quantity of basic frames included in the multiframe may be increased.

For another example, when the bandwidth is decreased, it means that fewer sub-slots are available for the client to use. In this case, because sub-slots are decreased, the quantity of sub-slots included in the multiframe may also decrease. Then, the quantity of basic frames included in the multiframe may be decreased, to decrease the sub-slots included in one multiframe.

In a possible implementation, the sending the second block sequence includes: The first communication device multiplexes the second block sequence and a third block sequence based on a slot corresponding to the sub-slots in the adjusted multiframe and a slot corresponding to the third block sequence, to obtain a fourth block sequence. One of the S1 sub-slots is one of at least two sub-slots obtained by dividing one slot. Both S1 and Q1 are positive integers. The first communication device sends a fourth block sequence. In this way, second-level multiplexing may be performed on the data, so that a more appropriate small bandwidth sub-slot may be allocated to a smaller service.

In a possible implementation, if the first request message is used to request to increase the quantity of basic frames in the multiframe included in the second block sequence, the multiframe in the second block sequence includes a first quantity of basic frames. The first quantity is greater than a quantity threshold. The quantity threshold is related to a quantity of sub-slots obtained by dividing one slot and a quantity of sub-slots corresponding to data included in one basic frame. Because the quantity of basic frames included in one multiframe is greater than a quantity threshold, more bandwidths may be allocated to the client.

In a possible implementation, the Q1 clients include a first client and a second client. At least one sub-slot corresponding to the first client is one of at least two sub-slots obtained by dividing a first slot. At least one sub-slot corresponding to the second client is one of at least two sub-slots obtained by dividing a second slot. In this way, it can be learned that a range of sub-slots that can be allocated to the client is increased, so that a larger bandwidth can be allocated to the client.

In a possible implementation, before multiplexing, based on the Q1 clients corresponding to the S1 sub-slots, the Q1 first block sequences corresponding to the Q1 clients, to obtain the second block sequence, the method further includes: adjusting a correspondence between the Q1 clients and S2 sub-slots to a correspondence between the Q1 clients and S1 sub-slots. The S2 sub-slots are a sub-slot corresponding to the basic frame in the unadjusted multiframe in the second block sequence, and S2 is a positive integer. A first sub-slot in S2 is the same as or different from a second sub-slot in S1. In this way, when the quantity of sub-slots increases, the correspondence between the client and the sub-slot is adjusted, so that the client can be more evenly distributed on the adjusted sub-slot. When the quantity of sub-slots decreases, the correspondence between the client and the sub-slot is adjusted, so that a client on a deleted sub-slot can be migrated to a reserved sub-slot, to prevent a service loss.

To improve flexibility of the solution, the first request message may indicate to adjust the correspondence between the Q1 clients and the sub-slot. In addition, a piece of new signaling, namely, a second request message, may be further defined. The second request message is sent. The second request message indicates to adjust the correspondence between the Q1 clients and the sub-slot.

In a possible implementation, if the first request message is used to request to increase the quantity of basic frames in the multiframe included in the second block sequence, the second request message is sent following the first request message. In this case, the quantity of basic frames in the multiframe may be first increased, and then the correspondence that is between the client and the sub-slot and that corresponds to the adjusted multiframe is adjusted.

In a possible implementation, if the first request message is used to request to decrease the quantity of basic frames in the multiframe included in the second block sequence, the second request message is sent before the first request message. In this case, a service corresponding to a to-be-deleted sub-slot in the multiframe may be first migrated to a reserved sub-slot, and then the quantity of basic frames in the multiframe is decreased, to prevent a service loss.

In a possible implementation, the second request message further includes: indication information indicating an adjustment policy for adjusting the correspondence between the Q1 clients and the sub-slot. In this case, the first communication device and the second communication device may separately adjust the correspondence between the sub-slot and the client based on the adjustment policy. In this way, signaling load caused by transmission of a slot resource configuration table between the first communication device and the second communication device can be reduced.

In a possible implementation, the adjustment policy includes: establishing a correspondence between a client in the Q1 clients and the sub-slot in the S 1 sub-slots according to a first preset rule. In this way, all clients and all sub-slots corresponding to one adjusted multiframe may be rearranged, so that the clients can be evenly distributed on the sub-slots.

In a possible implementation, the adjustment policy includes: if the first request message is used to request to decrease the quantity of basic frames in the multiframe included in the second block sequence, establishing, according to a second preset rule, a correspondence between a client corresponding to an occupied sub-slot in a to-be-deleted sub-slot and an idle sub-slot in a to-be-reserved sub-slot. A sub-slot in the to-be-deleted sub-slot meets a condition: The sub-slot is a sub-slot corresponding to the unadjusted multiframe, and is not a sub-slot corresponding to the adjusted multiframe. A sub-slot in the to-be-reserved sub-slot meets a condition: The sub-slot is the sub-slot corresponding to the unadjusted multiframe, and is the sub-slot corresponding to the adjusted multiframe. Because only a client in the to-be-deleted sub-slot is adjusted, a quantity of sub-slots whose correspondence with the client needs to be adjusted can be decreased.

In a possible implementation, the establishing, according to a second preset rule, a correspondence between a client corresponding to an occupied sub-slot in a to-be-deleted sub-slot and an idle sub-slot in a to-be-reserved sub-slot includes: setting a first pointer and a second pointer, where the first pointer is used to search the to-be-reserved sub-slot for the idle sub-slot based on a sequence of the sub-slots, and the second pointer is used to search the to-be-deleted sub-slot for the occupied sub-slot based on a sequence of the sub-slots; and associating, based on a sequence of the idle sub-slot found by using the first pointer, a client corresponding to the occupied sub-slot that is sequentially searched for by using the second pointer with the idle sub-slot searched for by using the first pointer. In this way, service migration on the sub-slot can be completed relatively quickly, and a service is not missing.

In a possible implementation, the first request message further includes: indication information indicating a maximum index number of a sub-slot corresponding to the data carried in the adjusted multiframe in the second block sequence. In this way, the second communication device does not need to determine a maximum index number of the sub-slot based on information delivered by a network management apparatus. In addition, the second communication device may compare the maximum index number of the slot resource with the maximum index number of the sub-slot determined based on the information delivered by the network management apparatus, achieving check effect.

To improve flexibility of the solution, in a possible implementation, the indication information indicating a maximum index number of a sub-slot corresponding to the data carried in the adjusted multiframe in the second block sequence is one of the following content: a maximum index number of a sub-slot corresponding to the data carried in the adjusted multiframe in the second block sequence; a total quantity of sub-slots corresponding to the data carried in the adjusted multiframe in the second block sequence; and a calculation result of a total quantity of sub-slots corresponding to the data carried in the adjusted multiframe in the second block sequence and a correction value.

In a possible implementation, the sending a first request message includes: sending R1 first request sub-messages. One of the R1 first request sub-messages indicates a correspondence between the sub-slot in the S 1 sub-slots corresponding to the adjusted multiframe and a client in Q1 clients. R1 is a positive integer. One client may correspond to one or more sub-slots, and one sub-slot corresponds to one client. There may be one or more sub-slots in the S 1 sub-slots, and the sub-slot is not allocated to a client. In this case, the sub-slots may be referred to as an idle sub-slot or an unoccupied sub-slot. The R1 first request sub-messages further indicate to adjust, based on a quantity of S 1 sub-slots indicated by the R1 first request sub-messages, the quantity of basic frames in the multiframe included in the second block sequence. In this case, the correspondence between the sub-slot and the client is fully delivered. This can reduce a workload of the second communication device, and reduce signaling interaction between the first communication device and the second communication device that is caused by inconsistency in the correspondence between the sub-slot and the client.

In a possible implementation, one of the R1 first request sub-messages further includes: indication information indicating whether the first request sub-message is last one of the R1 first request sub-messages. In this case, the second communication device may determine whether all first request sub-messages are received.

To be more compatible with the conventional technology, in a possible implementation, the first request message is carried in a block that is used to carry overhead information and that is in the multiframe in the second block sequence.

In a possible implementation, the first request message is carried in a 1^{st} data block following an S block in the basic frame in the multiframe in the second block sequence.

In a possible implementation, indication information that is in the first request message and that is used to request to adjust the quantity of basic frames in the multiframe included in the second block sequence is carried in at least one of the following content: a slot configuration table field of a first block; or an OP code field in a slot configuration table field of a first block.

In a possible implementation, indication information that is in the first request message and that is used to request to adjust the quantity of basic frames in the multiframe included in the second block sequence is carried in at least one of the following content: 9 bits to 12 bits of a first block; or 37 bits to 40 bits of a first block.

In a possible implementation, after the sending a first request message, the method further includes: receiving a first response message, where the first response message indicates content allowed to be requested by the first request message; and sending a first acknowledgment message, where the first acknowledgment message indicates to enable the content requested by the first request message starting from a first preset block. In this way, this handshake negotiation-based solution, the first communication device and the second communication device can determine the start position of enabling the content requested by the first request message. In addition, this handshake manner is also relatively compatible with the conventional technology.

In a possible implementation, if the sending a first request message includes sending R1 first request sub-messages, the receiving a first response message includes: receiving R1 first response sub-messages. The R1 first request sub-messages are in a one-to-one correspondence with the R1 first response sub-messages. One first response sub-message indicates the content allowed to be requested by the first request sub-message that corresponds to the first response sub-message. In this way, a transmit side can determine whether a receive side misses a specific first request sub-message.

To be more compatible with the conventional technology, in a possible implementation, the basic frame is used to carry data corresponding to 24 sub-slots. In a possible implementation, a bandwidth corresponding to one sub-slot is 10 Mbps. In a possible implementation, one slot is divided into 480 sub-slots. In a possible implementation, the first quantity is related to a quantity of sub-slots obtained by dividing N2 slots and the quantity of sub-slots corresponding to the data included in one basic frame. N2 is a total quantity of slots to which sub-slots corresponding to the Q1 clients belong. N2 is an integer greater than 1. In a possible implementation, quantities of sub-slots in any two of the N2 slots are equal. A value of the first quantity is equal to N2 times a quantity threshold. In a possible implementation, the quantity threshold is a quotient of a total quantity of sub-slots obtained by dividing one slot and the quantity of sub-slots corresponding to the data included in one basic frame.

One basic frame is used to carry data corresponding to K0 sub-slots. The quantity of basic frames included in one multiframe is equal to a quotient of a total quantity of sub-slots and K0. In this embodiment of this application, the total quantity of sub-slots corresponding to one multiframe after bandwidth adjustment is adjusted from S2 to S1. Therefore, the quantity of basic frames included in one multiframe after bandwidth adjustment is adjusted from a quotient of S2 and K0 to the quotient of S 1 and K0. It should be noted that, in this embodiment of this application, both the sub-slot and the slot belong to the slot resource. In this implementation, the foregoing S2 slot resources are S1 sub-slots, and foregoing the S1 slot resources are S1 sub-slots.

In a possible implementation, one basic frame sequentially includes one header block, K1 data blocks, and one tail block. A 1^{st} data block following the header block carries overhead information. K1 is a positive integer. In a possible implementation, K1 is 195.

According to a fourth aspect, an embodiment of this application provides a communication method. The method includes: A second communication device receives a first request message. The first request message is used to request to adjust a quantity of basic frames in a multiframe included in a second block sequence. The second communication device obtains the second block sequence. The second communication device demultiplexes the second block sequence based on S1 sub-slots corresponding to the adjusted multiframe in the second block sequence and a correspondence between a sub-slot in the S1 sub-slots and Q1 first block sequences, to obtain the Q1 first block sequences. Both S1 and Q1 are positive integers. Therefore, the quantity of basic frames in the multiframe may be adjusted. In other words, a quantity of slot resources corresponding to data carried in one multiframe may be adjusted. In other words, the bandwidth corresponding to one multiframe may be adjusted. Therefore, a bandwidth of a service corresponding to the multiframe may be further adjusted based on the adjusted bandwidth corresponding to the multiframe. It should be noted that the S1 sub-slots are an example of the S1 slot resources in the first aspect and the second aspect.

In a possible implementation, one first block sequence in the Q1 first block sequences may be from a service of one client, or may be from services of a plurality of clients. When the S1 slot resources are sub-slots, in a possible implementation, the Q1 first block sequences are in a one-to-one correspondence with the Q1 clients.

In this embodiment of this application, a bandwidth corresponding to one sub-slot may be a preset value, for example, may be 5 Gbps or 10 Mbps. This is not limited in this embodiment of this application.

In a possible implementation, one multiframe means one data segment in one data stream. One multiframe includes at least one basic frame. One basic frame means one data segment in data segments corresponding to one multiframe.

In this embodiment of this application, the second block sequence is obtained by multiplexing the first block sequence based on a correspondence between each sub-slot and the first block sequence. Data in one multiframe in the second block sequence is from data corresponding to all sub-slots corresponding to the second block sequence. One multiframe includes at least one basic frame. One basic frame is used to carry data of a client corresponding to at least one sub-slot.

In a possible implementation, one multiframe includes at least one basic frame. A sub-slot corresponding to data in one basic frame is some sub-slots in all sub-slots corresponding to one multiframe.

In a possible implementation, one multiframe includes at least one basic frame. One basic frame includes data of a client corresponding to a preset fixed quantity of sub-slots. For two basic frames in one multiframe, for example, referred to as a first basic frame and a second basic frame, any sub-slot of all sub-slots corresponding to the first basic frame is different from any sub-slot of all sub-slots corresponding to the second basic frame.

In a possible implementation, the second communication device further receives a bandwidth adjustment message. The bandwidth adjustment message may be sent by another device, for example, a network management apparatus configured to centrally manage devices. The bandwidth adjustment message indicates to adjust a bandwidth corresponding to clients (one or more) in Q1 clients, for example, increase or decrease the bandwidth. The bandwidth adjustment message further indicates the adjusted bandwidth corresponding to the Q1 clients. The second communication device may determine, based on the bandwidth adjustment message, a quantity of sub-slots included in one adjusted multiframe, and then determine a quantity of basic frames included in one adjusted multiframe.

For example, when the bandwidth is increased, it means that more sub-slots may be available for the client to use. In this case, because sub-slots are increased, the quantity of sub-slots included in the multiframe may also increase. Further, to carry data corresponding to an increased sub-slot, the quantity of basic frames included in the multiframe may be increased.

For another example, when the bandwidth is decreased, it means that fewer sub-slots are available for the client to use. In this case, because sub-slots are decreased, the quantity of sub-slots included in the multiframe may also decrease. Then, the quantity of basic frames included in the multiframe may be decreased, to decrease the sub-slots included in one multiframe.

In a possible implementation, the second communication device receives a fourth block sequence. The second communication device demultiplexes the fourth block sequence based on the slot corresponding to the sub-slot in the adjusted multiframe in the second block sequence and the slot corresponding to the third block sequence, to obtain the second block sequence and the third block sequence. In this way, second-level multiplexing may be performed on the data, so that a more appropriate small bandwidth sub-slot may be allocated to a smaller service.

In a possible implementation, if the first request message is used to request to increase the quantity of basic frames in the multiframe included in the second block sequence, the multiframe in the second block sequence includes a first quantity of basic frames. The first quantity is greater than a quantity threshold. The quantity threshold is related to a quantity of sub-slots obtained by dividing one slot and a quantity of sub-slots corresponding to data included in one basic frame. Because the quantity of basic frames included in one multiframe is greater than a quantity threshold, that is, the quantity of slot resources included in one multiframe may be greater than a basic value of the slot resources, more bandwidths may be allocated to the client.

In a possible implementation, the Q1 clients include a first client and a second client. At least one sub-slot corresponding to the first client is one of at least two sub-slots obtained by dividing a first slot. At least one sub-slot corresponding to the second client is one of at least two sub-slots obtained by dividing a second slot. In this way, it can be learned that a range of sub-slots that can be allocated to the client is increased, so that a larger bandwidth can be allocated to the client.

In a possible implementation, before the demultiplexing the fourth block sequence based on the slot corresponding to the sub-slot in the adjusted multiframe in the second block sequence and the slot corresponding to the third block sequence, to obtain the second block sequence and the third block sequence, the method further includes: adjusting a correspondence between the Q1 clients and S2 sub-slots to a correspondence between the Q1 clients and S1 sub-slots. The S2 sub-slots are a sub-slot corresponding to the basic frame in the unadjusted multiframe in the second block sequence, and S2 is a positive integer. One of the S1 sub-slots is one of at least two sub-slots obtained by dividing one slot. A first sub-slot in S2 is the same as or different from a second sub-slot in S1. In this way, when the quantity of sub-slots increases, the correspondence between the client and the sub-slot is adjusted, so that the client can be more evenly distributed on the adjusted sub-slot. When the quantity of sub-slots decreases, the correspondence between the client and the sub-slot is adjusted, so that a client on a deleted sub-slot can be migrated to a reserved sub-slot, to prevent a service loss.

To improve flexibility of the solution, the first request message may indicate to adjust the correspondence between the Q1 clients and the sub-slot. In addition, a piece of new signaling, namely, a second request message, may be further defined.

In a possible implementation, before the demultiplexing the fourth block sequence based on the slot corresponding to the sub-slot in the adjusted multiframe in the second block sequence and the slot corresponding to the third block sequence, to obtain the second block sequence and the third block sequence, the method further includes: receiving a second request message. The second request message indicates to adjust a correspondence between the Q1 clients and the sub-slot.

In a possible implementation, if the first request message is used to request to increase the quantity of basic frames in the multiframe included in the second block sequence, the second request message is received following the first request message. In this case, the quantity of basic frames in the multiframe may be first increased, and then the correspondence that is between the client and the sub-slot and that corresponds to the adjusted multiframe is adjusted.

In a possible implementation, if the first request message is used to request to decrease the quantity of basic frames in the multiframe included in the second block sequence, the second request message is received before the first request message. In this case, a service corresponding to a to-be-deleted sub-slot in the multiframe may be first migrated to a reserved sub-slot, and then the quantity of basic frames in the multiframe is decreased, to prevent a service loss.

In a possible implementation, the second request message further includes: indication information indicating an adjustment policy for adjusting the correspondence between the Q1 clients and the sub-slot. In this case, the first communication device and the second communication device may separately adjust the correspondence between the sub-slot and the client based on the adjustment policy. In this way, signaling load caused by transmission of a slot resource configuration table between the first communication device and the second communication device can be reduced.

In a possible implementation, the adjustment policy includes: establishing a correspondence between a client in the Q1 clients and the sub-slot in the S 1 sub-slots according to a first preset rule. In this way, all clients and all sub-slots corresponding to one adjusted multiframe may be rearranged, so that the clients can be evenly distributed on the sub-slots.

In a possible implementation, the adjustment policy includes: if the first request message is used to request to decrease the quantity of basic frames in the multiframe included in the second block sequence, establishing, according to a second preset rule, a correspondence between a client corresponding to an occupied sub-slot in a to-be-deleted sub-slot and an idle sub-slot in a to-be-reserved sub-slot. A sub-slot in the to-be-deleted sub-slot meets a condition: The sub-slot is a sub-slot corresponding to the unadjusted multiframe, and is not a sub-slot corresponding to the adjusted multiframe. A sub-slot in the to-be-reserved sub-slot meets a condition: The sub-slot is the sub-slot corresponding to the unadjusted multiframe, and is the sub-slot corresponding to the adjusted multiframe. Because only a client in the to-be-deleted sub-slot is adjusted, a quantity of sub-slots whose correspondence with the client needs to be adjusted can be decreased.

In a possible implementation, the establishing, according to a second preset rule, a correspondence between a client corresponding to an occupied sub-slot in a to-be-deleted sub-slot and an idle sub-slot in a to-be-reserved sub-slot includes: setting a first pointer and a second pointer, where the first pointer is used to search the to-be-reserved sub-slot for the idle sub-slot based on a sequence of the sub-slots, and the second pointer is used to search the to-be-deleted sub-slot for the occupied sub-slot based on a sequence of the sub-slots; and associating, based on a sequence of the idle sub-slot found by using the first pointer, a client corresponding to the occupied sub-slot that is sequentially searched for by using the second pointer with the idle sub-slot searched for by using the first pointer. In this way, service migration on the sub-slot can be completed relatively quickly, and a service is not missing.

In a possible implementation, the first request message further includes: indication information indicating a maximum index number of a sub-slot corresponding to the data carried in the adjusted multiframe in the second block sequence. In this way, the second communication device does not need to determine a maximum index number of the sub-slot based on information delivered by a network management apparatus. In addition, the second communication device may compare the maximum index number of the slot resource with the maximum index number of the sub-slot determined based on the information delivered by the network management apparatus, achieving check effect.

To improve flexibility of the solution, in a possible implementation, the indication information indicating a maximum index number of a sub-slot corresponding to the data carried in the adjusted multiframe in the second block sequence is one of the following content: a maximum index number of a sub-slot corresponding to the data carried in the adjusted multiframe in the second block sequence; a total quantity of sub-slots corresponding to the data carried in the adjusted multiframe in the second block sequence; and a calculation result of a total quantity of sub-slots corresponding to the data carried in the adjusted multiframe in the second block sequence and a correction value.

In a possible implementation, if the first request message further indicates to update the correspondence between the client and the sub-slot, the receiving a first request message includes: receiving R1 first request sub-messages. One of the R1 first request sub-messages indicates a correspondence between the sub-slot in the S 1 sub-slots corresponding to the adjusted multiframe and a client in Q1 clients. R1 is a positive integer. The R1 first request sub-messages further indicate to adjust, based on a quantity of S 1 sub-slots indicated by the R1 first request sub-messages, the quantity of basic frames in the multiframe included in the second block sequence. In this case, the correspondence between the sub-slot and the client is fully delivered. This can reduce a workload of the second communication device, and reduce signaling interaction between the first communication device and the second communication device that is caused by inconsistency in the correspondence between the sub-slot and the client.

In a possible implementation, one of the R1 first request sub-messages further includes: indication information indicating whether the first request sub-message is last one of the R1 first request sub-messages. In this case, the second communication device may determine whether all first request sub-messages are received.

To be more compatible with the conventional technology, in a possible implementation, the first request message is carried in a block that is used to carry overhead information and that is in the multiframe in the second block sequence. In a possible implementation, the first request message is carried in a 1^{st} data block following an S block in the basic frame in the adjusted multiframe. In a possible implementation, indication information that is in the first request message and that is used to request to adjust the quantity of basic frames in the multiframe included in the second block sequence is carried in at least one of the following content: a slot configuration table field of a first block; or an OP code field in a slot configuration table field of a first block.

In a possible implementation, a first indication information is carried in at least one of the following content: 9 bits to 12 bits of a first block; or 37 bits to 40 bits of a first block.

In a possible implementation, after the receiving a first request message, the method further includes: sending a first response message, where the first response message indicates content allowed to be requested by the first request message; and receiving a first acknowledgment message, where the first acknowledgment message indicates to enable the content requested by the first request message starting from a first preset block. In this way, this handshake negotiation-based solution, the first communication device and the second communication device can determine the start position of enabling the content requested by the first request message. In addition, this handshake manner is also relatively compatible with the conventional technology.

In a possible implementation, if the receiving a first request message includes sending R1 first request sub-messages, the sending a first response message includes: sending R1 first response sub-messages. The R1 first request sub-messages are in a one-to-one correspondence with the R1 first response sub-messages. One first response sub-message indicates the content allowed to be requested by the first request sub-message that corresponds to the first response sub-message. In this way, a transmit side can determine whether a receive side misses a specific first request sub-message.

To be more compatible with the conventional technology, in a possible implementation, the basic frame is used to carry data corresponding to 24 sub-slots. In a possible implementation, a bandwidth corresponding to one sub-slot is 10 Mbps. In a possible implementation, one slot is divided into 480 sub-slots. In a possible implementation, the first quantity is related to a quantity of sub-slots obtained by dividing N2 slots and the quantity of sub-slots corresponding to the data included in one basic frame. N2 is a total quantity of slots to which sub-slots corresponding to the Q1 clients belong. In a possible implementation, quantities of sub-slots in any two of the N2 slots are equal. A value of the first quantity is equal to N2 times a quantity threshold. In a possible implementation, the quantity threshold is a quotient of a total quantity of sub-slots obtained by dividing one slot and the quantity of sub-slots corresponding to the data included in one basic frame.

One basic frame is used to carry data corresponding to K0 sub-slots. The quantity of basic frames included in one multiframe is equal to a quotient of a total quantity of sub-slots and K0. In this embodiment of this application, the total quantity of sub-slots corresponding to one multiframe after bandwidth adjustment is adjusted from S2 to S 1. Therefore, the quantity of basic frames included in one multiframe after bandwidth adjustment is adjusted from a quotient of S2 and K0 to the quotient of S 1 and K0. It should be noted that, in this embodiment of this application, both the sub-slot and the slot belong to the slot resource. In this implementation, the foregoing S2 slot resources are S 1 sub-slots, and foregoing the S1 slot resources are S 1 sub-slots.

In a possible implementation, one basic frame sequentially includes one header block, K1 data blocks, and one tail block. A 1^{st} data block following the header block carries overhead information. K1 is a positive integer. In a possible implementation, K1 is 195.

Corresponding to any communication method in the first aspect to the fourth aspect, this application further provides a communication apparatus. The communication apparatus may be any transmit end device (for example, a first communication device) or any receive end device (for example, a second communication device) that perform data transmission in a wireless or wired manner, for example, a communication chip or a network device. In a communication process, the transmit end device and the receive end device are relative to each other. In some communication processes, the communication apparatus (for example, the first communication device or the second communication device) may be used as the foregoing network device or a communication chip that can be used for the network device.

According to a fifth aspect, a communication apparatus is provided. The communication apparatus is the first communication device or the second communication device. The communication apparatus includes a communication unit and a processing unit, to perform any implementation of the communication method in any one of the first aspect to the fourth aspect. The communication unit is configured to perform functions related to sending and receiving. Optionally, the communication unit includes a receiving unit and a sending unit. In a design, the communication apparatus is a communication chip, and the communication unit may be an input/output circuit or interface of the communication chip.

In another design, the communication unit may be a transmitter and a receiver, or the communication unit may be a transmitting machine and a receiving machine.

Optionally, the communication apparatus further includes modules that may be configured to perform any implementation of any communication method according to the first aspect to the fourth aspect.

According to a sixth aspect, a communication apparatus is provided. The communication apparatus is the first communication device or the second communication device. The communication apparatus includes a processor and a memory. Optionally, the communication apparatus further includes a transceiver. The memory is configured to store a computer program or instructions. The processor is configured to: invoke the computer program or the instructions from the memory and run the computer program or the instructions. When the processor executes the computer program or the instructions in the memory, the communication apparatus is enabled to perform any implementation of any communication method according to the first aspect to the fourth aspect.

Optionally, there are one or more processors, and there are one or more memories.

Optionally, the memory may be integrated in the processor, or the memory and the processor are separately disposed.

Optionally, the transceiver may include a transmitter machine (a transmitting machine) and a receiver machine (a receiving machine).

According to a seventh aspect, a communication apparatus is provided. The communication apparatus is the first communication device or the second communication device. The communication apparatus includes a processor. The processor is coupled to a memory, and may be configured to perform the method according to any one of the first aspect to the fourth aspect, and any one of the possible implementations of the first aspect to the fourth aspect. Optionally, the communication apparatus further includes the memory. Optionally, the communication apparatus further includes a communication interface, and the processor is coupled to the communication interface.

In another implementation, the communication apparatus is a network device. When the communication apparatus is the network device, the communication interface may be a transceiver or an input/output interface. Optionally, the transceiver may be a transceiver circuit. Optionally, the input/output interface may be an input/output circuit.

In still another implementation, the communication apparatus is a chip or a chip system. When the communication apparatus is the chip or the chip system, the communication interface may be an input/output interface, an interface circuit, an output circuit, an input circuit, a pin, a related circuit, or the like on the chip or the chip system. The processor may alternatively be implemented as a processing circuit or a logic circuit.

According to an eighth aspect, a system is provided. The system includes the first communication device and the second communication device.

According to a ninth aspect, a computer program product is provided. The computer program product includes a computer program (which may also be referred to as code or instructions). When the computer program is run, a computer is enabled to perform the method according to any possible implementation of the first aspect, or the computer is enabled to perform the method according to any implementation of the first aspect to the fourth aspect.

According to a tenth aspect, a computer-readable storage medium is provided. The computer-readable storage medium stores a computer program (which may also be referred to as code or instructions). When the computer program is run on a computer, the computer is enabled to perform the method according to any possible implementation of the first aspect, or perform the method according to any implementation of the first aspect to the fourth aspect.

According to an eleventh aspect, a chip system is provided. The chip system may include a processor. The processor is coupled to a memory, and may be configured to perform the method according to any one of the first aspect to the fourth aspect, and any one of the possible implementations of the first aspect to the fourth aspect. Optionally, the chip system further includes a memory. The memory is configured to store a computer program (which may also be referred to as code or instructions). The processor is configured to invoke the computer program from the memory and run the computer program, so that a device provided with the chip system performs the method in any one of the first aspect to the fourth aspect and any possible implementation of the first aspect to the fourth aspect.

According to a twelfth aspect, a processing apparatus is provided. The processing apparatus includes an input circuit, an output circuit, and a processing circuit. The processing circuit is configured to receive a signal through the input circuit, and transmit a signal through the output circuit, so that the method in any one of the first aspect to the fourth aspect and any possible implementation of the first aspect to the fourth aspect is performed.

During a specific implementation process, the processing apparatus may be a chip, the input circuit may be an input pin, the output circuit may be an output pin, and the processing circuit may be a transistor, a gate circuit, a flip-flop, various logic circuits, and the like. The input signal received by the input circuit may be received and input by, for example, but not limited to, a receiver. The signal output by the output circuit may be output to and transmitted by, for example, but not limited to, a transmitter. The input circuit and output circuit may be a same circuit that serves as an input circuit and an output circuit respectively at different *times.* Specific implementations of the processor and the various circuits are not limited in this embodiment of this application.

### BRIEF DESCRIPTION OF DRAWINGS

FIG. 1a is a schematic diagram of an application scenario according to an embodiment of this application;
FIG. 1b is a schematic diagram of an architecture of data transmission between two devices in FIG. 1a;
FIG. 1c shows an example of a possible pipe division solution based on FIG. 1b;
FIG. 1d shows an example of a possible data transmission solution based on FIG. 1a;
FIG. 2a is a schematic diagram of a structure of a block in a 64B/66B encoding format defined in a standard according to an embodiment of this application;
FIG. 2b is a structural form of an idle block according to an embodiment of this application;
FIG. 2c is a structural form of an error block according to an embodiment of this application;
FIG. 2d is a structural form of a low power consumption block according to an embodiment of this application;
FIG. 2e is a schematic diagram of a structure of a frame format of the flex Ethernet protocol according to an embodiment of this application;
FIG. 2f shows a flexible fine granularity (fine granularity basic unit, fgBU) frame format according to an embodiment of this application;
FIG. 2g is a schematic diagram of a structure of a block used to carry overhead information in the frame structure in FIG. 2f;
FIG. 2h is a schematic diagram of a possible correspondence table between a fine granularity service and a sub-slot according to an embodiment of this application;
FIG. 3a is a schematic flowchart of a possible communication method according to an embodiment of this application;
FIG. 3b is an effect diagram of a data transmission solution;
FIG. 3c is an effect diagram of a data transmission solution to which a solution provided in an embodiment of this application is applied;
FIG. 4 is a schematic diagram of four types of bandwidths according to an embodiment of this application;

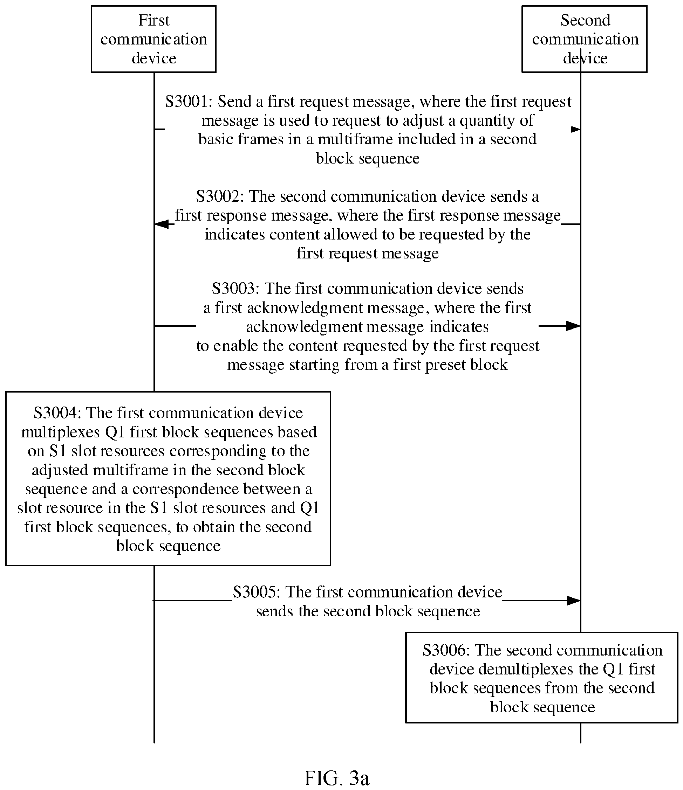

FIG. 5a-1 and FIG. 5a-2 are a schematic flowchart of another possible implementation of steps S3005 and S3006 in FIG. 3a;

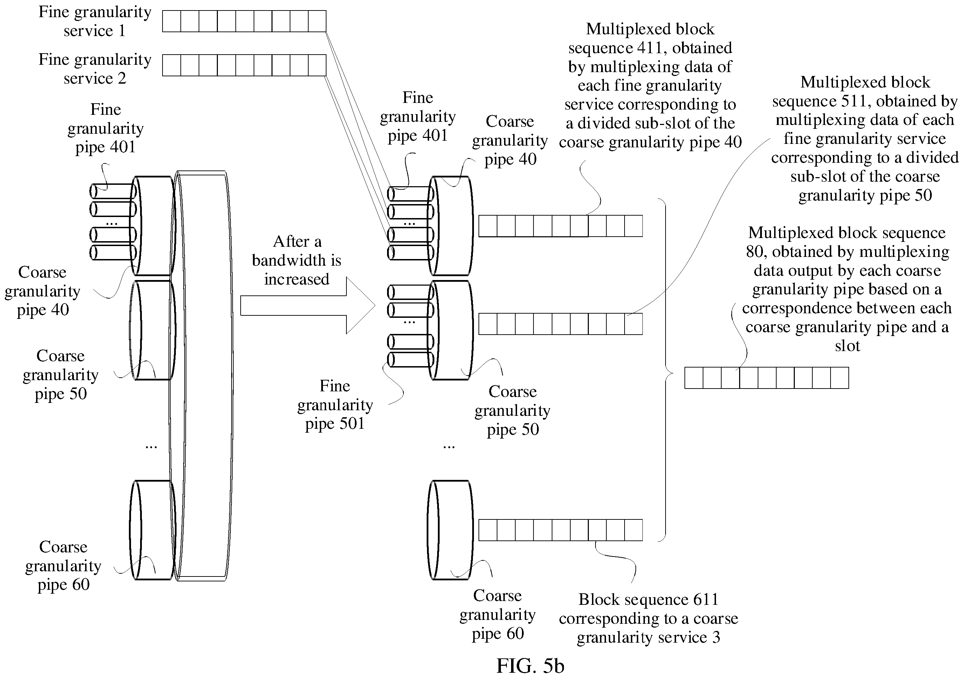

FIG. 5b is an effect diagram of a data transmission solution;

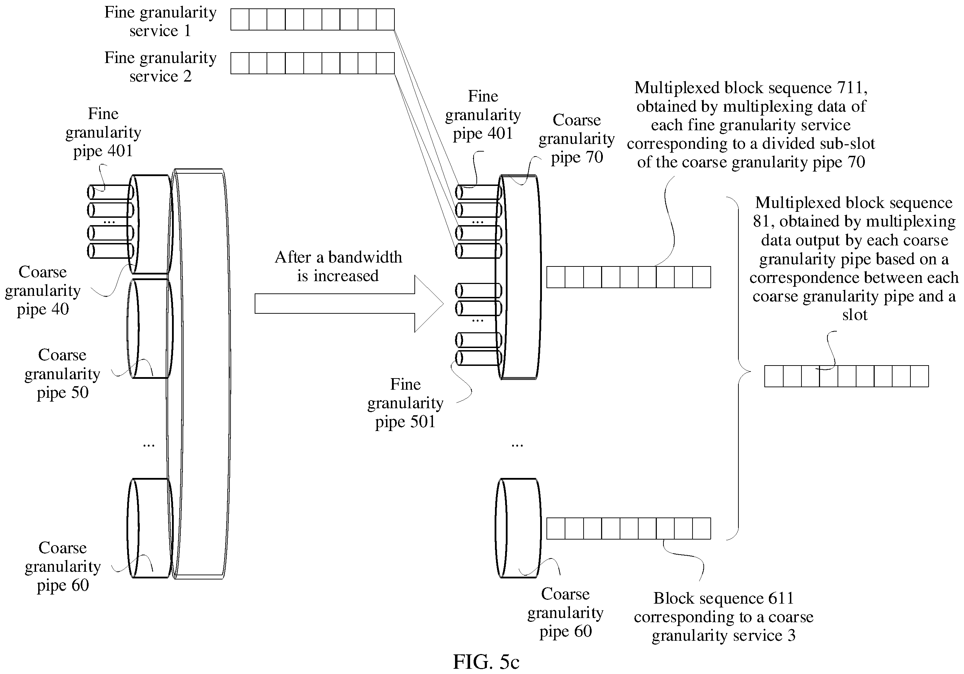

FIG. 5c is a schematic diagram of a possible effect shown after the method shown in FIG. 5a-1 and FIG. 5a-2 is applied;

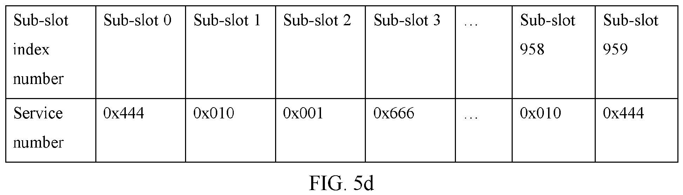

FIG. 5d is a schematic diagram of a correspondence table between a fine granularity service and a sub-slot that corresponds to the coarse granularity pipe 70 in FIG. 5c and that occurs after a bandwidth is increased;

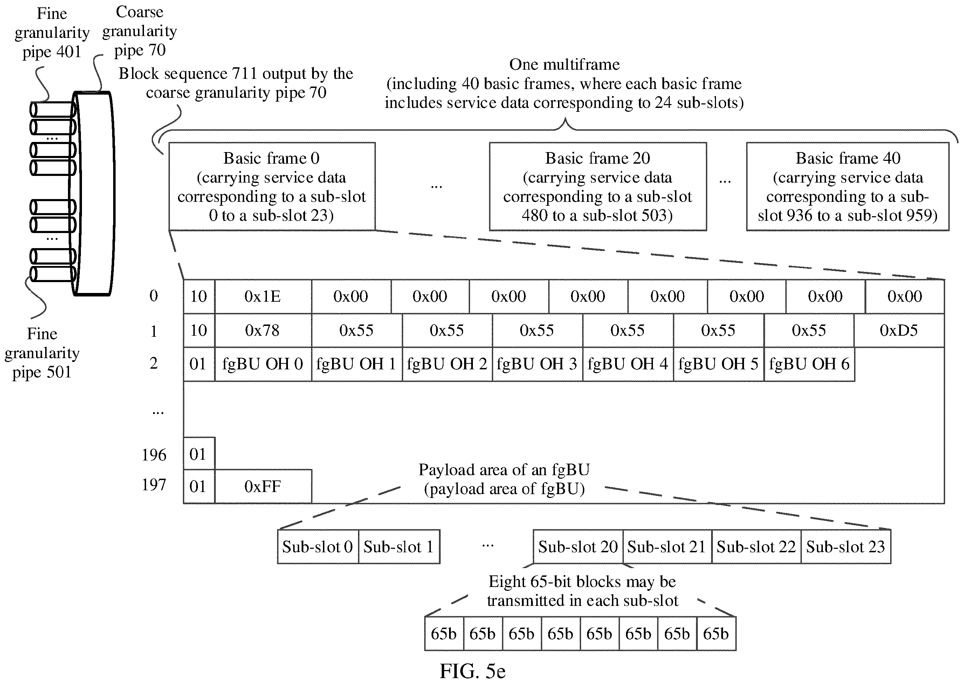

FIG. 5e is a frame format of a block sequence output by the coarse granularity pipe 70 in FIG. 5c;

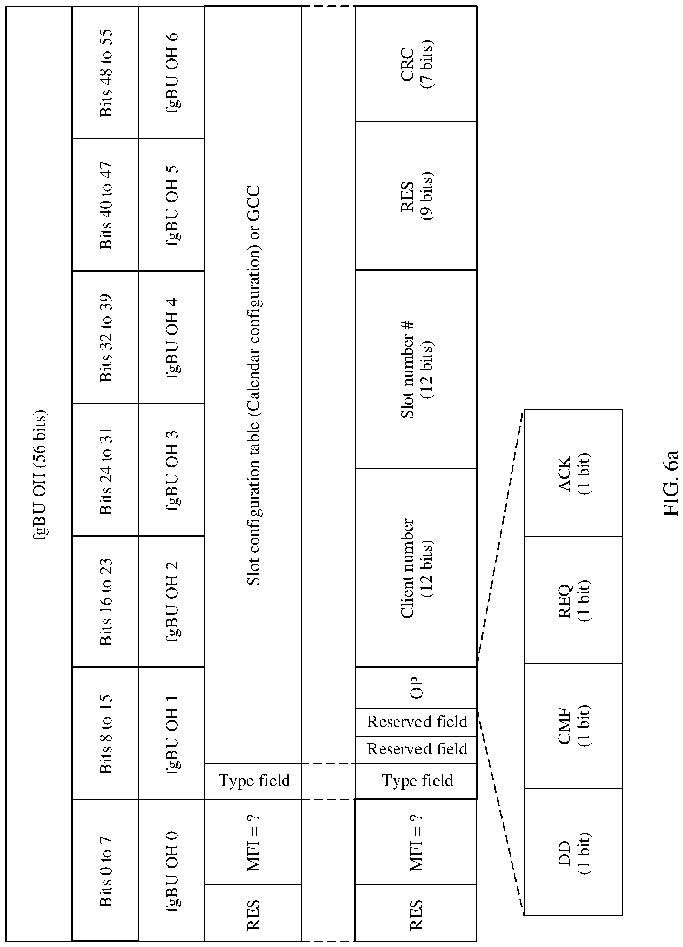

FIG. 6a is a schematic diagram of a structure of a block used to carry overhead information in a multiframe in a second block sequence according to an embodiment of this application;

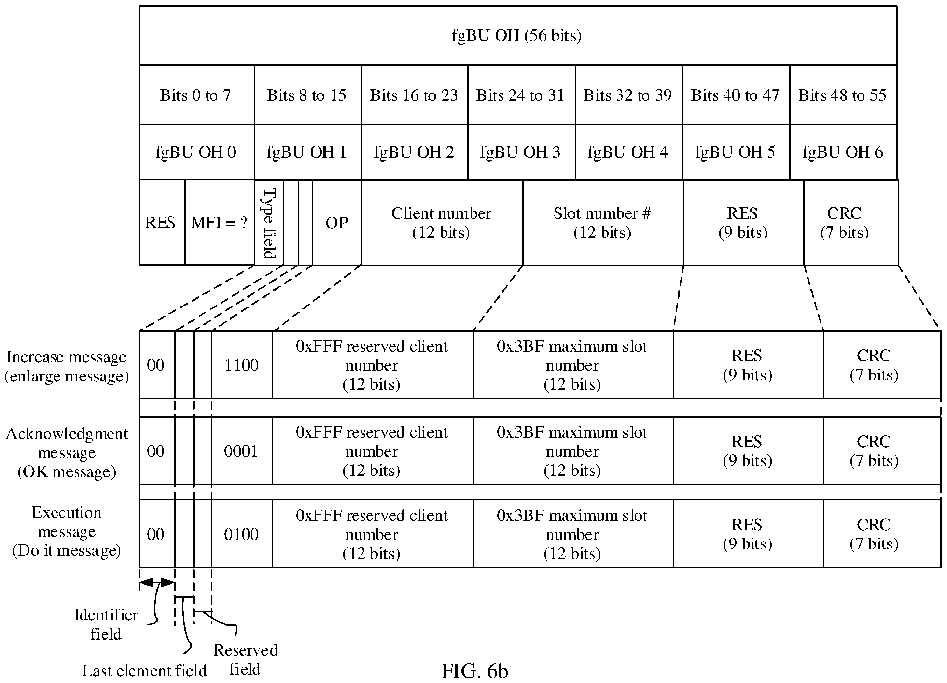

FIG. 6b is a schematic diagram of possible formats of an enlarge message, an OK message, and a Do it message according to an embodiment of this application;

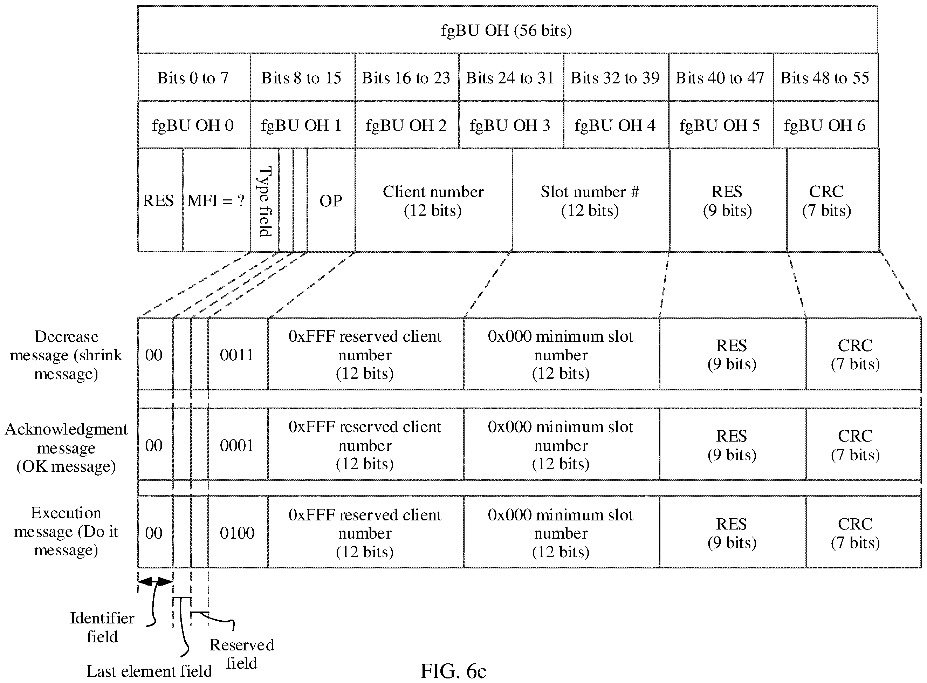

FIG. 6c is a schematic diagram of possible formats of a shrink message, an OK message, and a Do it message according to an embodiment of this application;

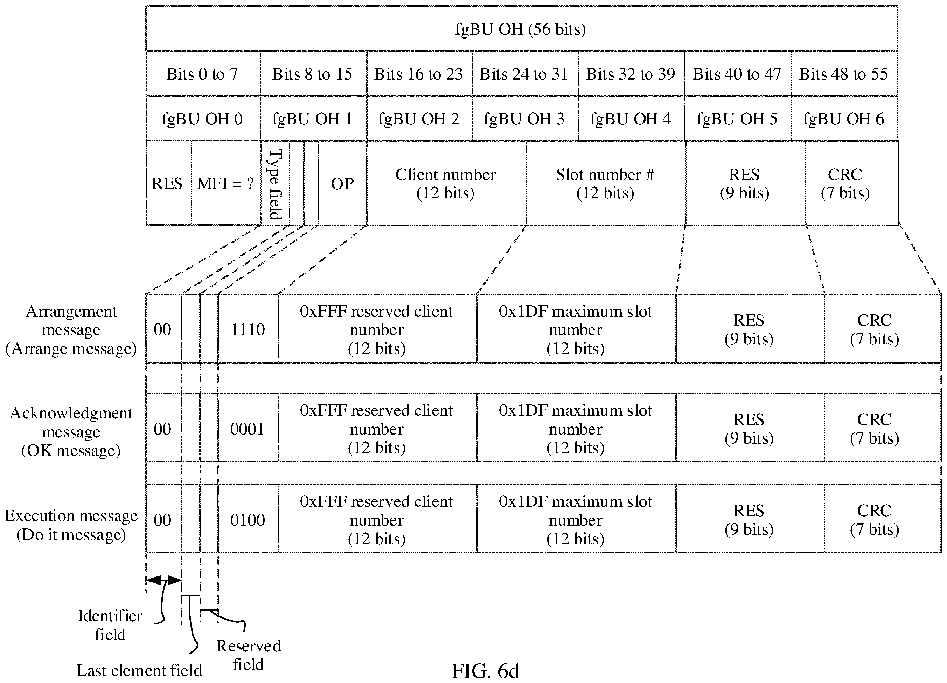

FIG. 6d is a schematic diagram of possible formats of an arrange message, an OK message, and a Do it message according to an embodiment of this application;

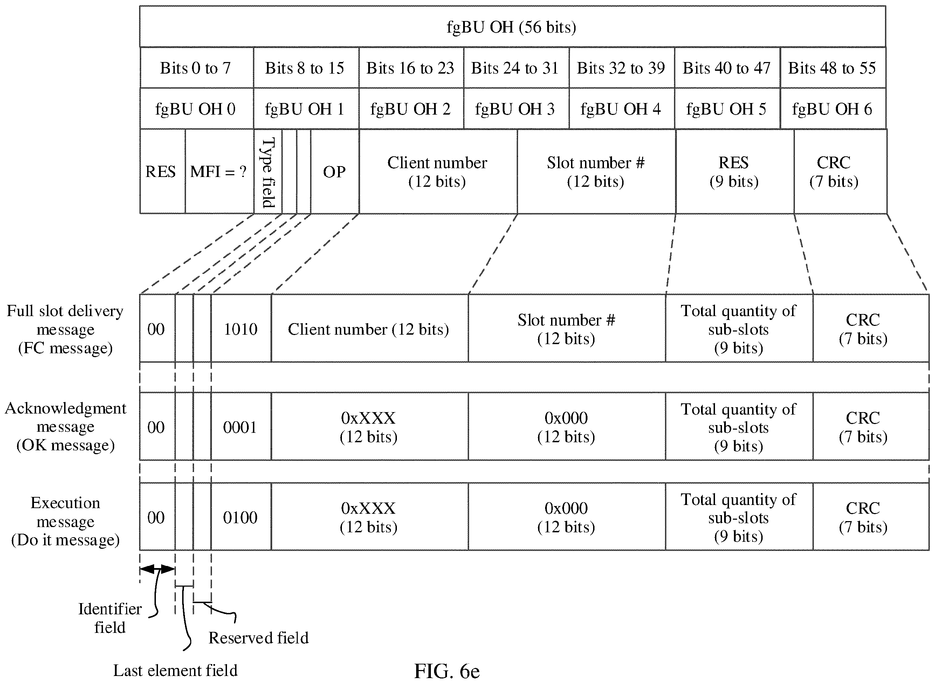

FIG. 6e is a schematic diagram of possible formats of an FC message, an OK message, and a Do it message according to an embodiment of this application;

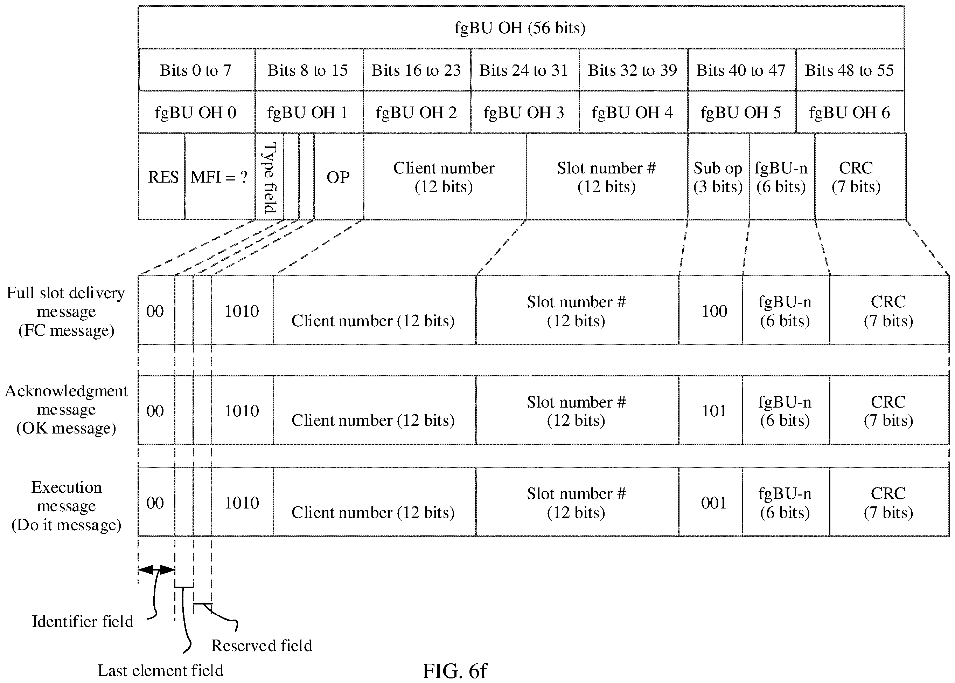

FIG. 6f is a schematic diagram of possible formats of an FC message, an OK message, and a Do it message according to an embodiment of this application;

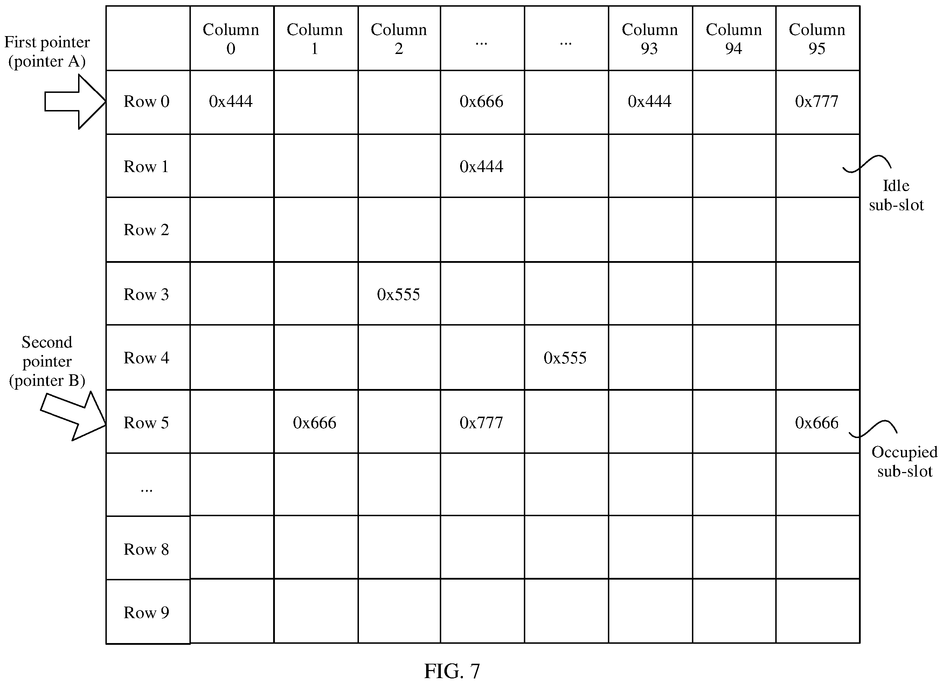

FIG. 7 is a distribution table of a possible correspondence between a sub-slot and a client according to an embodiment of this application;

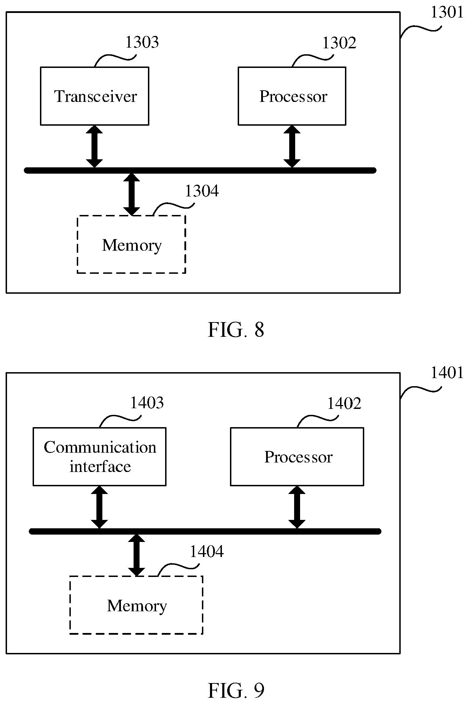

FIG. 8 is a schematic diagram of a structure of a communication apparatus according to an embodiment of this application;
FIG. 9 is a schematic diagram of a structure of a communication apparatus according to an embodiment of this application; and

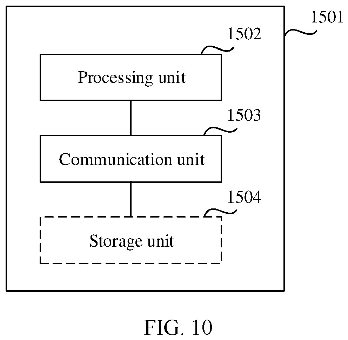

FIG. 10 is a schematic diagram of a communication apparatus according to an embodiment of this application.

### DESCRIPTION OF EMBODIMENTS

It should be understood that, the technical solutions in embodiments of this application may be applied to various communication systems, for example, a communication system based on an Ethernet technology in the fields of mobile bearer fronthaul or backhaul, metropolitan multi-service bearing, data center interconnection, industrial communication, and the like, and a communication system between different components or modules in an industrial device or a communication device.

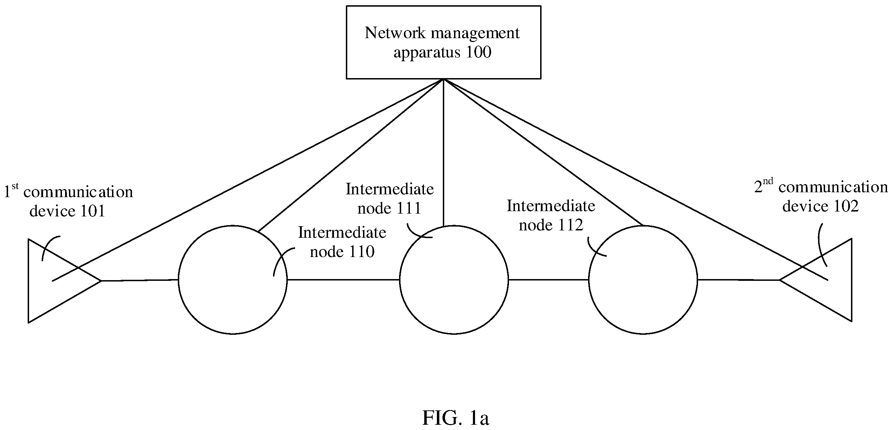

FIG. 1a is a schematic diagram of an example of an application scenario according to an embodiment of this application. The following describes the application scenario in this embodiment of this application with reference to an accompanying drawing.

As shown in FIG. 1a, there is a network management apparatus 100, a 1^{st} communication device 101, a 2^{nd} communication device 102, and several intermediate nodes shown in FIG. 1a, such as an intermediate node 110, an intermediate node 111, and an intermediate node 112. Any one of the network management apparatus 100, the 1^{st} communication device 101, the 2^{nd} communication device 102, and the intermediate node may be a network device, or a chip disposed in the network device. Any one of the network management apparatus 100, the 1^{st} communication device 101, the 2^{nd} communication device 102, and the intermediate node may be a network device that supports a high-speed Ethernet interface (for example, 200G or 400G). Any one of the network management apparatus 100, the 1^{st} communication device 101, the 2^{nd} communication device 102, and the intermediate node includes but is not limited to: a core router, an edge router, an optical transport network (Optical Transport Network, OTN) transmission device, an OTN optical service unit (Optical Service Unit, OSU), and an internet protocol radio access network (Internet Protocol Radio Access Network, IPRAN) and a packet transport network (Packet Transport Network, PTN) box-shaped or frame-shaped switch device that are both applied to a specific scenario.

As shown in FIG. 1a, the network management apparatus 100 may be configured to deliver some control or management information to each node, for example, may deliver bandwidth adjustment information of a service (a coarse granularity service and/or a fine granularity service mentioned in the following). The 1^{st} communication device 101 and the 2^{nd} communication device 102 may transmit data to each other via the intermediate node.

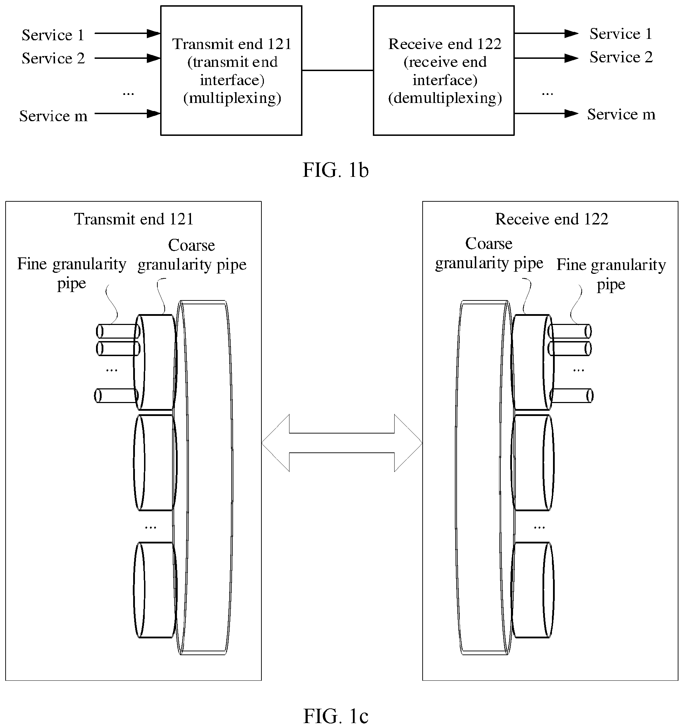

Any one of the 1^{st} communication device 101, the intermediate node, and the 2^{nd} communication device 102 in FIG. 1a may include a sending module and a receiving module. In other words, any one of the 1^{st} communication device 101, the intermediate node, and the 2^{nd} communication device 102 may be used as a transmit end 121 in FIG. 1b, or may be used as a receive end 122 in FIG. 1b in some cases. To be specific, a solution that can be applied to the transmit end 121 and that is provided in this embodiment of this application may be applied to any one of the 1^{st} communication device 101, the intermediate node, and the 2^{nd} communication device 102 in FIG. 1a, and a solution that can be applied to the receive end 122 and that is provided in this embodiment of this application may also be applied to any one of the 1^{st} communication device 101, the intermediate node, and the 2^{nd} communication device 102 in FIG. 1a. To describe this embodiment of this application more clearly, the following uses an example in which the 1^{st} communication device 101 in FIG. 1a transmits data to the 2^{nd} communication device 102 via the intermediate node.

FIG. 1b is a schematic diagram of an example of an architecture of data transmission between the two devices in FIG. 1a. As shown in FIG. 1b, the solution in this embodiment of this application may be applied between device interfaces between the transmit end 121 and the receive end 122, for example, applied between interfaces of the transmit end and the receive end. In this embodiment of this application, one or more services (for example, a service 1, a service 2, ..., a service m in FIG. 1b) may be multiplexed at the transmit end, multiplexed data is transmitted to the receive end 122, and the receive end 122 demultiplexes the multiplexed data, to restore each service. In this embodiment of this application, a service between the transmit end 121 and the receive end 122 may be dynamically adjusted, for example, a new service is added, a service is deleted, a service bandwidth is increased, or a service bandwidth is decreased. In this embodiment of this application, each of the transmit end interface and the receive end interface may be a FlexE interface, an OTN interface, an Ethernet interface, or the like, or a pipe obtained by dividing these interfaces.

FIG. 1c shows an example of a possible pipe division solution based on FIG. 1b. As shown in FIG. 1c, the interfaces of the transmit end 121 and the receive end 122 are divided into pipes. In embodiments of this application, two nouns are defined: a coarse granularity pipe and a fine granularity pipe. The coarse granularity pipe and the fine granularity pipe are relative to each other. One coarse granularity pipe may be divided into at least two fine granularity pipes, and a bandwidth of the coarse granularity pipe is greater than a bandwidth of the fine granularity pipe. In this embodiment of this application, slot allocation of MTN/FlexE is at a granularity of 5 Gbps, and an MTN/FlexE channel with a slot granularity of 5 Gbps is referred to as a coarse granularity pipe. An Ethernet high quality leased line technology provides a pipe bandwidth with a finer granularity based on the MTN/FlexE technology. A pipe with a finer granularity provided in the Ethernet high quality leased line technology may be referred to as a fine granularity pipe, which is used to carry one or more fine granularity services.

The fine granularity service in this embodiment of this application may be relative to the coarse granularity service. The fine granularity service may be a service whose bandwidth is less than a coarse granularity pipe bandwidth. For example, a service whose bandwidth requirement is 10 Mbps or 100 Mbps may be referred to as a fine granularity service. In this embodiment of this application, a node that needs to multiplex or demultiplex the fine granularity service is referred to as a fine granularity node, and a node that needs to multiplex or demultiplex the coarse granularity service is referred to as a coarse granularity node. A node on one transmission path may be a fine granularity node, or may not be a fine granularity node.

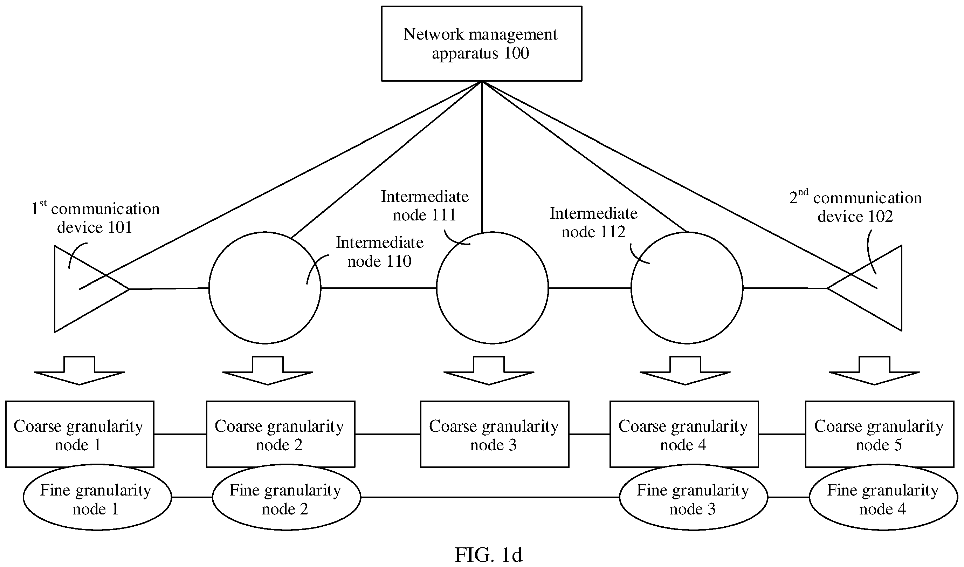

FIG. 1d shows an example of a possible data transmission solution based on FIG. 1a. As shown in FIG. 1d, the 1^{st} communication device 101 functions as the transmit end 121, multiplexes a fine granularity service carried on a coarse granularity pipe, remultiplexes multiplexed data and a service on another coarse granularity pipe, and sends multiplexed coarse granularity service to the intermediate node 110 (in this case, the intermediate node 110 functions as the receive end 122). It can be learned that the 1^{st} communication device 101 belongs to both a coarse granularity node and a fine granularity node. The intermediate node 110 demultiplexes the received data once to obtain data corresponding to each coarse granularity pipe, and the intermediate node 110 further demultiplexes the data corresponding to each coarse granularity pipe again to obtain a fine granularity service. It can be seen that the intermediate node 110 is both a coarse granularity node and a fine granularity node.

Further, the intermediate node 110 in FIG. 1d functions as the transmit end 121, and multiplexes a fine granularity service carried on a coarse granularity pipe, remultiplexes multiplexed data and a service on another coarse granularity pipes, and sends remultiplexed data to the intermediate node 111 (in this case, the intermediate node 111 functions as the receive end 122). The intermediate node 111 demultiplexes the received data once to obtain data corresponding to each coarse granularity pipe. The intermediate node 111 does not need to demultiplex data corresponding to a coarse granularity pipe 1 again, in other words, does not need to obtain each fine granularity service, but directly sends the data corresponding to each coarse granularity pipe to the intermediate node 112. It can be seen that the intermediate node 111 is only a coarse granularity node, and is not a fine granularity node. The following is similar to that described above, and details are not described again.

It can be seen from the content shown in FIG. 1d that, in a fine granularity pass-through mode, the coarse granularity node is not aware of existence of the fine granularity service, and only forwards the service of the coarse granularity pipe, for example, functions as the intermediate node 111 of a coarse granularity node 3. In a fine granularity switch mode, the coarse granularity node is aware of existence of the fine granularity service, and demultiplexes (or may be referred to as decapsulates) the fine granularity service for forwarding, for example, functions as the 1^{st} communication device 101 between a coarse granularity node 1 and a fine granularity node 1, the intermediate node 110 between a coarse granularity node 2 and a fine granularity node 2, the intermediate node 112 between a coarse granularity node 4 and a fine granularity node 3, and the 2^{nd} communication device 102 between a coarse granularity node 5 and a fine granularity node 4. In a possible implementation, for a coarse granularity node, there may be three-end links, for example, three links between the coarse granularity node 1 and the coarse granularity node 2, three links between the coarse granularity node 2 and the coarse granularity node 3, three links between the coarse granularity node 3 and the coarse granularity node 4, and three links between the coarse granularity node 4 and the coarse granularity node 5. For a fine granularity node, there may be only one end-to-end link, for example, a link between the fine granularity node 1 and the fine granularity node 4. It should be noted that, adjustment of a total bandwidth of the fine granularity pipe occurs only between a first node of each coarse granularity link, for example, between the coarse granularity node 1 and the coarse granularity node 2, between the coarse granularity node 2 and the coarse granularity node 4, and between the coarse granularity node 4 and the coarse granularity node 5. In addition, adjustment of the total bandwidth of the fine granularity pipe occurs only between adjacent nodes of fine granularities, for example, between the fine granularity node 1 and the fine granularity node 2, between the fine granularity node 2 and the fine granularity node 3, and between the fine granularity node 3 and the fine granularity node 4.

It should be noted that the solution provided in this embodiment of this application is applicable to a case in which there is only a coarse granularity pipe, that is, the coarse granularity pipe is not divided into fine granularity pipes. The solution is further applicable to a case in which there is a coarse granularity pipe and a fine granularity pipe. This is not limited in this embodiment of this application. For ease of the following description, the following is described by using the case in which there is a coarse granularity pipe and a fine granularity pipe.

The following explains some nouns and terms in embodiments of this application.

### (1) block.

One block mentioned in embodiments of this application is one bit or a plurality of consecutive bits, and information carried in one block may be information carried in a bit included in the block. The block in embodiments of this application may also have another replaceable name, for example, may be replaced with a data unit, or may be replaced with a flit. The flit may be translated into flow control unit in some scenarios. It should be noted that some embodiments described by using the block as an example in embodiments of this application are also applicable to a flit scenario.

The block in embodiments of this application may include two types: a data type block and a control type block. A bit in the data type block may be used to carry an actual data payload, and a bit in the control type block may be used to carry control information.

The control type block may be further divided into a plurality of types of blocks, for example, a header block, a tail block, an idle block, an operations, administration, and maintenance block, an error block, and a low power consumption block.

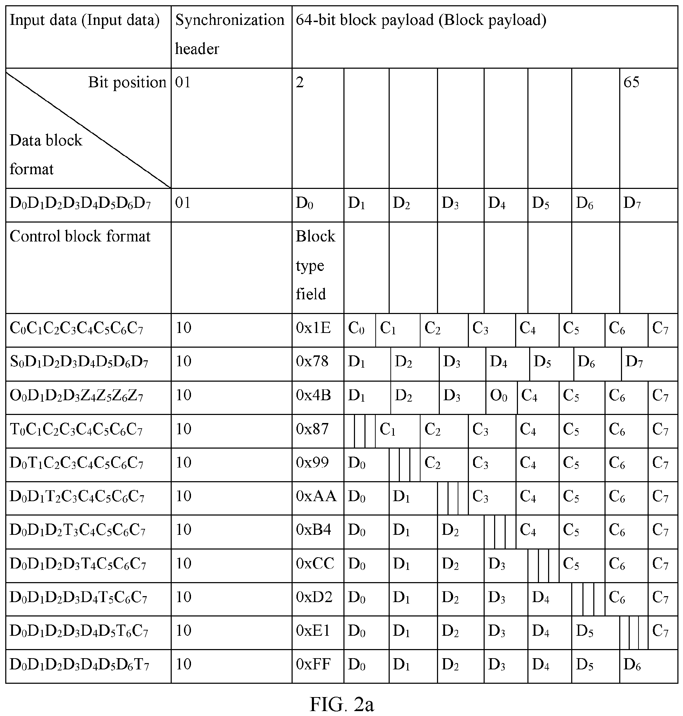

FIG. 2a is a schematic diagram of an example of a structure of a block in a 64B/66B encoding format defined in a standard. As shown in FIG. 2a, the block is defined in the IEEE Std 802.3-2018, IEEE Standard for Ethernet SECTION SIX standard. As shown in FIG. 2a, a synchronization header area of a block includes a 0^{th} bit and a 1^{st} bit of the block, and the synchronization header area of the block includes two cases: 01 and 10. A block whose synchronization header is 01 is referred to as a data block, and the data block may be written as a D block. A block whose synchronization header is 10 is referred to as a control block. A field D0 of the control block occupies 8 bits, and may be referred to as a type field (the type field may be written as a type field) of the control block.

The control block may include a header block, a tail block, an ordered set block (which may also be written as an O block), an idle block (which may also be written as an idle block), an error block (which may also be written as an error block), a low power consumption block, and the like. In this embodiment of this application, a header block is a block whose synchronization header is 10 and type field is 0x78 in FIG. 2a, and may be written as an S block. In this embodiment of this application, a tail block may be written as a T block, including blocks whose synchronization header is 10 and type fields are 0x87, 0x99, 0xAA, 0xB4, 0xCC, 0xD2, 0xE1, or 0xFF in FIG. 2a. In this embodiment of this application, an O block is a block whose synchronization header is 10 and type field is 0x4B in FIG. 2a. In this embodiment of this application, a control block other than the S block and the T block in the control block may be written as a C block.

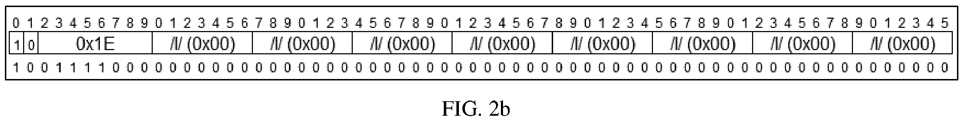

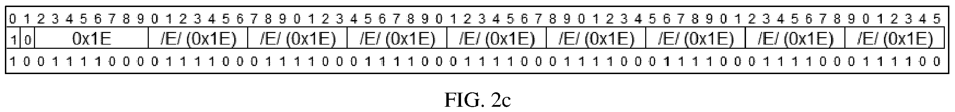

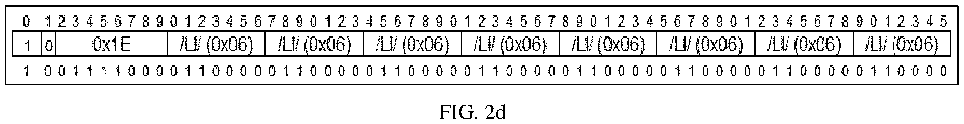

FIG. 2b is an example of a structural form of an idle block. FIG. 2c is an example of a structural form of an error block. FIG. 2d is an example of a structural form of a low power consumption block. As shown in FIG. 2b, FIG. 2c, and FIG. 2d, synchronization header areas of the idle block, the error block, and the low power consumption block are all 10, and other content is shown in the figures. Blocks in embodiments of this application are described by using the structural form of the block in FIG. 2a as an example. However, embodiments of this application are also applicable to a block form defined in another standard, for example, 8B/10B or 256B/257B.

### (2) block sequence.

In embodiments of this application, a data stream formed in a unit of a block is referred to as a block sequence, for example, a first block sequence and a second block sequence in embodiments of this application. The block sequence in embodiments of this application may also have another name, for example, may be referred to as a block stream. The name is not specifically limited in embodiments of this application.

In one block sequence in the "first block sequence", the "second block sequence", a "third block sequence", and a "fourth block sequence" in embodiments of this application, there may be a plurality of forms of one segment of consecutive blocks in the block sequence, for example, as shown in the following:
... SDDDD ...
... DDDDD ...
... DDDT ...
... DDDTI ...
... TIIISDDD ...
... TOS ...
... TIOS ...

In the foregoing examples, S represents a header block, D represents a data block, T represents a tail block, I represents an idle block, and O represents an O block. It can be learned from the foregoing example that the block sequence in embodiments of this application may include a plurality of block types, for example, an S block, a D block, and a T block. For another example, the block sequence further includes an I block and an O block. A specific quantity of blocks is not limited. Only a possible existence form of one segment of consecutive blocks in one block sequence in embodiments of this application is described.

### (3) Frame format of the flex Ethernet protocol.

The following uses an example in which a FlexE channel with a slot granularity of 5 Gbps is used as a coarse granularity pipe. It should be noted that, in embodiments of this application, a bandwidth of one coarse granularity pipe is not limited to 5 Gbps, for example, may be 6 Gbps or 7 Gbps.

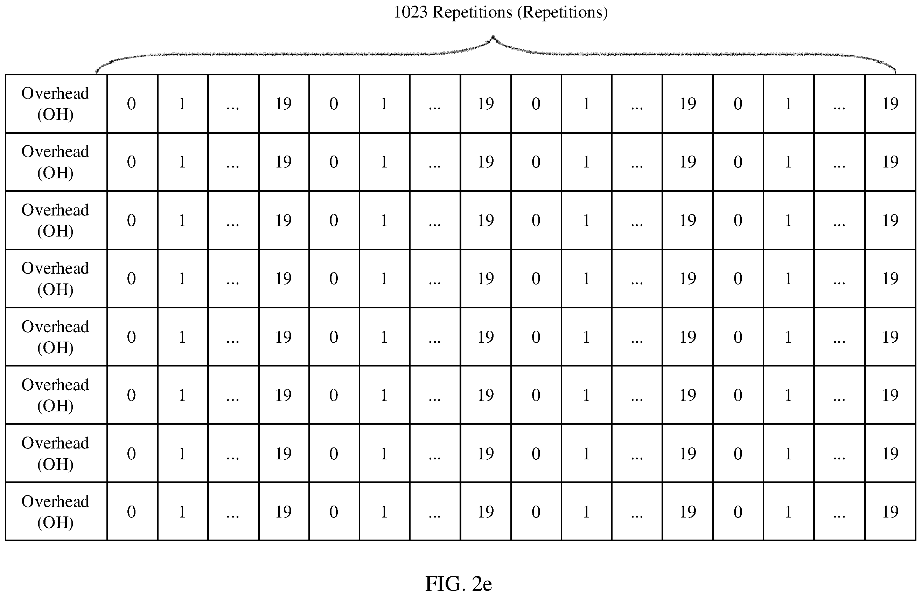

FIG. 2e is a schematic diagram of an example of a structure of a frame format of the flex Ethernet protocol according to an embodiment of this application. A frame format in a block sequence 1211 output by the transmit end 121 in FIG. 1d may be a frame format of the flex Ethernet protocol. As shown in FIG. 2e, a fixed frame format may be constructed on physical interface transmission based on the flex Ethernet protocol, and slot division based on time division multiplexing (Time Division Multiplexing, TDM) is performed. For a 100 GE PHY interface, a data block sequence may include a 64B/66B block with a cycle of 20 and correspond to 20 slots. Each slot has a bandwidth of 5 Gbps, and is referred to as one slot (slot).

As shown in FIG. 2e, the flex Ethernet protocol may construct a structure of a time division multiplexing frame based on the 64B/66B blocks. Data on each PHY in the FlexE is aligned by periodically inserting a FlexE overhead (OH) block. For example, one 66B overhead block FlexE OH may be inserted at an interval of 1023×20 66B payload data blocks.

As shown in FIG. 2e, 66B blocks in eight rows (each row includes one OH block and 1023×20 data (Data) blocks) form one protocol frame (a protocol frame may also be referred to as a basic frame, a primary frame, a single frame, or the like, and may be written as a basic frame, a single frame, or the like in English) of the flex Ethernet protocol. This name may be selected based on an actual requirement and is not specifically limited in embodiments of this application. It should be noted that, the frame herein may not mean an Ethernet media access control (Medium Access Control, MAC) frame, but one segment of data code streams in a specific format, as shown in FIG. 2e. 32 protocol frames of the flex Ethernet protocol form one multiframe of the flex Ethernet protocol. In embodiments of this application, the multiframe may also be written as multi frame in English. This name may be selected based on an actual requirement and is not specifically limited in embodiments of this application.

In a possible implementation solution, in a 1^{st} OH block in the protocol frame of the flex Ethernet protocol, a 0x4B field in bits 0 to 7 and a 0x5 field in bits 32 to 35 jointly form a frame header indication mark field of the FlexE overhead block. For OH in the FlexE OH, two management channels may be defined. The management channel may be used to run a management communication link of 1.2 Mbps and an OAM communication link of 1.8 Mbps of the Ethernet protocol that are coded based on a 64B/66B block sequence. Further, in embodiments of this application, 64B/66B coding may be used in a scenario of a 100 GE physical layer.

ITU-T MTN reuses a structure of the FlexE frame. Therefore, a frame structure of the ITU-T MTN is the same as that of the FlexE.

### (4) Flexible fine granularity (fine granularity basic unit, fgBU) frame format.

In embodiments of this application, one coarse granularity pipe is divided, to obtain at least two fine granularity pipes. A bandwidth of one fine granularity pipe is less than a bandwidth of a coarse granularity pipe to which the fine granularity pipe belongs. Embodiments of this application use an example in which one coarse granularity pipe is 5 Gbps and one fine granularity pipe is 10 Mbps. Bandwidths corresponding to two coarse granularity pipes may be equal or unequal. Bandwidths of any two fine granularity pipes obtained by dividing one coarse granularity pipe may be equal or unequal. To describe embodiments of this application more clearly, the following uses an example in which a bandwidth of each coarse granularity pipe is 5 Gbps and a bandwidth of each fine granularity pipe is 10 Mbps. One slot corresponding to one coarse granularity pipe may be divided into 480 sub-slots, and a correspondence between the 480 sub-slots and fine granularity services may be further established, so that data of each fine granularity service may be multiplexed based on the correspondence.

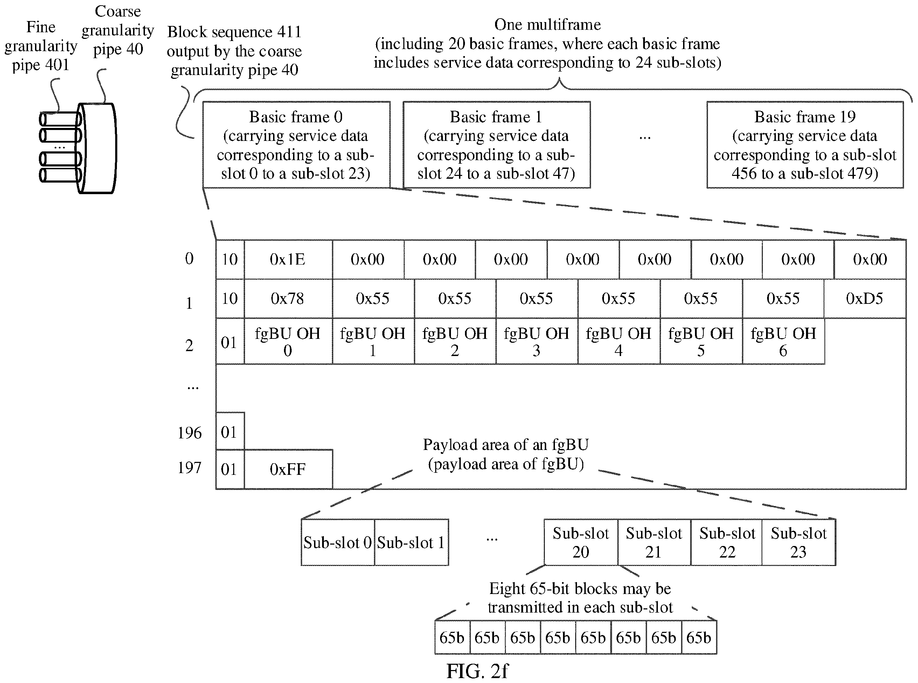

FIG. 2f shows an example of a flexible fine granularity (fine granularity basic unit, fgBU) frame format according to an embodiment of this application. A block sequence output by a coarse granularity pipe 40 is obtained by multiplexing data on a plurality of fine granularity pipes, that is, a frame format of a block sequence 411 output by the coarse granularity pipe 40 may be referred to as an fgBU frame format. As shown in FIG. 2f, the coarse granularity pipe 40 is divided into 480 fine granularity pipes 401, and one fine granularity pipe corresponds to one sub-slot. Fine granularity services are multiplexed based on a correspondence between the sub-slot and the fine granularity service, to obtain a multiplexed block sequence (the block sequence output by the coarse granularity pipe 40 in the figure).

The block sequence obtained by multiplexing the fine granularity services includes at least one multiframe. One multiframe includes 20 basic frames (for example, a basic frame 0 to a basic frame 19 in FIG. 2f). One basic frame includes 24 sub-slot resources. One multiframe may include all 480 sub-slot resources of one coarse granularity pipe. The basic frame in embodiments of this application may also be referred to as a fine granularity basic unit (Fine Granularity Basic Unit, fgBU) or a fine granularity basic frame.

As shown in FIG. 2f, a frame structure of the basic frame may include one S block, 195 D blocks, and one T block, and a total length of the basic frame is 197 66b blocks. A 1^{st} data block following the S block carries overhead information. Locations that can carry the overhead information are 7 bits × 8 bits = 56 bits in total. In 24 sub-slot resources included in a single basic frame, eight 65-bit blocks may be transmitted on one sub-slot resource.

### (6) A structure of a block used to carry overhead information in a frame structure that corresponds to data carried in a fine granularity pipe.

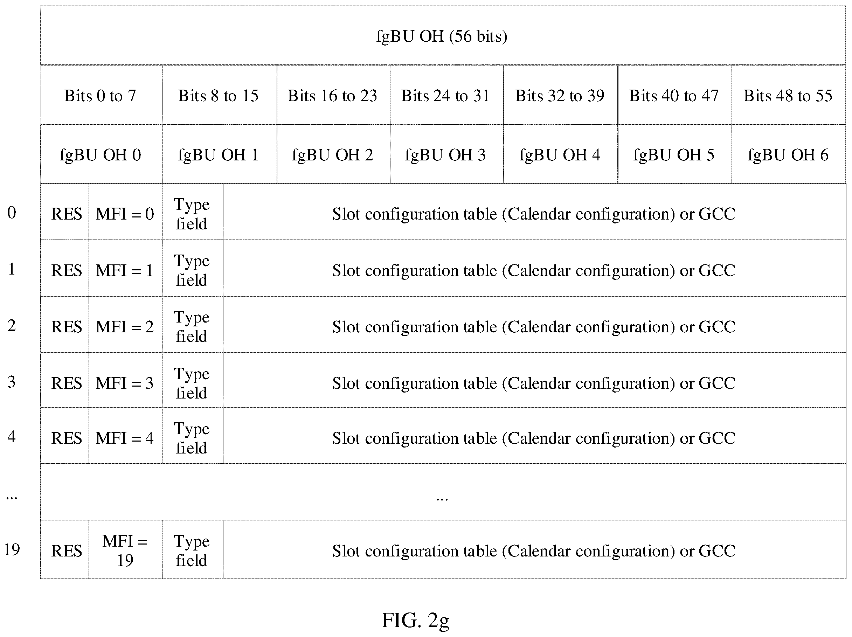

FIG. 2g is a schematic diagram of a structure of a block used to carry overhead information in the frame structure in FIG. 2f. As shown in FIG. 2g, in a 5 Gbps pipe, one multiframe includes 20 basic frames. A 1^{st} data block following an S block in each basic frame may be used to carry the overhead information, and one multiframe may include 20 blocks used to carry the overhead information. Overhead (overhead may be overhead, and may be abbreviated as OH) information on one block may occupy 56 bits. 2 bits are reserved (reserved, RES); and a multiframe indication (Multi-Frame-Indication, MFI) uses 6 bits (0 to 19 bits are used in the 5 Gbps pipe, and a remaining value is reserved. In remaining 48 bits, a type (type) is used to distinguish a generic communication channel (Generic communication channel, GCC)) and bandwidth adjustment. The type (type) is 2 bits. When type = 0b11, it indicates that the following fields are used for GCC communication. When type = 0b00, it indicates that the following fields carry bandwidth adjustment information. Certainly, these fields can also be used for another purpose.

### (7) Correspondence table between a fine granularity service and a sub-slot.

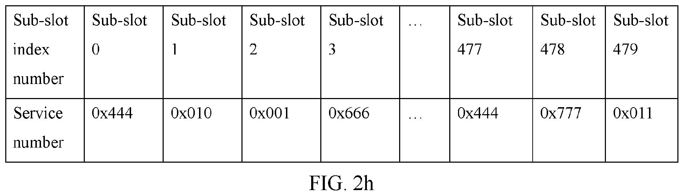

FIG. 2h is a schematic diagram of an example of a possible correspondence table between a fine granularity service and a sub-slot. As shown in FIG. 2h, one 5 Gbps slot may be divided into 480 sub-slots: a sub-slot 0 to a sub-slot 479. Slot resources in the 480 sub-slots may be allocated to services based on a bandwidth requirement of the service. For example, in FIG. 2h, the sub-slot 0 and the sub-slot 477 are allocated to a service whose service number is 0x444. For another example, in FIG. 2h, the sub-slot 1 is allocated to a service whose service number is 0x010.

The service in embodiments of this application may be understood as a client, or may be referred to as a client. Because a bandwidth occupied by the service is relatively small, the service may be referred to as a fine granularity service, a fine granularity client, or the like. The service number may also be understood as a service identifier, a client identifier, or the like, or may be understood as an index number of the service, provided that the service number can indicate the service. In embodiments of this application, each of a sub-slot and a slot belong to a slot resource, which may be written as slot in English. In embodiments of this application, each of a total sub-slot index number or a total slot index number may be understood as an identifier of a slot resource, which indicates the slot resource.

Based on the foregoing content, FIG. 3a is a schematic flowchart of an example of a possible communication method. The method is applicable to a first communication device and a second communication device. The first communication device and the second communication device may be any two nodes of the communication device 101, the intermediate node 110, the intermediate node 111, the intermediate node 112, and the 2^{nd} communication device 102 shown in FIG. 1a. To describe this embodiment of this application more clearly, the following uses an example in which the first communication device is the transmit end 121 in FIG. 1c and the second communication device is the receive end 122 in FIG. 1c. As shown in FIG. 3a, the method includes the following steps.

Step S3001: The first communication device sends a first request message. The first request message is used to request to adjust a quantity of basic frames in a multiframe included in a second block sequence.

Correspondingly, the second communication device receives the first request message.

In a possible implementation, before the sending a first request message, the first communication device may determine that a bandwidth of a pipe used to carry the second block sequence needs to be adjusted. For example, before the sending a first request message, the first communication device may receive pipe bandwidth adjustment information delivered by a network management apparatus. In a possible implementation, when the first communication device determines that the bandwidth of the pipe used to carry the second block sequence needs to be increased, the quantity of basic frames in the multiframe included in the second block sequence may be increased. When the first communication device determines that the bandwidth of the pipe used to carry the second block sequence needs to be decreased, the quantity of basic frames in the multiframe included in the second block sequence may be decreased.

For example, the sending a first request message, the first communication device receives the following information delivered by the network management apparatus: The bandwidth of the pipe used to carry the second block sequence is increased from 5 Gbps to 10 Gbps. If one 5 Gbps is divided into 480 slot resources, it may be determined that an increased bandwidth includes 960 slot resources. If one basic frame includes 24 slot resources, it may be determined that the quantity of basic frames included in one multiframe needs to be increased from 20 to 40.

In a possible implementation, the first communication device may indicate, to the second communication device, a quantity of basic frames included in one specifically adjusted multiframe. In still another possible implementation, the first communication device may not indicate, to the second communication device, a quantity of basic frames included in one adjusted multiframe, but the network management apparatus delivers the pipe bandwidth adjustment information to the second communication device. In this case, the first communication device and the second communication device each follow a specific rule to determine the quantity of basic frames included in the adjusted multiframe.

In this embodiment of this application, the information used to request to adjust the quantity of basic frames in the multiframe included in the second block sequence may alternatively be: information indicating to request to adjust a quantity of slot resources in the multiframe included in the second block sequence, or information indicating to request to adjust a length of the multiframe included in the second block sequence.

Step S3002: The second communication device sends a first response message. The first response message indicates content allowed to be requested by the first request message.

Correspondingly, the first communication device receives the first response message.

The first response message may also be referred to as an OK message or an ACK message. In this embodiment of this application, the OK message may be further written as an acknowledgment message. The ACK message in this embodiment of this application may be further written as an acknowledgment message.

Step S3003: The first communication device sends a first acknowledgment message. The first acknowledgment message indicates to enable the content requested by the first request message starting from a first preset block.

Correspondingly, the second communication device receives the first acknowledgment message.

The first acknowledgment message may be referred to as a Do it message or a CMT message. In this embodiment of this application, the Do it message may be further written as an execution message, and the CMT message in this embodiment of this application may be further written as an execution message.

In a possible implementation, the first communication device may send a Do it message three times, and change the length of the multiframe in the second block sequence (which may also be understood as generating the multiframe based on a quantity of basic frames included in the adjusted multiframe that is indicated in the first request message) starting from a next multiframe boundary in a block sequence following the three Do it messages.

Correspondingly, after receiving the Do it message three times, the second communication device demultiplexes a next received multiframe based on the quantity of basic frames included in the adjusted multiframe.

It should be noted that one or more of step S3002 and step S3003 are not mandatory.

Step S3004: The first communication device multiplexes Q1 first block sequences based on S1 slot resources corresponding to the adjusted multiframe in the second block sequence and a correspondence between a slot resource in the S 1 slot resources and Q1 first block sequences, to obtain the second block sequence.

Step S3005: The first communication device sends the second block sequence.

Correspondingly, the second communication device receives the second block sequence.

Step S3006: The second communication device demultiplexes the Q1 first block sequences from the second block sequence.

One of the S1 slot resources may be a sub-slot mentioned in this embodiment of this application, or may be a slot.

In a possible implementation, the Q1 first block sequences are in a one-to-one correspondence with the Q1 clients, for example, the S1 slot resources in the following are S1 sub-slots. In still another possible implementation, the Q1 first block sequences may be a coarse granularity pipe sequence. In this case, one first block sequence in the Q1 first block sequences may be obtained by multiplexing service data of a plurality of clients. Therefore, in this case, the Q1 clients are no longer in a one-to-one correspondence with the Q1 first block sequences. In this embodiment of this application, both S1 and Q1 are positive integers.

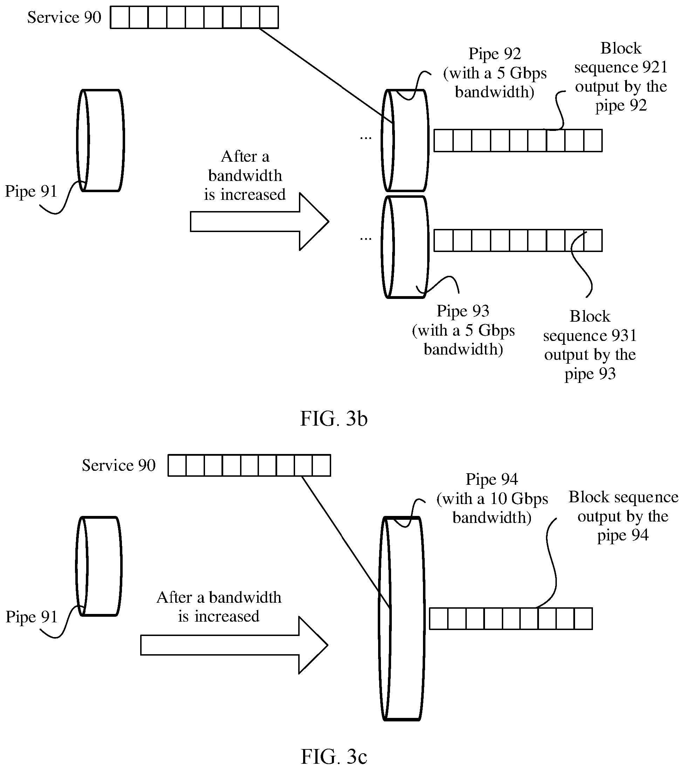

It should be noted that the slot resource in this embodiment of this application is essentially also a slot resource, and is referred to as the slot resource for distinguishing from a slot in another subsequent embodiment. The solution of step S3001 to step S3006 provided in this embodiment of this application may be applied to an application scenario in which only first-level multiplexing is performed, or may be applied to a scenario in which multi-level multiplexing is performed. FIG. 3b shows an effect diagram of an example of a data transmission solution, and FIG. 3c shows an effect diagram of an example of a data transmission solution to which a solution provided in an embodiment of this application is applied. The following describes beneficial effects of this embodiment of this application with reference to FIG. 3b and FIG. 3c.

In actual application, there are some scenarios in which a service bandwidth needs to be increased. As shown in FIG. 3b, before a bandwidth is increased, if a pipe 91 is used to carry data of a service 90, it is assumed that a bandwidth of the pipe 91 is 5 Gbps (the pipe bandwidth may also be another value, for example, 100 Gbps or 10 Mbps). The bandwidth of the pipe used to carry the service 90 is increased. For example, a pipe 93 may be added, and a bandwidth of the pipe 93 is also assumed to be 5 Gbps. In a possible case, for example, a pipe 92 and the pipe 93 are not located in a same bound interface. In this case, although the bandwidth of the pipe used to carry the service 90 is increased, the service 90 cannot use the bandwidth of the pipe 93. However, according to the solution provided in this embodiment of this application, the quantity of basic frames included in the multiframe may be adjusted, or the length of the multiframe in the block sequence may be adjusted. Therefore, as shown in FIG. 3c, the original pipe 92 and the increased pipe 93 may be merged into a pipe 94 with a bandwidth of 10 Gbps, in other words, a bandwidth of the pipe 94 used to carry the service 90 is increased from 5 Gbps to 10 Gbps.

It should be noted that, in the solution provided in this embodiment of this application, the length of the multiframe in one block sequence may be adjusted. The block sequence may be a block sequence obtained by multiplexing blocks on a fine granularity pipe, or may be a block sequence obtained by multiplexing blocks on a coarse granularity pipe. Certainly, the solution may also be applied in another scenario in which a pipe bandwidth needs to be increased. This is not limited in this embodiment of this application.

To more clearly describe the solutions provided in this embodiment of this application, the following uses an example in which the S1 slot resources are S1 sub-slots for description. When the S1 slot resources are S1 sub-slots, the slot resource in the steps in FIG. 3a may be understood as a sub-slot.

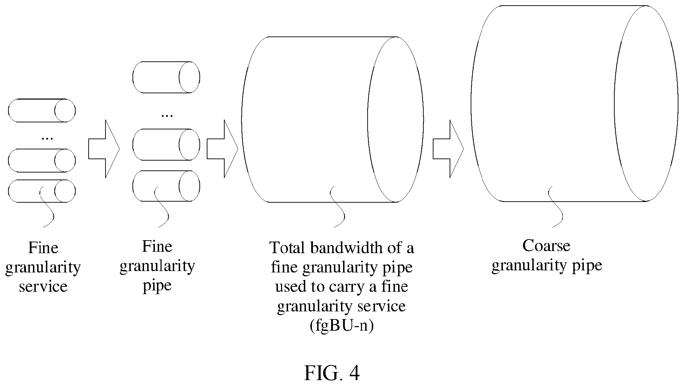

The following first describes four bandwidths: a1-bandwidth of a fine granularity service, a2-bandwidth of a fine granularity pipe, a3-total bandwidth of a fine granularity pipe used to carry a fine granularity service, and a4-bandwidth of a coarse granularity pipe. FIG. 4 is a schematic diagram of an example of four types of bandwidths mentioned in an embodiment of this application, and is described with reference to FIG. 4.

### a1-bandwidth of a fine granularity service.

The bandwidth of the fine granularity service is a rate feature of the fine granularity service, for example, 9 Mbps. The bandwidth of the fine granularity service may further be understood as a bandwidth of the fine granularity service signal.

### a2-bandwidth of a fine granularity pipe.

The bandwidth of the fine granularity pipe may also be referred to as a bandwidth of a fine granularity channel, and may mean a bandwidth in a unit of 10 Mbps that is used to carry a fine granularity service. For example, for a fine granularity service of 9 Mbps, the fine granularity channel provides a bandwidth of 10 Mbps; and for a fine granularity service of 28 Mbps, the fine granularity channel provides a bandwidth of three 10 Mbps, namely, 30 Mbps.

### a3-total bandwidth of a fine granularity pipe used to carry a fine granularity service.

The total bandwidth of the fine granularity pipe used to carry the fine granularity service may also be referred to as a bandwidth of a fine granularity pipe fgBU-n, or referred to as a total bandwidth of a fine granularity pipe fgBU-n, and is a total bandwidth used to carry bandwidths of all fine granularity channels. For example, when there are 480 fine granularity channels of 10 Mbps, the fine granularity pipe fgBU-n is fgBU-20, and corresponds to a nominal bandwidth of 4.8 Gbps, and an actual bandwidth of 5 Gbps. When two 5 Gbps slots are used for carrying the fine granularity service, the fine granularity pipe fgBU-n is fgBU-40, and the bandwidth is 10 Gbps.

### a4-bandwidth of a coarse granularity pipe.

The coarse granularity pipe may also be referred to as a coarse granularity channel. The bandwidth of the coarse granularity pipe may be a pipe bandwidth used to carry the bandwidth of the fine granularity pipe fgBU-n. For example, if one 5 Gbps slot is used to carry the fine granularity pipe fgBU-n, the corresponding bandwidth of the coarse granularity channel is 5 Gbps. When two 5 Gbps slots are used to carry the fine granularity pipe fgBU-n, the corresponding bandwidth of the coarse granularity channel is 10 Gbps.

The solution provided in this embodiment of this application can simplify a control plane. The control plane may separately deliver only adjustment of a change in the bandwidth of the coarse granularity channel and adjustment of a change in the bandwidth of the fine granularity channel. A specific implementation process may be negotiated by a data plane. A network management apparatus may deliver bandwidth adjustment information of the coarse granularity pipe and/or the fine granularity pipe. The solution provided in this embodiment of this application may provide a smooth and feasible associated adjustment manner on the data plane. A core idea of a data plane operation is as follows:

As shown in FIG. 4, there is a nested bandwidth relationship between the four types of bandwidths. When the bandwidth of the channel used to carry a fine granularity service needs to be increased, a change sequence needs to be followed. For example, as shown in FIG. 4, the bandwidth may be increased in a direction from right to left. Specifically, the bandwidth of the coarse granularity channel that carries the fine granularity service may be increased. The bandwidth of the coarse granularity pipe used to carry the fine granularity service needs to be first increased, and then the total bandwidth of the fine granularity pipe used to carry the fine granularity service may be increased (in other words, the fine granularity pipe fgBU-n carried in the increased coarse granularity channel is increased). (In this embodiment of this application, an increase of the fgBU-n means an increase of a corresponding sub-slot resource in one multiframe in a block sequence, or an increase of a length of one multiframe in a block sequence.) Optionally, further, after the fgBU-n is increased, the bandwidth of the fine granularity channel may be further increased. Optionally, then, an actual bandwidth of a service signal may be further increased. If the bandwidth is adjusted in a specific sequence, the bandwidths of both the coarse granularity pipe and the fine granularity pipe can be adjusted in a lossless manner. If the change sequence of the four types of bandwidths is incorrect during a bandwidth change process, a client service is likely to be affected.

When the bandwidth of the coarse granularity pipe needs to be decreased, a specific change sequence also needs to be followed. For example, the bandwidth may be decreased based on a sequence of four types of bandwidths from left to right in FIG. 4. For example, the bandwidth of the service signal may be decreased first (this step is optional), the bandwidth of the fine granularity pipe is decreased (this step is optional), slots in the fine granularity pipe fgBU-n may be centralized and arranged, the bandwidth of the fgBU-n is decreased (this step may be understood as shortening the length of one multiframe in the block sequence in this embodiment of this application, or reducing a quantity of basic frames included in one multiframe in the block sequence, or reducing a sub-slot resource included in one multiframe in the block sequence), and then the bandwidth of the coarse granularity pipe is decreased. If the bandwidth is adjusted in a specific sequence, the bandwidths of both the coarse granularity pipe and the fine granularity pipe can be adjusted in a lossless manner. If the sequence is reversed, the bandwidth of the fine granularity pipe may be affected, and the client service may be affected. It can be seen from the foregoing increase and decrease procedures that, in the associated lossless adjustment solution of the coarse granularity pipe and the fine granularity pipe, a new step to be redefined is to increase and decrease the fine granularity pipe fgBU-n, that is, change a quantity of slots and a length of a multiframe included in the fine granularity pipe fgBU-n, and centralize and arrange slots in the fine granularity pipe fgBU-n. In general, adjustment of the fine granularity pipe fgBU-n needs to be redefined.

Based on the application scenario shown in FIG. 4, FIG. 5a-1 and FIG. 5a-2 show a schematic flowchart of an example of another possible implementation of steps S3005 and S3006 in FIG. 3a. As shown in FIG. 5a-1 and FIG. 5a-2, step S3005 specifically includes the following content:
Step S30051: The first communication device multiplexes the second block sequence and a third block sequence based on a slot corresponding to the sub-slots in the adjusted multiframe and a slot corresponding to the third block sequence, to obtain a fourth block sequence.
Step S30052: The first communication device sends the fourth block sequence.

Correspondingly, the second communication device receives the fourth block sequence.

As shown in FIG. 5a-1 and FIG. 5a-2, step S3006 specifically includes the following content:
Step S30061: The second communication device demultiplexes the fourth block sequence based on the slot corresponding to the sub-slots in the adjusted multiframe in the second block sequence and the slot corresponding to the third block sequence, to obtain the second block sequence and the third block sequence.
Step S30062: Demultiplex the second block sequence based on S1 sub-slots corresponding to the adjusted multiframe in the second block sequence and a correspondence between a sub-slot in the S1 sub-slots and Q1 clients, to obtain the Q1 first block sequences corresponding to the Q1 clients.

One of the S1 sub-slots is one of at least two sub-slots obtained by dividing one slot. S1 and Q1 are both positive integers.

FIG. 5b is an effect diagram of a data transmission solution. FIG. 5c is a schematic diagram of a possible effect shown after the method shown in FIG. 5a-1 and FIG. 5a-2 is applied. The following describes a possible beneficial effect of an embodiment of this application with reference to FIG. 5b and FIG. 5c.

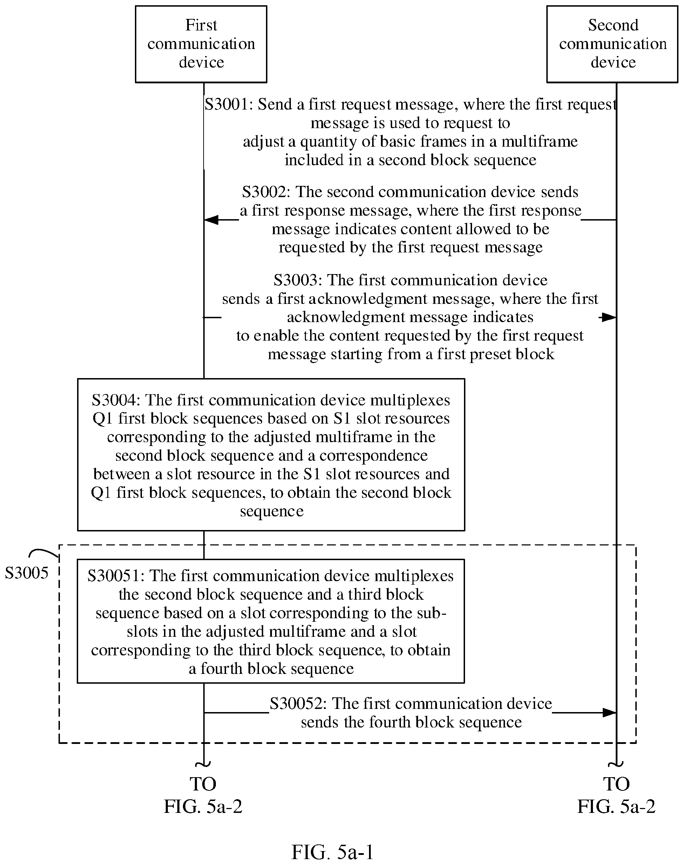

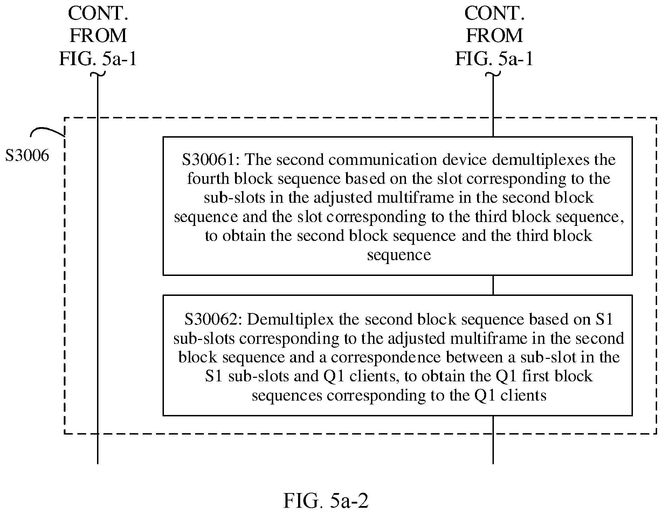

FIG. 5b is an example of the schematic diagram of the data transmission solution after an increase in the bandwidth of the coarse granularity pipe used to carry the fine granularity service. As shown in FIG. 5b, before the bandwidth is increased, if only one coarse granularity pipe 40 is used to carry the fine granularity service, remaining 19 coarse granularity pipes are all used to carry the coarse granularity service (one coarse granularity pipe is divided into 20 fine granularity pipes). Based on a requirement, a bandwidth of the coarse granularity pipe used to carry the fine granularity service is increased to twice the 5 Gbps bandwidth, or another coarse granularity pipe is also used to carry the fine granularity service. For example, in FIG. 5b, a coarse granularity pipe 50 is also used to carry the fine granularity service, and includes 480 fine granularity pipes 501.

In a possible solution, the bandwidth of the coarse granularity pipe used to carry the fine granularity service is increased, for example, increased to 10 Gbps. However, because one multiframe in the block sequence that multiplexes the fine granularity service may carry only data of 480 sub-slots, although a quantity of fine granularity pipes used to carry the fine granularity service is increased to 980, a fine granularity service (for example, a fine granularity service 2 in FIG. 5b) that occupies a sub-slot in the coarse granularity pipe 40 cannot occupy a sub-slot in additional 480 sub-slots (namely, 480 sub-slots in the coarse granularity pipe 50). If all sub-slots in the current coarse granularity pipe 40 are allocated, even if the bandwidth of the coarse granularity pipe used to carry the fine granularity service is increased, a bandwidth corresponding to the fine granularity service 2 cannot be further increased.

To resolve this problem, an embodiment of this application provides a solution. In this embodiment of this application, a quantity of basic frames included in the multiframe in the block sequence that multiplexes the fine granularity service may be adjusted based on the bandwidth of the coarse granularity pipe used to carry the fine granularity service, or the length of the multiframe in the block sequence may be adjusted. In this way, when the bandwidth of the coarse granularity pipe used to carry the fine granularity service increases, even if the sub-slot resource of the coarse granularity pipe is occupied before the bandwidth is increased, the bandwidth of the fine granularity service can still be further increased. For a technical effect of applying the solution provided in this embodiment of this application, refer to FIG. 5c.

FIG. 5c is a schematic diagram of an example of the data transmission solution after an increase in the bandwidth of the coarse granularity pipe used to carry the fine granularity service according to an embodiment of this application. As shown in FIG. 5c, before the bandwidth is increased, one coarse granularity pipe 70 (in this case, a bandwidth of the coarse granularity pipe 70 is 5 Gbps) is used to carry the fine granularity service, and remaining 19 coarse granularity pipes are all used to carry the coarse granularity service. Based on a requirement, the bandwidth of the coarse granularity pipe 70 used to carry the fine granularity service is increased to twice the 5 Gbps bandwidth, two slot resources are also occupied, and the remaining 18 coarse granularity pipes are still used to carry the coarse granularity service. In this case, a quantity of fine granularity pipes that may be included in the coarse granularity pipe 70 is 980 (including 480 fine granularity pipes 401 and 480 fine granularity pipes 501).

Compared with the solution in FIG. 5b, in FIG. 5c, sub-slots may be allocated to the fine granularity service 1 and the fine granularity service 2 from 980 sub-slots. Therefore, if all sub-slots in the current coarse granularity pipe 40 are allocated, and the bandwidth of the coarse granularity pipe used to carry the fine granularity service is increased, a bandwidth corresponding to the fine granularity service 2 can be further increased.

For a correspondence between the sub-slot and the service corresponding to the coarse granularity pipe 40 that occurs after the bandwidth is increased in FIG. 5b, refer to FIG. 2h. FIG. 5d is a schematic diagram of an example of a correspondence table between a fine granularity service and a sub-slot that correspond to the coarse granularity pipe 70 in FIG. 5c and that occurs after the bandwidth is increased. As shown in FIG. 5d, a 10 Gbps slot of the coarse granularity pipe 70 may be divided into 960 sub-slots: a sub-slot 0 to a sub-slot 959. That is, sub-slots in the coarse granularity pipe are uniformly numbered. In FIG. 5d, the sub-slot 0 and the sub-slot 959 are allocated to a service whose service number is 0x444. FIG. 5d shows an example of a correspondence table between an adjusted sub-slot and a client in this embodiment of this application. In this embodiment of this application, the table is adjusted, and a quantity of sub-slots in the table is increased to 960. Therefore, when the first communication device subsequently generates a multiframe, in a possible implementation, when the first communication device generates the multiframe, one multiframe is considered to end| only after data of all sub-slots in the table is carried, and a quantity of sub-slots that can be carried in one basic frame is preset, for example, a fixed value of 24 sub-slots is preset. Therefore, in this embodiment of this application, a quantity of sub-slots in the table is increased, and then a quantity of basic frames in a subsequently generated multiframe also increases accordingly. When the quantity of sub-slots in the table decreases, the quantity of basic frames in one multiframe decreases accordingly. The reasons are similar, and details are not described herein again.

For a frame format of a block sequence output by the coarse granularity pipe 40 after the bandwidth is increased in FIG. 5b, refer to the content in FIG. 2f. FIG. 5e is an example of a frame format of a block sequence output by the coarse granularity pipe 70 in FIG. 5c. As shown in FIG. 5e, one multiframe in a block sequence 711 may include 40 basic frames, and each basic frame includes service data corresponding to 24 sub-slots. In other words, one multiframe may carry data of services corresponding to 960 sub-slots (the 956 sub-slots shown in FIG. 5d).

In the method shown in FIG. 5a-1 and FIG. 5a-2, if the first request message is used to request to increase the quantity of basic frames in the multiframe included in the second block sequence, the adjusted multiframe in the second block sequence includes a first quantity of basic frames. The first quantity is greater than a quantity threshold. The quantity threshold is related to a quantity of sub-slots obtained by dividing one slot and a quantity of sub-slots corresponding to data included in one basic frame. In a possible implementation, the first quantity is related to a quantity of sub-slots obtained by dividing N2 slots and the quantity of sub-slots corresponding to the data included in one basic frame. N2 is a positive integer. N2 is a total quantity of slots to which sub-slots corresponding to the Q1 clients belong. In a possible implementation, the quantity threshold is a quotient of a total quantity of sub-slots obtained by dividing one slot and the quantity of sub-slots corresponding to the data included in one basic frame. In a possible implementation, quantities of sub-slots in any two of the N2 slots are equal. A value of the first quantity is equal to N2 times a quantity threshold. FIG. 5c and FIG. 5e use an example in which the quantity threshold is 20, the first quantity is 40, and N2 is 2.

It should be noted that when the second block sequence is transmitted by using the frame structure in FIG. 5e, one multiframe in the second block sequence includes 40 basic frames, and one multiframe may include 40 blocks used to carry overhead information. Overhead on one block may be shown in FIG. 2g. Different from FIG. 2g, a multiframe indication (Multi-Frame-Indication, MFI) uses 6 bits, and 0 to 39 bits are used in a 10 Gbps pipe, and a remaining value is reserved.

It can be learned from FIG. 5b, FIG. 5c, and FIG. 5e that one second block sequence (for example, the block sequence output by the coarse granularity pipe 40) in FIG. 5b may be used to carry only a service carried on a fine granularity pipe 401. In the solution shown in FIG. 5c, one second block sequence (for example, the block sequence output by the coarse granularity pipe 40) may be used to carry services carried on a fine granularity pipe 4701 and a fine granularity pipe 501. The coarse granularity pipe 70 may correspond to two slots. In this case, in a possible implementation, the Q1 clients include a first client and a second client. At least one sub-slot corresponding to the first client is one of at least two sub-slots obtained by dividing a first slot (for example, a slot corresponding to the coarse granularity pipe 40). At least one sub-slot corresponding to the second client is one of at least two sub-slots obtained by dividing a second slot (for example, a slot corresponding to the coarse granularity pipe 50).

Another example is used to describe beneficial effects of the solution provided in this embodiment of this application. As shown in FIG. 5c, if there are three 3.3 Gbps fine granularity services, in the solution shown in FIG. 5b, only one 3.3 Gbps fine granularity service may be allocated to the coarse granularity pipe 40, one 3.3 Gbps fine granularity service may be allocated to the coarse granularity pipe 50, and a third 3.3 Gbps fine granularity service can be allocated only to another coarse granularity pipe used to carry a coarse granularity service. The bandwidth of the coarse granularity pipe is 5 Gbps, which causes low bearer efficiency. However, in the solution shown in FIG. 5c provided in this embodiment of this application, because a bandwidth of the coarse granularity pipe 70 is 10 Gbps, all three 3.3 Gbps fine granularity services may be carried on the coarse granularity pipe 70, so that bearer efficiency in a data transmission process can be improved.

Based on the foregoing content, the following separately describes formats of signaling (for example, the first request message and a second request message in the following) defined in this embodiment of this application. The first request message and/or the second request message in this embodiment of this application may be carried in a block that is used to carry overhead information and that is in one multiframe in the second block sequence. The block may be a 1^{st} data block following an S block in the basic frame in the adjusted multiframe.

FIG. 6a is a schematic diagram of an example of a structure of a block used to carry overhead information in a multiframe in a second block sequence. As shown in FIG. 6a, MFI = ? indicates that the block may be a block in any basic frame in one multiframe. As shown in FIG. 6a, 10 bits to 55 bits following a type field of the block are divided into the following fields with definitions:

6 bits following the type (Type) field are an operation code (operation, OP) field, including a 2-bit reserved (RES) field.

In the OP field:
DD field: occupies 1 bit (in this embodiment of this application, bit represents bit). When the field is set to 1, it may indicate to send from a downstream node to an upstream node, and may indicate downstream done. For example, it may indicate that a downstream node indicates an upstream node to start bandwidth increase adjustment.
CMT field: occupies 1 bit. When a bit of the field is set to 1, it may indicate to start to perform an operation, for example, may indicate to start slot adjustment (calendar configuration commit).
REQ field: occupies 1 bit. When a bit of the field is set to 1, it may indicate a request, for example, may indicate a slot adjustment request (calendar configuration request).
ACK field: occupies 1 bit. When a bit of the field is set to 1, it may indicate a response, for example, may indicate a slot adjustment response (calendar configuration acknowledge).
A slot number (fgSlot Number) field: occupies 12 bits, and indicates a target operation slot number (the slot number may also be understood as an identifier of a slot resource or an index number of a slot resource). (The slot number field in this embodiment of this application may also be referred to as an fgSlot number field, and an fgSlot number location mentioned in this embodiment of this application is a bit corresponding to the fgSlot number field.)
Client number (fgClient ID) field: occupies 12 bits, may carry an identifier of a client corresponding to a target operation slot number (the identifier of the client may also be understood as a service identifier, an index number of the client, or the like), and indicates an identifier (Identification, ID) of a client to which a slot resource corresponding to the target operation slot number is allocated.
Reserved (RES) field: occupies 9 bits, and is a reserved field (the reserved field in this embodiment of this application may also be referred to as an RES field).
Cyclic redundancy check (Cyclic Redundancy Check, CRC) field: occupies 7 bits, and is used to carry a check value of the foregoing 51 bits.

In a possible implementation, indication information that is in a first request message and that is used to request to adjust a quantity of basic frames in the multiframe included in the second block sequence is carried in at least one of the following content: a slot configuration table field of a first block; or an OP code field in a slot configuration table field of a first block.

In still another possible implementation, indication information that is in a first request message and that is used to request to adjust a quantity of basic frames in the multiframe included in the second block sequence is carried in at least one of the following content: 9 bits to 12 bits of a first block; or 37 bits to 40 bits of a first block.

The following separately describes several implementations. An implementation A1 is used to describe a case in which the first request message is used to request to increase a quantity of basic frames in a multiframe included in the second block sequence. An implementation A2 is used to describe a case in which the first request message is used to request to decrease a quantity of basic frames in a multiframe included in the second block sequence.

In the implementation A1, the first request message is used to request to increase the quantity of basic frames in the multiframe included in the second block sequence. In this case, the first request message may also be referred to as an increase message, and the increase message may also be referred to as an enlarge message.

Based on the content shown in FIG. 6a, FIG. 6b is a schematic diagram of an example of possible formats of an enlarge message, an OK message, and a Do it message. As shown in FIG. 6b, 4 bits of the OP field may be used to distinguish the messages.

In a format of the enlarge message, an OP field is set to 1100. When receiving the overhead information, the second communication device may determine, based on 1100 of the OP field, that the message is an enlarge message, in other words, the message is used to request to increase the quantity of basic frames included in the multiframe in the second block sequence.

In an OK message corresponding to the enlarge message, an OP field is set to 0001. When receiving the overhead information, the first communication device may determine, based on 0001 of the OP field, that the message is an OK message, in other words, may determine that the second communication device allows content requested by the first request message that is sent by the first communication device.

In a Do it message corresponding to the enlarge message, an OP field is set to 0100. In a possible implementation, after receiving three Do it messages, the second communication device enables the content requested by the first request message, that is, demultiplexes a multiframe in a next second block sequence based on the quantity of basic frames included in the adjusted multiframe.

As shown in FIG. 6b, a reserved client number may be filled in an fgClient ID field in the enlarge message, and a maximum slot number after the increase may be filled in an fgSlot number location (after a coarse granularity pipe is increased from 5 Gbps to 10 Gbps, and a quantity of sub-slots changes from 480 to 960, and the 960 sub-slots are numbered 0 to 959). However, it should be noted that OP code is the most important in the enlarge message. The fgClient ID field and the fgSlot number field may be left empty, or may be filled with another information value. The content in the figure is optional.

As shown in FIG. 6b, the first request message may further include: indication information indicating a maximum index number of a sub-slot corresponding to data carried in the adjusted multiframe in the second block sequence. For example, a 10 Gbps pipe has 960 10 Mbps sub-slots. Slot Number = 0(0x000), 1(0x001), ..., 959 (0x3BF). The fgSlot number# field may be set to 0x3BF, to indicate that a maximum index number of a sub-slot included in one multiframe in the adjusted second block sequence is 959.

The indication information indicating a maximum index number of a sub-slot corresponding to the data carried in the adjusted multiframe in the second block sequence is one of the following content:
the maximum index number of the sub-slot corresponding to the data carried in the adjusted multiframe in the second block sequence;
a total quantity of sub-slots corresponding to the data carried in the adjusted multiframe in the second block sequence; and
a calculation result of a total quantity of sub-slots corresponding to the data carried in the adjusted multiframe in the second block sequence and a correction value.

The correction value is 0 or 1. For example, if counting starts from 0, a maximum index number in the 960 sub-slots is 959. In this case, 959 is obtained based on 960 - 1, where 1 is the correction value.

In the implementation A2, the first request message is used to request to decrease the quantity of basic frames in the multiframe included in the second block sequence. In this case, the first request message may also be referred to as a decrease message, and the decrease message may also be referred to as a shrink message.

Based on the content shown in FIG. 6a, FIG. 6c is a schematic diagram of an example of possible formats of a shrink message, an OK message, and a Do it message. As shown in FIG. 6c, 4 bits of the OP field may be used to distinguish the messages.

In a format of the shrink message, an OP field is set to 0011. When receiving the overhead information, the second communication device may determine, based on 0011 of the OP field, that the message is a shrink message, in other words, the message is used to request to decrease the quantity of basic frames included in a multiframe in the second block sequence.

In an OK message corresponding to the shrink message, an OP field is set to 0001. When receiving the overhead information, a first communication device may determine, based on 0001 of the OP field, that the message is an OK message, in other words, may determine that the second communication device allows content requested by the first request message that is sent by the first communication device.

In a Do it message corresponding to the shrink message, an OP field is set to 0100. In a possible implementation, after receiving three Do it messages, the second communication device enables the content requested by the first request message, that is, demultiplexes a multiframe in a next second block sequence based on the quantity of basic frames included in the adjusted multiframe.

As shown in FIG. 6c, a reserved client number may be filled in an fgClient ID field in the shrink message, and a minimum sub-slot number or a maximum sub-slot number after pipe bandwidth adjustment may be filled in an fgSlot number field (for example, if a bandwidth used to carry the fine granularity service is decreased from 10 Gbps to 5 Gbps, a total quantity of sub-slots is decreased from 960 to 480). However, it should be noted that OP code is the most important in the shrink message. The fgClient ID field and the fgSlot number field may be left empty, or may be filled with another information value. The content in the figure is optional.

In this embodiment of this application, when the quantity of basic frames included in one multiframe in the second block sequence is adjusted, in other words, a quantity of sub-slots that may be included in the multiframe is adjusted, it is equivalent to increasing or decreasing a quantity of sub-slots used to carry the fine granularity service. In a possible implementation, before generating the second block sequence based on a quantity of basic frames in the updated multiframe, the first communication device may adjust a relationship between the client and the sub-slot. Specifically, the first communication device may adjust a correspondence between the Q1 clients and S2 sub-slots to a correspondence between the Q1 clients and S1 sub-slots. The S2 sub-slots are a sub-slot corresponding to a basic frame in the unadjusted multiframe in the second block sequence. S2 is a positive integer.

In a possible implementation, the first communication device and the second communication device may separately arrange the correspondence between the sub-slot and the client based on a same adjustment policy. In still another possible implementation, the first communication device may arrange the correspondence between the sub-slot and the client, and deliver the arranged correspondence to the second communication device. The first communication device may fully deliver the correspondence to the second communication device (this solution is described in the following, and is not described herein).

In a possible implementation, the first request message may indicate to adjust the quantity of basic frames in one multiframe, and may further indicate the second communication device to arrange the correspondence between the sub-slot and the client. In this case, the second communication device may reply with a first response message after arranging the correspondence between the sub-slot and the client. The first communication device may reply with a first acknowledgment message after arranging the correspondence between the sub-slot and the client and receiving the first response message.

In still another possible implementation, the first request message may be used to only adjust the quantity of basic frames in one multiframe. In this case, the second request message may be further sent. The second communication device receives the second request message, where the second request message indicates to adjust the correspondence between the Q1 clients and the sub-slot. In a possible implementation, after receiving the second request message, the second communication device may further send a second response message corresponding to the second request message. After receiving the second response message, the first communication device may further send a second acknowledgment message corresponding to the second response message.

If the first request message is used to request to increase the quantity of basic frames in the multiframe included in the second block sequence, the second request message is sent following the first request message. In this case, the second request message first increases the quantity of basic frames included in the multiframe, and then adjusts a correspondence between a sub-slot included in the adjusted multiframe and the client. If the first request message is used to request to decrease the quantity of basic frames in the multiframe included in the second block sequence, the second request message is sent before the first request message. In this way, a service in a to-be-deleted sub-slot may be first migrated by adjusting the correspondence between the sub-slot and the client, to prevent a service loss caused by a decrease in the sub-slot.

For example, when the bandwidth used to carry the fine granularity service is decreased from 10 Gbps to 5 Gbps, a corresponding quantity of sub-slots needs to be decreased from 960 to 480. Before the quantity of sub-slots is changed, a slot allocated to a service may be in the 960 sub-slots. Therefore, the sub-slots need to be centralized, that is, the sub-slots need to be arranged in the 480 sub-slots to be reserved. During centralization and arrangement of the sub-slots, a migration operation may be involved. On the contrary, when the bandwidth used to carry the fine granularity service is increased from 5 Gbps to 10 Gbps, the quantity of corresponding sub-slots needs to be changed from 480 to 960. In this case, newly added sub-slots need to coexist with original 480 sub-slots, and a corresponding arrangement manner needs to be considered, for example, the newly added sub-slots are arranged at a tail of the original 480 sub-slots, or inserted in the middle of the original sub-slots.

The following describes, by using an implementation A3 and an implementation A4, a signaling format in a process of adjusting the relationship between the sub-slot and the client. The implementation A3 is used to describe an implementation of sending the second request message that indicates to adjust the correspondence between the Q1 clients and the sub-slot. The implementation A4 is used to describe an implementation in which the correspondence between the sub-slot and the client is delivered by using a delivered R1 first request sub-messages.

The implementation A3 is used to describe the implementation of sending the second request message that indicates to adjust the correspondence between the Q1 clients and the sub-slot. The second request message may also be referred to as an arrangement message, and the arrangement message may also be referred to as an arrange message or a centralize message.

Based on the content shown in FIG. 6a, FIG. 6d is a schematic diagram of an example of possible formats of an arrange message, an OK message, and a Do it message. As shown in FIG. 6d, 4 bits of the OP field may be used to distinguish the messages.

In a format of the arrange message, an OP field is set to 1110. When receiving the overhead information, the second communication device may determine, based on 1110 of the OP field, that the message is an arrange message, in other words, the message is used to request to arrange the quantity of basic frames included in the multiframe in the second block sequence.

In an OK message corresponding to the arrange message, an OP field is set to 0001. When receiving the overhead information, a first communication device may determine, based on 0001 of the OP field, that the message is an OK message, in other words, may determine that the second communication device allows content requested by the first request message that is sent by the first communication device.

In a Do it message corresponding to the arrange message, an OP field is set to 0100. In a possible implementation, after receiving three Do it messages, the second communication device enables content requested by the second request message, that is, demultiplexes a multiframe in a next second block sequence based on an updated correspondence between a client and a sub-slot.

As shown in FIG. 6d, the fgClient ID field in the arrange message may be filled with a reserved client number, and the fgSlot number field may be filled with a maximum sub-slot number after pipe bandwidth adjustment (for example, if a bandwidth used to carry a fine granularity service is decreased from 10 Gbps to 5 Gbps, a total quantity of sub-slots is decreased from 960 to 480). However, it should be noted that OP code is the most important in the arrange message. The fgClient ID field and the fgSlot number field may be left empty, or may be filled with another information value. The content in the figure is optional.

An embodiment of this application may further provide protocol formats of the first request message, the second request message, a corresponding OK message, and a corresponding Do it message. Without adding the OP code in the embodiment, three handshake protocols and REQ, ACK, and CMT messages used for bandwidth adjustment are distinguished by using reserved bits. Specifically, when a value of the OP code is selected, an OP code of the REQ may be reused, but a RES reserved bit needs to be used for mutual differentiation, or a value of a bit (bit) of an identifier field (the identifier field in this application may also be referred to as a flag field) is another value.

Manner 1: Use the identifier field (flag field) to distinguish the protocols.
(1) When a value of the identifier field (flag field) is 0b10, a REQ field (when the field is set to 1, it indicates the first request message), an ACK field (when the field is set to 1, it indicates the first response message), and a CMT field (when the field is set to 1, it indicates the first acknowledgment message) are reused to indicate that the quantity of basic frames included in one multiframe is increased through negotiation.
(2) When a value of the identifier field (flag field) is 0b01, a REQ field (when the field is set to 1, it indicates the first request message), an ACK field (when the field is set to 1, it indicates the first response message), and a CMT field (when the field is set to 1, it indicates the first acknowledgment message) are reused to indicate that the quantity of basic frames included in one multiframe is decreased through negotiation.
(3) When a value of the identifier field (flag field) is 0b11, a REQ field (when the field is set to 1, it indicates the second request message), an ACK field (when the field is set to 1, it indicates the second response message), and a CMT field (when the field is set to 1, it indicates the second acknowledgment message) are reused to indicate that the correspondence between the sub-slot and the client included in one multiframe is adjusted through negotiation.

Manner 2: Use the RES (2 bits or the following 9 bits) to distinguish the protocols.
(1) When a value of the RES is 0b10, a REQ field (when the field is set to 1, it indicates the first request message), an ACK field (when the field is set to 1, it indicates the first response message), and a CMT field (when the field is set to 1, it indicates the first acknowledgment message) are reused to indicate that the quantity of basic frames included in one multiframe is increased through negotiation.
(2) When a value of RES is 0b01, a REQ field (when the field is set to 1, it indicates the first request message), an ACK field (when the field is set to 1, it indicates the first response message), and a CMT field (when the field is set to 1, it indicates the first acknowledgment message) are reused to indicate that the quantity of basic frames included in one multiframe is decreased through negotiation.
(3) When a value of RES is 0b11, a REQ field (when the field is set to 1, it indicates the second request message), an ACK field (when the field is set to 1, it indicates the second response message), and a CMT field (when the field is set to 1, it indicates the second acknowledgment message) are reused to indicate that the correspondence between the sub-slot and the client included in one multiframe is adjusted through negotiation.

In the implementation A4, the correspondence between the sub-slot and the client is delivered by using the delivered R1 first request sub-messages. In this implementation, the first communication device arranges the correspondence between the sub-slot and the client, and delivers the arranged correspondence to the second communication device. The first communication device may fully deliver the correspondence to the second communication device. One first request sub-message may be referred to as a full slot configuration delivery (full-configuration, FC) message, and the full slot configuration delivery message may also be written as an FC message or an FC request message.

In the foregoing implementations A1 to A3, each node may independently change a quantity of sub-slots and a length of a multiframe, and centralize and arrange sub-slots. In the implementation A4, a receive side follows a transmit side between two adjacent nodes. The transmit side performs related configuration, and synchronizes the configuration to the receive side through the handshake protocol.

Specifically, a transmit side of a node separately performs centralization and arrangement of sub-slots. Then, a correspondence between all sub-slots and clients after arrangement is delivered, to change a quantity of sub-slots of a fine granularity pipe fgBU-n and a length of a multiframe. Specifically, it is assumed that the quantity of sub-slots of the fine granularity pipe fgBU-n and the length of the multiframe need to be decreased from 960 slots of 10 Gbps to 480 slots of 5 Gbps. In this embodiment of this application, the transmit side may first arrange a slot used by a service into the 480 slots to be reserved. After arrangement is completed, the transmit side sends the arranged 480 slots to a receive side of a downstream node by using the R1 first request sub-messages (which may also be referred to as the full slot configuration delivery message) defined in this embodiment of this application. After receiving all the 480 slots, the downstream node sends a response (a response message corresponding to the R1 first request sub-messages) to the transmit side of an upstream node. Then, the transmit side of the upstream node sends a switch enabling message (an acknowledgment message corresponding to the R1 first request sub-messages), to enable the 480 slots. In this case, the quantity of slots and the length of the multiframe are decreased by switching a slot table.

In this embodiment of this application, R1 is a positive integer. One of the R1 first request sub-messages indicates a correspondence between the sub-slot in the S 1 sub-slots corresponding to the adjusted multiframe and a client in Q1 clients. Correspondingly, the second communication device receives the R1 first request sub-messages.

One of the R1 first request sub-messages further includes: indication information indicating whether the first request sub-message is last one of the R1 first request sub-messages.

In this possible implementation, in a possible implementation, the second communication device may send an OK message after receiving all FC messages. Alternatively, the second communication device may send first response sub-messages corresponding to a plurality of FC messages. For example, the second communication device replies with one first response sub-message (which may also be referred to as the OK message) after receiving one FC message, and replies with R1 first response sub-messages after receiving R1 FC messages. One first response sub-message indicates the content allowed to be requested by the first request sub-message that corresponds to the first response sub-message.

In a handshake protocol manner of full slot configuration delivery defined in this embodiment of this application, between adjacent nodes, a receive side Rx may follow a slot configuration sent by a transmit side Tx. In other words, the receive side receives and uses the slot configuration sent by the transmit side. The first communication device (which may be a fine granularity node) (the transmit side) sends an FC message corresponding to an entire slot configuration to the second communication device (which may be a fine granularity node) (the receive side). If there are 480 slots in the slot configuration, 480 FC messages need to be sent. After receiving the 480 FC messages, the receive side checks whether each message is correct. If each message is correct, the receive side replies with an ACK message, indicating that all the messages are correctly received and switch is ready. After receiving the ACK message, the first communication device sends three CMT messages at a boundary of a fine granularity multiframe, to indicate to switch to use, at a next multiframe boundary, the slot configuration that is recently sent. After the CMT messages are sent, two nodes simultaneously switch to use the new configuration at the next multiframe boundary.

Based on the content shown in FIG. 6a, FIG. 6e is a schematic diagram of an example of possible formats of an FC message, an OK message, and a Do it message. As shown in FIG. 6e, 4 bits of the OP field may be used to distinguish the messages.

In a format of the FC message, an OP field is set to 1010. When receiving the overhead information, the second communication device may determine, based on 1010 of the OP field, that the message is an FC message, in other words, the message indicates to receive the correspondence between the client and the sub-slot that is carried in the FC message, and the message may further indicate to request to enable the updated correspondence between the sub-slot and the client after the R1 FC messages are sent, and a quantity of sub-slots in the adjusted multiframe.

In an OK message corresponding to the FC message, an OP field is set to 0001. When receiving the overhead information, a first communication device may determine, based on 0001 of the OP field, that the message is an OK message, in other words, may determine that the second communication device allows content requested by the first request message that is sent by the first communication device.

In a Do it message corresponding to the FC message, an OP field is set to 0100. In a possible implementation, after receiving three Do it messages, the second communication device enables the content requested by the R1 first request sub-messages, that is, demultiplexes a multiframe in a next second block sequence based on the updated correspondence between the sub-slot and the client and a quantity of basic frames included in the adjusted multiframe.

As shown in FIG. 6e, the fgClient ID field in the FC message may be filled with a client number corresponding to a sub-slot number indicated in the current FC message, and the fgSlot number field may be filled with the sub-slot number indicated in the current FC message. An LE field indicates whether a message is a last FC message. If the message is the last FC message, a value of the LE field is 1. If the message is not the last FC message, a value of the LE field is 0. A total num field indicates a total quantity of sub-slots in this transmission. When a value of the total num field is n, it indicates that the quantity of slots in this transmission is n×96.

Based on the content shown in FIG. 6a, FIG. 6f is a schematic diagram of an example of possible formats of an FC message, an OK message, and a Do it message. As shown in FIG. 6f, 4 bits of the OP field may be used to distinguish the messages.

Identifier field (flag field): used to distinguish from a GCC Generic communication channel. A value 0b00 indicates a message type of a bandwidth-related operation, and a value 0b11 indicates the GCC channel.

Last element (LE) field: LE is an abbreviation of last element. A value carried in the last element field indicates whether it is last one. A value 0 indicates that it is not the last one, and a value 1 indicates that it is the last one (the last element field in this embodiment of this application may also be referred to as an LE field).

OP code field: 4 bits. A value of the 4 bits needs to be different from a value in the foregoing first request message, that is, the value of the field is distinguished from an REQ field, an ACK field, a CMT field, a DD field, and the like in a fine granularity first request message (which may also be referred to as a lossless bandwidth adjustment message). A value 0b1010 herein indicates that the message is an adjustment message of a correspondence between a sub-slot and a client that are related to a fine granularity pipe fgBU-n.

fgClient ID field: 12 bits, indicating a service number identifier of a corresponding client to which a sub-slot is allocated. 0X001 to 0xFFE are valid. 0x000 indicates an invalid client number, and 0xFFF indicates a reserved client number.

fgSlot number #field: 12 bits, indicating a target operation sub-slot number/sub-slot index. Typically, for 480 10 Mbps sub-slots of a 5 Gbps pipe, fgSlot number = 0(0x000), 1(0x001), ..., 479 (0x1DF). For 960 10 Mbps sub-slots of a 10 Gbps pipe, Slot Number = 0(0x000), 1(0x001), ..., 959 (0x3BF). 25 Gbps expansion in the future is similar. For 2400 10 Mbps sub-slots of a 25 Gbps pipe, Slot Number = 0(0x000), 1(0x001), ..., 2399 (0x95F).

Sub OP field: 3 bits, indicating a specific type of message to which an adjustment message (which may also be referred to as an FC message channel) of a correspondence between a sub-slot and a client that are related to an fgBU-n belongs. For example, the field indicates the message is an FC request message that is used to request to adjust the correspondence between the sub-slot and the client, or an OK message corresponding to an FC message, or a Do it message corresponding to an FC message, or another message. In a possible implementation, when Sub OP = 0b100, it indicates that the message is an FC request message (which may be written as FC. REQ). Sub OP = 0b010, indicating that the message is an OK message corresponding to an FC message (can be written as FC. ACK). Sub OP = 0b001, indicating that the message is a Do it message corresponding to an FC message (which can be written as FC. CMT).

FgBU-n field: 6 bits, indicating a quantity of sub-slots and a multiframe length in a fine granularity pipe. A value is greater than 0. For example, when a value is 0x04, fgBU-4 indicates that a second block sequence multiframe (when data in the second block sequence is obtained by multiplexing a block corresponding to a fine granularity service, the multiframe in the second block sequence may also be referred to as a fine granularity multiframe, and a basic frame in the multiframe may also be referred to as a fine granularity basic frame) includes four fine granularity basic frames fgBUs, and a total quantity of corresponding sub-slots is 24×4 = 96. When a value is 0x14, fgBU-20 indicates that a fine granularity multiframe includes 20 fine granularity basic frames fgBUs, and a total quantity of sub-slots is 24×20 = 480.

CRC field: A carried value is a 7-bit CRC7 checksum for the foregoing 41 bits, and may be calculated based on the foregoing 41 bits. The field includes a 2-bit identifier field (flag field), a 1-bit reserved field, and a 38-bit sub-slot reconfiguration message field. A bit that is transmitted first is used as a high bit for calculation. A possible CRC polynomial is: x⁷ + x⁵ + x⁴ + x² + x + 1. An initial value is 0. In a CRC7 result [x6:x0], a high bit is transmitted first.

Based on the foregoing content, it can be seen from FIG. 6f that, in a format of the FC message (or referred to as the FC request message), an OP field is set to 1010, and a sub OP field of bits 40 to 47 is set to 100; when receiving the overhead information, the second communication device may determine, based on the value 1010 of the OP field and the value 100 of the sub OP field, that the message is an FC message.

In the OK message corresponding to the FC message, an OP field is set to 1010, and a sub OP field of bits 40 to 47 is set to 101; when receiving the overhead information, the first communication device may determine, based on the value 1010 of the OP field and the value 101 of the sub OP field, that the message is an OK message.

In the Do it message corresponding to the FC message, an OP field is set to 1010, and a sub OP field of bits 40 to 47 is set to 001.

As shown in FIG. 6f, the fgClient ID field in the FC message may be filled with a client number corresponding to a sub-slot number indicated in the current FC message, and the fgSlot number field may be filled with the sub-slot number indicated in the current FC message.

In the manner of full slot configuration delivery in the implementation A4, slot allocation is performed by the transmit end. Therefore, a plurality of interactions and inconsistency in slots on two sides do not occur, further improving efficiency.

It should be noted that, in this embodiment of this application, the block sequence output by one coarse granularity pipe is generated based on the correspondence table between the fine granularity service and the sub-slot corresponding to the coarse granularity pipe. One multiframe in the block sequence includes all sub-slots corresponding to the coarse granularity pipe. In other words, one multiframe in the block sequence is used to carry the data corresponding to all the sub-slots obtained by dividing the coarse granularity pipe. In this embodiment of this application, after receiving the correspondence between all sub-slots and the clients, the receive side interleaves each first block sequence based on the relationship between the sub-slot and the client, to obtain the second block sequence. One multiframe in the second block sequence may carry data corresponding to all sub-slots in the updated correspondence between all sub-slots and clients. In other words, after the receive end generates the multiframe in the second block sequence based on the updated correspondence between the sub-slot and the client, in this embodiment of this application, the quantity of sub-slots carried in one multiframe is limited to a quantity of all sub-slots corresponding to a pipe that outputs the second block sequence. Therefore, the quantity of sub-slots included in the multiframe is updated based on a delivered correspondence between all the sub-slots and the clients. In other words, a quantity of basic frames included in the multiframe is updated based on a delivered correspondence between all the sub-slots and the clients. It may also be understood that, delivery of the correspondence between all the sub-slots and the clients indicates the updated correspondence between the sub-slot and the client, and further indicates a quantity of basic frames included in the updated multiframe.

Based on the foregoing content, this embodiment of this application further provides the following several policies for adjusting the correspondence between the sub-slot and the client. It should be noted that some content in this embodiment of this application uses an example in which the S1 slot resources are S1 sub-slots. The solution provided in this embodiment of this application may also be applicable to a case in which the S slot resources are S1 slots. For example, the following adjustment policies are used. Other content is not illustrated one by one.

To describe the adjustment policy more clearly, a specific example is provided herein. A total quantity of sub-slots included in an unadjusted pipe is S2, and a total quantity of sub-slots included in an unadjusted pipe is S1. A quantity of clients is always Q 1. Both S1 and S2 are positive integers.

S2 may be less than S1. For example, if a bandwidth of a pipe used to carry the fine granularity service is adjusted from 5 Gbps to 10 Gbps, S2 is 480, and S1 is 960.

S2 may alternatively be equal to S1. In this case, a quantity of sub-slots does not change, but a location of the sub-slot may be migrated. For example, one 5 Gbps pipe used to carry the fine granularity service may be replaced with another 5 Gbps pipe used to carry the fine granularity service.

S2 may be greater than S1. For example, if a bandwidth of a pipe used to carry the fine granularity service is adjusted from 10 Gbps to 5 Gbps, S2 is 960, and S1 is 480 (in this case, a network management apparatus or another apparatus may also indicate a specific sub-slot to be reserved. For example, a sub-slot 0 to a sub-slot 479 may be reserved (one reserved sub-slot means that the sub-slot is still used to carry fine granularity services of the Q1 clients)). However, a sub-slot 480 to a sub-slot 959 are deleted (one deleted sub-slot means that the sub-slot is no longer used to carry a fine granularity service of the Q1 clients, for example, a decreased 5 Gbps slot resource may be used to carry the coarse granularity service).

The following describes several adjustment policies based on the foregoing preceding examples.

Adjustment policy B1: establishing a correspondence between a client in the Q1 clients and the sub-slot in the S1 sub-slots according to a first preset rule.

The adjustment policy B1 is equivalent to a full algorithm, that is, sub-slot allocation calculation is performed again on a target pipe, and correspondences between all sub-slots and clients need to be recalculated.

Adjustment policy B2: if the first request message is used to request to decrease the quantity of basic frames in the multiframe included in the second block sequence (the quantity of sub-slots included in the multiframe may decrease, for example, decrease from 960 to 480), establishing, according to a second preset rule, a correspondence between a client corresponding to an occupied sub-slot in a to-be-deleted sub-slot and an idle sub-slot in a to-be-reserved sub-slot.

A sub-slot in the to-be-deleted sub-slot meets a condition: The sub-slot is a sub-slot corresponding to the unadjusted multiframe, and is not a sub-slot corresponding to the adjusted multiframe.

A sub-slot in the to-be-reserved sub-slot meets a condition: The sub-slot is the sub-slot corresponding to the unadjusted multiframe, and is the sub-slot corresponding to the adjusted multiframe.

The adjustment policy B2 may be understood as an incremental algorithm, that is, adding a client corresponding to an occupied sub-slot in a to-be-deleted pipe to a to-be-reserved pipe in an incremental manner (client relationships corresponding to only some sub-slots need to be changed). The first preset rule and the second preset rule may be the same or may be different.

Based on the adjustment policy B2, the to-be-deleted pipe and the to-be-reserved pipe are found, and the client corresponding to the occupied sub-slot in the to-be-deleted pipe is sequentially migrated (partially migrated) to an idle sub-slot in the to-be-reserved pipe. If sub-slots of services are evenly distributed before migration, and slots are also evenly distributed after some services are deleted, even slot migration can also be ensured.

Adjustment policy B3: setting a first pointer and a second pointer. The first pointer is used to search the to-be-reserved sub-slot for the idle sub-slot based on a sequence of the sub-slots, and the second pointer is used to search the to-be-deleted sub-slot for the occupied sub-slot based on a sequence of the sub-slots. Based on a sequence of the idle sub-slot found by using the first pointer, a client corresponding to the occupied sub-slot that is sequentially searched for by using the second pointer is associated with the idle sub-slot searched for by using the first pointer. The adjustment policy B3 may also belong to one of the adjustment policies B2.

The following describes the adjustment policy B3 with reference to a distribution table of possible correspondences between a sub-slot and a client shown in FIG. 7 as an example. As shown in FIG. 7, if a quantity of sub-slots is decreased from 960 to 480, 960 sub-slots are arranged based on a structure in FIG. 7, that is, a 10 Gbps coarse granularity channel bandwidth is divided into ten rows for arrangement. Each row has 96 slots, and a corresponding coarse granularity channel bandwidth is 1 Gbps. Assuming that the channel bandwidth needs to be decreased from 10 Gbps to 5 Gbps, five rows need to be deleted. It is assumed that first five rows are reserved slots and last five rows are slots to be arranged.

A pointer A (the pointer A is the first pointer) and a point B (the pointer B is the second pointer) start searching at the same time. The pointer A is used to search for an idle sub-slot in the first five rows, and the pointer B is used to search for an occupied sub-slot in the last five rows.

When finding the idle sub-slot, the point A stops searching and waits for the pointer B to find the occupied sub-slot (the occupied sub-slot may also be referred to as a sub-slot to be migrated).

The pointer B finds the occupied sub-slot and immediately migrates a client corresponding to the sub-slot indicated by the pointer B to the sub-slot indicated by pointer A.

After migration is completed, the pointers A and B repeat steps (1) to (3), so that clients in a first row are migrated to clients in a second row from the beginning of the row to the end of the row, until clients corresponding to occupied sub-slots in the last five rows are migrated to sub-slots in the first five rows.

In a possible implementation, the first request message or the second request message may carry indication information indicating an adjustment policy for adjusting the correspondence between the Q1 clients and the sub-slot. For example, an adjustment policy (or referred to as a migration manner) to be used may be specified in a 2-bit reserved bit field (RES field) following the identifier field (flag field) on the block used to carry the overhead information. The following is examples.

If the reserved (RES) field is 00, it may indicate that the adjustment policy is the foregoing adjustment policy B3 (the adjustment policy B3 may be referred to as idle slot insertion and migration).

If the reserved (RES) field is 01, it may indicate that the adjustment policy is the increment algorithm in the adjustment policy B2.

If the reserved (RES) field is 10, it may indicate that the adjustment policy is the full algorithm in the adjustment policy B2.

If the reserved (RES) field is 11, it may indicate reserved.

Based on the foregoing content, in a possible implementation, the network management apparatus may deliver coarse granularity service bandwidth adjustment information based on a client service requirement. For example, when a bandwidth of a coarse granularity slot used to carry the fine granularity service needs to be increased, the network management apparatus delivers bandwidth increase adjustment information of the coarse granularity service. After the bandwidth of coarse granularity pipe used to carry the fine granularity service increases, a total bandwidth of a fine granularity pipe needs to be increased. After the total bandwidth of the fine granularity pipe is increased, the network management apparatus may deliver fine granularity service bandwidth adjustment information (bandwidth adjustment of the fine granularity pipe means an increase of a pipe bandwidth allocated to a single service) based on a requirement of the fine granularity service, for example, increasing a bandwidth of a fine granularity pipe corresponding to an existing fine granularity service, or adding another fine granularity service.

When a bandwidth of a coarse granularity pipe used to carry the fine granularity service needs to be decreased, the network management apparatus first delivers fine granularity service bandwidth adjustment information before delivering corresponding coarse granularity bandwidth adjustment information. After fine granularity service bandwidth adjustment is completed, and a slot corresponding to the total bandwidth of the fine granularity pipe is arranged into the to-be-reserved slot, the network management apparatus delivers bandwidth decrease information of the coarse granularity pipe.

That is, the network management apparatus only needs to separately deliver the coarse granularity bandwidth adjustment information and the fine granularity bandwidth adjustment information, and does not need to sense a change process of the total bandwidth of the fine granularity pipe.

In addition, in the solution provided in this embodiment of this application, the quantity of basic frames included in the multiframe, or the quantity of slots, may be adjusted. When the solution is applied to the fine granularity service, the bandwidth of the pipe used to carry the fine granularity service may be adjusted, a service pipe may be upgraded on demand, a client service may not be affected, and the coarse granularity pipe and the fine granularity pipe may be joint adjusted. When a quantity of coarse granularity pipes used to carry the fine granularity service increases, a plurality of coarse granularity pipes are integrated into one coarse granularity pipe, so that service bearing efficiency of the fine granularity pipe can be maximized, and a relatively large bandwidth waste is not caused. In addition, in the solution provided in this embodiment of this application, a service is unaware of a bandwidth adjustment process, and because the correspondence between the sub-slot and the client is adjusted, a service is not damaged. It can be learned that in this embodiment of this application, coarse and fine granularities can be simultaneously adjusted in a lossless manner. This is relatively simple and practical, and can support smooth upgrade of the service.

Terms "system" and "network" may be used interchangeably in embodiments of this application. "At least one" means one or more, and "a plurality of" means two or more. "And/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items" or a similar expression thereof refers to any combination of these items, including a singular item or any combination of plural items. For example, at least one of a, b, or c may indicate: a, b, c, a-b, a-c, b-c, or a-b-c, where a, b, and c may be singular or plural.

In addition, unless otherwise specified, ordinal numbers such as "first" and "second" mentioned in embodiments of this application are used to distinguish between a plurality of objects, but are not used to limit a sequence, a time sequence, priorities, or importance of the plurality of objects. For example, the first request message and the second request message are only used to distinguish between different request messages, but do not indicate that the two request messages have different priorities, importance, or the like.

It should be noted that, names of the foregoing messages are only examples. With evolution of communication technologies, the name of any foregoing message may change. However, regardless of how the names of the messages change, provided that meanings of the messages are the same as those of the messages in this application, the messages fall within the protection scope of this application.

The solutions provided by this application are described above mainly from a perspective of interaction between the network elements. It may be understood that, the network elements include corresponding hardware structures and/or software modules for performing the foregoing functions. A person skilled in the art should easily be aware that, in combination with the units and algorithms steps in the examples described in the embodiments disclosed in this specification, the present invention can be implemented by hardware or a combination of hardware and computer software. Whether a function is performed by hardware or hardware driven by computer software depends on particular applications and design constraints of the technical solution. A person skilled in the art may use different methods to implement the described functions for each particular application, but it should not be considered that the implementation goes beyond the scope of the present invention.

According to the foregoing method, FIG. 8 is a schematic diagram of a structure of a communication apparatus according to an embodiment of this application. As shown in FIG. 8, the communication apparatus may be a first communication device or a second communication device. The communication device may be a network device, or may be a chip or a circuit, for example, a chip or a circuit that can be disposed in the network device.

The communication apparatus 1301 includes a processor 1302 and a transceiver 1303.

Further, the communication apparatus 1301 may include a memory 1304. In the figure, the memory 1304 is denoted by a dashed line, which further indicates that the memory is optional.

Further, the communication apparatus 1301 may further include a bus system. The processor 1302, the memory 1304, and the transceiver 1303 may be connected through the bus system.

It should be understood that the processor 1302 may be one chip. For example, the processor 1302 may be a field programmable gate array (field programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processing circuit (digital signal processor, DSP), a micro controller unit (micro controller unit, MCU), a programmable logic device (programmable logic device, PLD), or another integrated chip.

In an implementation process, the steps in the foregoing methods can be implemented by using a hardware integrated logical circuit in the processor 1302, or by using instructions in a form of software. The steps of the method disclosed with reference to embodiments of this application may be directly performed by a hardware processor, or may be performed by using a combination of hardware in the processor 1302 and a software module. The software module may be located in a mature storage medium in the art, such as a random access memory, a flash memory, a read-only memory, a programmable read-only memory or electrically erasable programmable memory, or a register. The storage medium is located in the memory 1304, and the processor 1302 fetches information in the memory 1304, and completes the steps of the foregoing method in combination with its hardware.

It should be noted that the processor 1302 in this embodiment of this application may alternatively be an integrated circuit chip having a signal processing capability. In an implementation process, the steps in the foregoing method embodiments can be implemented by using a hardware integrated logic circuit in the processor, or by using instructions in a form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. The methods, steps, and logical block diagrams that are disclosed in embodiments of this application can be implemented or performed. The general-purpose processor may be a microprocessor, or any conventional processor. The steps in the methods disclosed with reference to embodiments of this application may be directly performed and completed by a hardware decoding processor, or may be performed and completed by a combination of hardware and a software module in the decoding processor. The software module may be located in a mature storage medium in the art such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory 1304 in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Based on description used as an example instead of a limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any other proper types of memories.

If the communication apparatus 1301 corresponds to the first communication device in the foregoing method, the transceiver 1303 may be configured to send a first request message. The first request message is used to request to adjust a quantity of basic frames in a multiframe included in a second block sequence. The processor 1302 may be configured to: demultiplex Q1 first block sequences based on S 1 slot resources corresponding to the adjusted multiframe in the second block sequence and a correspondence between a slot resource in the S 1 slot resources and Q1 first block sequences, to obtain the second block sequence, where Q1 is a positive integer; and send the second block sequence.

If the communication apparatus 1301 corresponds to the second communication device in the foregoing method, the transceiver 1303 may be configured to receive a first request message. The first request message is used to request to adjust a quantity of basic frames in a multiframe included in a second block sequence. The processor 1302 may be configured to: obtain the second block sequence; and demultiplex the second block sequence based on S 1 slot resources corresponding to the adjusted multiframe in the second block sequence and a correspondence between a slot resource in the S1 slot resources and Q1 first block sequences, to obtain the Q1 first block sequences. Both S1 and Q1 are positive integers.

For a concept, an explanation, a detailed description, and other steps with respect to the communication apparatus that are related to the technical solutions provided in embodiments of this application, refer to descriptions of the content in the foregoing methods or another embodiment. Details are not described herein.

According to the foregoing method, FIG. 9 is a schematic diagram of a structure of a communication apparatus according to an embodiment of this application. As shown in FIG. 9, the communication apparatus 1401 may include a communication interface 1403 and a processor 1402. Further, the communication apparatus 1401 may include a memory 1404. In the figure, the memory 1404 is denoted by a dashed line, which further indicates that the memory is optional. The communication interface 1403 is configured to input and/or output information. When the processor 1402 runs, the communication apparatus 1401 may be enabled to perform the method performed by the first communication device in the related solutions in FIG. 1a to FIG. 7, or the communication apparatus 1401 may be enabled to perform the method performed by the second communication device in the related solutions in FIG. 1a to FIG. 7. In this embodiment of this application, the communication interface 1403 may implement the solution implemented by the transceiver 1303 in FIG. 8, the processor 1402 may implement the solution implemented by the processor 1302 in FIG. 8, and the memory 1404 may implement the solution implemented by the memory 1304 in FIG. 8. Details are not described herein again.

Based on the foregoing embodiment and a same concept, FIG. 10 is a schematic diagram of a communication apparatus according to an embodiment of this application. As shown in FIG. 10, the communication apparatus 1501 may be a first communication device or a second communication device, or may be a chip or a circuit, for example, may be a chip or a circuit that may be disposed in the first communication device or the second communication device. The communication apparatus 1501 includes a processing unit 1502 and a communication unit 1503. Further, the communication apparatus 1501 may include a storage unit 1504, or may not include a storage unit 1504. In the figure, the storage unit 1504 is denoted by a dashed line, which further indicates that the storage unit is optional.

The communication apparatus may correspond to the first communication device in the foregoing method. A first request message is sent by using the communication unit 1503. The first request message is used to request to adjust a quantity of basic frames in a multiframe included in a second block sequence. The processing unit 1502 is configured to: demultiplex Q1 first block sequences based on S1 slot resources corresponding to the adjusted multiframe in the second block sequence and a correspondence between a slot resource in the S1 slot resources and Q1 first block sequences, to obtain the second block sequence, where Q1 is a positive integer; and send the second block sequence by using the communication unit 1503.

The communication apparatus may correspond to the second communication device in the foregoing method. A first request message is received by using the communication unit 1503. The first request message is used to request to adjust a quantity of basic frames in a multiframe included in a second block sequence. The processing unit 1502 is configured to: obtain the second block sequence; and demultiplex the second block sequence based on S1 slot resources corresponding to the adjusted multiframe in the second block sequence and a correspondence between a slot resource in the S1 slot resources and Q1 first block sequences, to obtain the Q1 first block sequences. Both S1 and Q1 are positive integers.

The processing unit 1502 may be a processor or a controller, such as a general-purpose central processing unit (central processing unit, CPU), a general-purpose processor, a digital signal processor (digital signal processor, DSP), an application specific integrated circuit (application specific integrated circuits, ASIC), a field programmable gate array (field programmable gate array, FPGA), or another programmable logic device, a transistor logic device, a hardware component, or any combination thereof. The processing unit 1502 may implement or execute logical blocks, modules, and circuits in various examples described with reference to content disclosed in this application. Alternatively, the processor may be a combination of processors implementing a computing function, for example, a combination of one or more microprocessors, or a combination of the DSP and a microprocessor. The storage unit 1504 may be a memory. The communication unit 1503 is an interface circuit of the apparatus, and is configured to receive a signal from another apparatus. For example, when the apparatus is implemented in a form of a chip, the communication unit 1503 is an interface circuit that is of the chip and that is configured to receive a signal from another chip or apparatus, or the communication unit 1503 is an interface circuit that is of the chip and that is configured to send a signal to another chip or apparatus.

The communication apparatus 1501 may be the first communication device or the second communication device in any one of the foregoing embodiments. For example, when the communication apparatus 1501 is the first communication device or the second communication device, the processing unit 1502 may be, for example, a processor, and the communication unit 1503 may be, for example, a transceiver. Optionally, the transceiver may include a radio frequency circuit, and the storage unit may be, for example, a memory. For example, when the communication apparatus 1501 is a chip for a cell search, the processing unit 1502 may be, for example, a processor, and the communication unit 1503 may be, for example, an input/output interface, a pin, or a circuit. The processing unit 1502 may execute computer-executable instructions stored in the storage unit. Optionally, the storage unit is a storage unit in the chip, for example, a register or a cache. Alternatively, the storage unit may be a storage unit that is in a session management network element and that is located outside the chip, for example, a read-only memory (read-only memory, ROM) or another type of static storage device capable of storing static information and instructions, or a random access memory (random access memory, RAM).

For a concept, an explanation, a detailed description, and other steps with respect to the communication apparatus that are related to the technical solutions provided in embodiments of this application, refer to descriptions of the content in the foregoing methods or another embodiment. Details are not described herein.

It may be understood that, for a function of each unit in the foregoing communication apparatus 1501, refer to implementation of a corresponding method embodiment. Details are not described herein.

It should be understood that division of units in the communication apparatus is only logical function division. During actual implementation, all or some of the units may be integrated into one physical entity or may be physically separated. In this embodiment of this application, the communication unit 1503 can be implemented by the transceiver 1303 in FIG. 8, and the processing unit 1502 can be implemented by the processor 1302 in FIG. 8.

According to the methods provided in embodiments of this application, this application further provides a computer program product. The computer program product includes computer program code or instructions. When the computer program code or the instructions is/are run on a computer, the computer is enabled to perform the method according to any one of the embodiments shown in FIG. 1a to FIG. 7.

According to the method provided in embodiments of this application, this application further provides a computer-readable storage medium. The computer-readable storage medium stores program code. When the program code is run on a computer, the computer is enabled to perform the method in any one of the embodiments shown in FIG. 1a to FIG. 7.

According to the method provided in embodiments of this application, this application further provides a chip system. The chip system may include a processor. The processor is coupled to a memory, and may be configured to perform the method in any one of the embodiments shown in FIG. 1a to FIG. 7. Optionally, the chip system further includes a memory. The memory is configured to store a computer program (which may also be referred to as code or instructions). The processor is configured to invoke the computer program from the memory and run the computer program, so that a device provided with the chip system performs the method in any one of the embodiments shown in FIG. 1a to FIG. 7.

According to the method provided in embodiments of this application, this application further provides a system, including the foregoing one or more first communication devices and one or more second communication devices.

All or some of the foregoing embodiments can be implemented by software, hardware, firmware, or any combination thereof. When software is used to implement the embodiments, all or some of the embodiments can be implemented in a form of a computer program product. The computer program product includes one or more computer instructions. When the computer instructions are loaded and executed on a computer, some or all of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, a coaxial cable, an optical fiber, or a digital subscriber line (digital subscriber line, DSL)) or a wireless manner (for example, infrared, radio, and microwave). The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (Digital Video Disc, DVD)), a semiconductor medium (for example, a solid state disk (Solid State Disk, SSD)), or the like.

It should be noted that a part of this patent application document includes copyright-protected content. The copyright owner reserves the copyright except copies are made for the patent documents or the recorded content of the patent documents in the Patent Office.

The second communication device and the first communication device in the foregoing apparatus embodiments completely correspond to the second communication device or the first communication device in the method embodiments. A corresponding module or unit performs a corresponding step. For example, the communication unit (the transceiver) performs a receiving or sending step in the method embodiments, and a step other than the sending step and the receiving step may be performed by the processing unit (the processor). For a function of a specific unit, refer to a corresponding method embodiment. There may be one or more processors.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical block) described in embodiments disclosed in this specification and steps (step) can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method can be performed in other manners. For example, the described apparatus embodiment is only an example. For example, division into the units is only logical function division and may be other division in actual implementation. For example, a plurality of units or components may be combined or integrated into another system, or some features may be ignored or not performed. In addition, the displayed or discussed mutual couplings or direct couplings or communication connections can be implemented through some interfaces. The indirect couplings or communication connections between the apparatuses or units can be implemented in electrical, mechanical, or another form.

The units described as separate parts may or may not be physically separate, and parts displayed as units may or may not be physical units, in other words, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions can be implemented in a form of a software product. The computer software product is stored in a storage medium, and includes several instructions for instructing a computer device (which may be a personal computer, a server, or a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are only specific implementations of this application, but are not intended to limit the protection scope of this application. Any variation or replacement readily figured out by a person skilled in the art within the technical scope disclosed in this application shall fall within the protection scope of this application. Therefore, the protection scope of this application should be subject to the protection scope of the claims.

## Claims

1. A communication device, comprising a communication interface and a processor, wherein
the communication interface is configured to send a first request message, wherein the first request message is used to request to adjust a quantity of basic frames in a multiframe comprised in a second block sequence; and
the processor is configured to: multiplex, based on S1 slot resources corresponding to the adjusted multiframe in the second block sequence, Q1 first block sequences corresponding to a slot resource in the S1 slot resources, to obtain the second block sequence, wherein Q1 is a positive integer; and send the second block sequence via the communication interface, wherein both S1 and Q1 are positive integers.

2. The communication device according to claim 1, wherein the S1 slot resources are S1 sub-slots, and one of the S1 sub-slots is one of at least two sub-slots obtained by dividing one slot; and
the processor is further configured to:
multiplex the second block sequence and a third block sequence based on a slot corresponding to the S1 sub-slots in the adjusted multiframe and a slot corresponding to the third block sequence, to obtain a fourth block sequence; and
send the fourth block sequence via the communication interface.

3. The communication device according to claim 1 or 2, wherein the Q1 first block sequences are in a one-to-one correspondence with Q1 clients, and the communication interface is further configured to:
send a second request message, wherein the second request message indicates to adjust a correspondence between the Q1 clients and the slot resource.

4. The communication device according to claim 3, wherein the second request message further comprises:
indication information indicating an adjustment policy for adjusting the correspondence between the Q1 clients and the slot resource, wherein
the adjustment policy comprises:
establishing a correspondence between a client in the Q1 clients and the slot resource in the S1 slot resources according to a first preset rule, wherein one client corresponds to at least one slot resource, and one slot resource corresponds to one or zero clients; or
if the first request message is used to request to decrease the quantity of basic frames in the multiframe comprised in the second block sequence, establishing, according to a second preset rule, a correspondence between a client corresponding to an occupied slot resource in a to-be-deleted slot resource and an idle slot resource in a to-be-reserved slot resource, wherein
a slot resource in the to-be-deleted slot resource meets a condition: the slot resource is a slot resource corresponding to the unadjusted multiframe, and is not a slot resource corresponding to the adjusted multiframe; and
a slot resource in the to-be-reserved slot resource meets a condition: the slot resource is the slot resource corresponding to the unadjusted multiframe, and is the slot resource corresponding to the adjusted multiframe.

5. The communication device according to claim 1 or 2, wherein the communication interface is specifically configured to:
send R1 first request sub-messages, wherein one of the R1 first request sub-messages indicates a correspondence between the slot resource in the S 1 slot resources corresponding to the adjusted multiframe and a client in Q1 clients; the Q1 first block sequences are in a one-to-one correspondence with the Q1 clients, and R1 is a positive integer; and the R1 first request sub-messages further indicate to adjust, based on a quantity of S1 slot resources indicated by the R1 first request sub-messages, the quantity of basic frames in the multiframe comprised in the second block sequence.

6. The communication device according to claim 5, wherein one of the R1 first request sub-messages further comprises:
indication information indicating whether the first request sub-message is last one of the R1 first request sub-messages.

7. The communication device according to any one of claims 1 to 6, wherein the first request message is carried in a block that is used to carry overhead information and that is in the multiframe in the second block sequence.

8. The communication device according to any one of claims 1 to 7, wherein the communication interface is further configured to:
receive a first response message, wherein the first response message indicates content allowed to be requested by the first request message; and
send a first acknowledgment message, wherein the first acknowledgment message indicates to enable the content requested by the first request message starting from a first preset block.

9. A communication device, comprising a processor and a communication interface, wherein
the communication interface is configured to receive a first request message, wherein the first request message is used to request to adjust a quantity of basic frames in a multiframe comprised in a second block sequence; and
the processor is configured to obtain the second block sequence; and demultiplex the second block sequence based on S1 slot resources corresponding to the adjusted multiframe in the second block sequence and a correspondence between a slot resource in the S1 slot resources and Q1 first block sequences, to obtain the Q1 first block sequences, wherein both S1 and Q1 are positive integers, and both S1 and Q1 are positive integers.

10. The communication device according to claim 9, wherein the S1 slot resources are S1 sub-slots, and one of the S1 sub-slots is one of at least two sub-slots obtained by dividing one slot; and
the communication interface is further configured to:
receive a fourth block sequence; and
the processor is specifically configured to:
demultiplex the fourth block sequence based on a slot corresponding to the S1 sub-slots in the adjusted multiframe in the second block sequence and a slot corresponding to a third block sequence, to obtain the second block sequence and the third block sequence.

11. The communication device according to claim 9 or 10, wherein the Q1 first block sequences are in a one-to-one correspondence with Q1 clients, and the communication interface is further configured to:
receive a second request message, wherein the second request message indicates to adjust a correspondence between the Q1 clients and the slot resource.

12. The communication device according to claim 11, wherein the second request message further comprises:
indication information indicating an adjustment policy for adjusting the correspondence between the Q1 clients and the slot resource, wherein
the adjustment policy comprises:
establishing a correspondence between a client in the Q1 clients and the slot resource in the S1 slot resources according to a first preset rule, wherein one client corresponds to at least one slot resource, and one slot resource corresponds to one or zero clients; or
if the first request message is used to request to decrease the quantity of basic frames in the multiframe comprised in the second block sequence, establishing, according to a second preset rule, a correspondence between a client corresponding to an occupied slot resource in a to-be-deleted slot resource and an idle slot resource in a to-be-reserved slot resource, wherein
a slot resource in the to-be-deleted slot resource meets a condition: the slot resource is a slot resource corresponding to the unadjusted multiframe, and is not a slot resource corresponding to the adjusted multiframe; and
a slot resource in the to-be-reserved slot resource meets a condition: the slot resource is the slot resource corresponding to the unadjusted multiframe, and is the slot resource corresponding to the adjusted multiframe.

13. The communication device according to claim 9 or 10, wherein the communication interface is specifically configured to:
receive R1 first request sub-messages, wherein one of the R1 first request sub-messages indicates a correspondence between the slot resource in the S1 slot resources corresponding to the adjusted multiframe and a client in Q1 clients; the Q1 first block sequences are in a one-to-one correspondence with the Q1 clients, and R1 is a positive integer; and the R1 first request sub-messages further indicate to adjust, based on a quantity of S1 slot resources indicated by the R1 first request sub-messages, the quantity of basic frames in the multiframe comprised in the second block sequence.

14. The communication device according to claim 13, wherein one of the R1 first request sub-messages further comprises:
indication information indicating whether the first request sub-message is last one of the R1 first request sub-messages.

15. The communication device according to any one of claims 9 to 14, wherein the first request message is carried in a block that is used to carry overhead information and that is in the multiframe in the second block sequence.

16. The communication device according to any one of claims 9 to 15, wherein the communication interface is further configured to:
send a first response message, wherein the first response message indicates content allowed to be requested by the first request message; and
receive a first acknowledgment message, wherein the first acknowledgment message indicates to enable the content requested by the first request message starting from a first preset block.

17. A communication method, comprising:
sending a first request message, wherein the first request message is used to request to adjust a quantity of basic frames in a multiframe comprised in a second block sequence;
multiplexing, based on S 1 slot resources corresponding to the adjusted multiframe in the second block sequence, Q1 first block sequences corresponding to a slot resource in the S1 slot resources, to obtain the second block sequence, wherein Q1 is a positive integer; and
sending the second block sequence.

18. The method according to claim 17, wherein the S 1 slot resources are S 1 sub-slots, and one of the S 1 sub-slots is one of at least two sub-slots obtained by dividing one slot; and
the sending the second block sequence comprises:
multiplexing the second block sequence and a third block sequence based on a slot corresponding to the S 1 sub-slots in the adjusted multiframe and a slot corresponding to the third block sequence, to obtain a fourth block sequence; and
sending the fourth block sequence.

19. The method according to claim 17 or 18, wherein the Q1 first block sequences are in a one-to-one correspondence with Q1 clients, and before multiplexing Q1 first block sequences based on the S 1 slot resources corresponding to the adjusted multiframe in the second block sequence and a correspondence between the slot resource in the S 1 slot resources and the Q1 first block sequences, to obtain the second block sequence, the method further comprises:
sending a second request message, wherein the second request message indicates to adjust a correspondence between the Q1 clients and the slot resource.

20. The method according to claim 19, wherein the second request message further comprises:
indication information indicating an adjustment policy for adjusting the correspondence between the Q1 clients and the slot resource, wherein
the adjustment policy comprises:
establishing a correspondence between a client in the Q1 clients and the slot resource in the S 1 slot resources according to a first preset rule, wherein one client corresponds to at least one slot resource, and one slot resource corresponds to one or zero clients; or
if the first request message is used to request to decrease the quantity of basic frames in the multiframe comprised in the second block sequence, establishing, according to a second preset rule, a correspondence between a client corresponding to an occupied slot resource in a to-be-deleted slot resource and an idle slot resource in a to-be-reserved slot resource, wherein
a slot resource in the to-be-deleted slot resource meets a condition: the slot resource is a slot resource corresponding to the unadjusted multiframe, and is not a slot resource corresponding to the adjusted multiframe; and
a slot resource in the to-be-reserved slot resource meets a condition: the slot resource is the slot resource corresponding to the unadjusted multiframe, and is the slot resource corresponding to the adjusted multiframe.

21. The method according to claim 17 or 18, wherein if the first request message further indicates to update the correspondence between the client and the slot resource,
the sending a first request message comprises:
sending R1 first request sub-messages, wherein one of the R1 first request sub-messages indicates a correspondence between the slot resource in the S1 slot resources corresponding to the adjusted multiframe and a client in Q1 clients; the Q1 first block sequences are in a one-to-one correspondence with the Q1 clients, and R1 is a positive integer; and the R1 first request sub-messages further indicate to adjust the quantity of basic frames in the multiframe comprised in the second block sequence.

22. The method according to any one of claims 17 to 21, wherein after the sending a first request message, the method further comprises:
receiving a first response message, wherein the first response message indicates content allowed to be requested by the first request message; and
sending a first acknowledgment message, wherein the first acknowledgment message indicates to enable the content requested by the first request message starting from a first preset block.

23. A communication method, comprising:
receiving a first request message, wherein the first request message is used to request to adjust a quantity of basic frames in a multiframe comprised in a second block sequence;
obtaining the second block sequence; and
demultiplexing the second block sequence based on S1 slot resources corresponding to the adjusted multiframe in the second block sequence and a correspondence between a slot resource in the S1 slot resources and Q1 first block sequences, to obtain the Q1 first block sequences, wherein both S1 and Q1 are positive integers.

24. The method according to claim 23, wherein the S1 slot resources are S1 sub-slots, and one of the S1 sub-slots is one of at least two sub-slots obtained by dividing one slot; and
the obtaining the second block sequence comprises:
receiving a fourth block sequence; and
demultiplexing the fourth block sequence based on a slot corresponding to the S1 sub-slots in the adjusted multiframe in the second block sequence and a slot corresponding to a third block sequence, to obtain the second block sequence and the third block sequence.

25. The method according to claim 23 or 24, wherein the Q1 first block sequences are in a one-to-one correspondence with Q1 clients, and before the demultiplexing the fourth block sequence based on a slot corresponding to the slot resource in the adjusted multiframe in the second block sequence and a slot corresponding to a third block sequence, to obtain the second block sequence and the third block sequence, the method further comprises:
receiving a second request message, wherein the second request message indicates to adjust a correspondence between the Q1 clients and the slot resource.

26. The method according to claim 25, wherein the second request message further comprises:
indication information indicating an adjustment policy for adjusting the correspondence between the Q1 clients and the slot resource, wherein
the adjustment policy comprises:
establishing a correspondence between a client in the Q1 clients and the slot resource in the S1 slot resources according to a first preset rule, wherein one client corresponds to at least one slot resource, and one slot resource corresponds to one or zero clients; or
if the first request message is used to request to decrease the quantity of basic frames in the multiframe comprised in the second block sequence, establishing, according to a second preset rule, a correspondence between a client corresponding to an occupied slot resource in a to-be-deleted slot resource and an idle slot resource in a to-be-reserved slot resource, wherein
a slot resource in the to-be-deleted slot resource meets a condition: the slot resource is a slot resource corresponding to the unadjusted multiframe, and is not a slot resource corresponding to the adjusted multiframe; and
a slot resource in the to-be-reserved slot resource meets a condition: the slot resource is the slot resource corresponding to the unadjusted multiframe, and is the slot resource corresponding to the adjusted multiframe.

27. The method according to claim 23 or 24, wherein if the first request message further indicates to update the correspondence between the client and the slot resource,
the receiving a first request message comprises:
receiving R1 first request sub-messages, wherein one of the R1 first request sub-messages indicates a correspondence between the slot resource in the S 1 slot resources corresponding to the adjusted multiframe and a client in Q1 clients; the Q1 first block sequences are in a one-to-one correspondence with the Q1 clients, and R1 is a positive integer; and the R1 first request sub-messages further indicate to adjust, based on a quantity of S1 slot resources indicated by the R1 first request sub-messages, the quantity of basic frames in the multiframe comprised in the second block sequence.

28. The method according to any one of claims 23 to 27, wherein after the receiving a first request message, the method further comprises:
sending a first response message, wherein the first response message indicates content allowed to be requested by the first request message; and
receiving a first acknowledgment message, wherein the first acknowledgment message indicates to enable the content requested by the first request message starting from a first preset block.

29. A chip system, comprising a communication interface and a processor, wherein the communication interface is configured to input and/or output information; and when the processor runs, the method according to any one of claims 17 to 28 is performed.
